(19) **Europäisches Patentamt / European Patent Office / Office européen des brevets**

(11) **EP 3 970 074 B1**

(12) **EUROPEAN PATENT SPECIFICATION**

(45) Date of publication and mention
of the grant of the patent:
**04.03.2026 Bulletin 2026/10**

(21) Application number: **20724881.6**

(22) Date of filing: **15.05.2020**

(51) International Patent Classification (IPC):
**G06N 3/098** (2023.01)   **G06N 3/084** (2023.01)
**G06N 3/045** (2023.01)

(52) Cooperative Patent Classification (CPC):
**G06N 3/084; G06N 3/045; G06N 3/0464;
G06N 3/082; G06N 3/09; G06N 3/098;** G06N 3/047

(86) International application number:
**PCT/EP2020/063706**

(87) International publication number:
**WO 2020/229684 (19.11.2020 Gazette 2020/47)**

(54) **CONCEPTS FOR FEDERATED LEARNING, CLIENT CLASSIFICATION AND TRAINING DATA SIMILARITY MEASUREMENT**

KONZEPTE FÜR FÖDERIERTES LERNEN, CLIENT-KLASSIFIZIERUNG UND TRAININGSDATENÄHNLICHKEITSMESSUNG

CONCEPTS D'APPRENTISSAGE FÉDÉRÉ, DE CLASSIFICATION DE CLIENT ET DE MESURE DE SIMILARITÉ DE DONNÉES D'APPRENTISSAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2019 EP 19174934**
**04.10.2019 EP 19201528**

(43) Date of publication of application:
**23.03.2022 Bulletin 2022/12**

(73) Proprietor: **Fraunhofer-Gesellschaft zur Förderung
der angewandten Forschung e.V.
80686 München (DE)**

(72) Inventors:
• **SAMEK, Wojciech
10587 Berlin (DE)**
• **SATTLER, Felix
10587 Berlin (DE)**
• **WIEGAND, Thomas
10587 Berlin (DE)**
• **MÜLLER, Klaus-Robert
12165 Berlin (DE)**

(74) Representative: **Schenk, Markus et al
Schoppe, Zimmermann, Stöckeler
Zinkler, Schenk & Partner mbB
Patentanwälte
Radlkoferstrasse 2
81373 München (DE)**

(56) References cited:
• CLEMENT FUNG ET AL.: "Mitigating Sybils in Federated Learning Poisoning", ARXIV.ORG:1808.04866, 24 February 2019 (2019-02-24), XP081022303
• FELIX SATTLER ET AL: "Robust and Communication-Efficient Federated Learning from Non-IID Data", ARXIV.ORG, CORNELL UNIVERSITY LIBRARY, 201 OLIN LIBRARY CORNELL UNIVERSITY ITHACA, NY 14853, 7 March 2019 (2019-03-07), XP081130568
• HUBERT EICHNER ET AL: "Semi-Cyclic Stochastic Gradient Descent", ARXIV.ORG, CORNELL UNIVERSITY LIBRARY, 201 OLIN LIBRARY CORNELL UNIVERSITY ITHACA, NY 14853, 23 April 2019 (2019-04-23), XP081172442

EP 3 970 074 B1

- **LI HUANG ET AL: "Patient Clustering Improves Efficiency of Federated Machine Learning to predict mortality and hospital stay time using distributed Electronic Medical Records", ARXIV.ORG, CORNELL UNIVERSITY LIBRARY, 201 OLIN LIBRARY CORNELL UNIVERSITY ITHACA, NY 14853, 22 March 2019 (2019-03-22), XP081156568**
- **VIRGINIA SMITH ET AL: "Federated Multi-Task Learning", ARXIV.ORG, CORNELL UNIVERSITY LIBRARY, 201 OLIN LIBRARY CORNELL UNIVERSITY ITHACA, NY 14853, 30 May 2017 (2017-05-30), XP081317788**
- **DIANBO LIU ET AL: "FADL:Federated-Autonomous Deep Learning for Distributed Electronic Health Record", ARXIV.ORG, CORNELL UNIVERSITY LIBRARY, 201 OLIN LIBRARY CORNELL UNIVERSITY ITHACA, NY 14853, 28 November 2018 (2018-11-28), XP081434178**

**Description**

The present application is concerned with federated learning of neural networks and tasks such as client classification and training data similarity measurement.

Three major developments are currently transforming the ways how data is created and processed: First of all, with the advent of the Internet of Things (IoT), the number of intelligent devices in the world has rapidly grown in the last couple of years. Many of these devices are equipped with various sensors and increasingly potent hardware that allow them to collect and process data at unprecedented scales [13][15][14].

In a concurrent development deep learning has revolutionized the ways that information can be extracted from data resources with groundbreaking successes in areas such as computer vision, natural language processing or voice recognition among many others [9][6][4][7][12][11]. Deep learning scales well with growing amounts of data and it's astounding successes in recent times can be at least partly attributed to the availability of very large datasets for training. Therefore, there lays huge potential in harnessing the rich data provided by IoT devices for the training and improving of deep learning models [10]. At the same time data privacy has become a growing concern for many users. Multiple cases of data leakage and misuse in recent times have demonstrated that the centralized processing of data comes at a high risk for the end user's privacy. As IoT devices usually collect data in private environments, often even without explicit awareness of the users, these concerns hold particularly strong. It is therefore generally not an option to share this data with a centralized entity that could conduct training of a deep learning model. In other situations, local processing of the data might be desirable for other reasons such as increased autonomy of the local agent.

This leaves us facing the following dilemma: How are we going to make use of the rich combined data of millions of IoT devices for training deep learning models if this data cannot be stored at a centralized location?

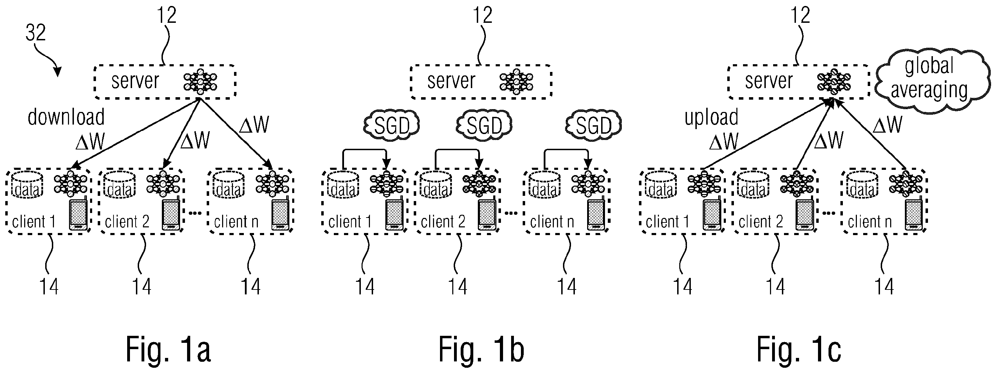

Federated Learning resolves this issue as it allows multiple parties to jointly train a deep learning model on their combined data, without any of the participants having to reveal their data to a centralized server [10]. This form of privacy-preserving collaborative learning is achieved by following a simple three step protocol illustrated in Fig. 1. In the first step 32 shown left, all participating clients 14 *download* the latest master model W from the server 12. Next, in the second step 34 shown in the middle, the clients 14 improve the downloaded model, based on their local training data using stochastic gradient descent (SGD). Finally, in step 36 shown at the right hand side, all participating clients *upload* their locally improved models $\mathcal{W}_i$ back to the server 12, where they are gathered and aggregated to form a new master model (in practice, weight updates $\Delta\mathcal{W} = \mathcal{W}^{new} - \mathcal{W}^{old}$ can be communicated instead of full models $\mathcal{W}$, which is equivalent as long as all clients 14 remain synchronized). These steps are repeated until a certain convergence criterion is satisfied. Observe, that when following this protocol, training data never leaves the local devices 14 as only model updates are communicated. Although it has been shown that in adversarial settings information about the training data can still be inferred from these updates [2], additional mechanisms such as homomorphic encryption of the updates [3][5] or differentially private training [1] can be applied to fully conceal any information about the local data.

The problem of performance degradation when training a single model on heterogeneous data from different groups of clients (e.g., "day" and "night" users) is addressed in [16] by employing a pluralistic approach where separate, specialized models are learned for each client group. However, the approach in [16] requires pre-existing knowledge or external metadata about the clients (e.g., the time of day a client is active). Furthermore, [17] discloses using cosine similarity between client updates to identify clients that share a "common objective". This, however, is done for a defensive purpose: to penalize or ignore updates from clients that are deemed suspiciously similar (i.e., potential malicious 'sybil' attackers) in order to protect the integrity of a single global model, rather than to form separate groups for specialized training.

Thus, it would be favorable to have a concept at hand which renders Federated Learning more efficient and/or robust. For instance, any efficiency increase would result in a lower number of cycles necessary in order to reach the convergence. Moreover, it would be favorable to have a concept at hand which improves the inference results for the clients using the learned model even further. And even further, it would be favorable to have a concept at hand which renders Federated Learning more robust against malfunctioning or even deteriorating clients which upload wrong updates.

Accordingly, it is the object of the present invention to provide a concept for Federated Learning which is more efficient and/or robust. Alternatively and additionally, it is an object of the present invention to provide a concept for specifying clients and/or measuring training data similarities in a manner more suitable for being applied in Federated Learning environments.

This object is achieved by the subject matter of the independent claims of the present application.

In accordance with a first aspect of the present application, Federated Learning is rendered more efficient and/or robust while, once having received from a plurality of clients parameterization updates which relate to a predetermined parameterization of the neural network, the Federated Learning of the neural network is performed depending on similarities between the parameterization updates. So far, all clients participating in federated learning and their parameterization updates are treated as belonging to a common reservoir of training pool data with the variances thereamong rather being a statistical issue which has to be coped with. Beyond this, there is a general wish in Federated Learning to upload the parameterization updates in a manner consuming minimum bandwidths and/or to leak minimum hints on personal information. In accordance with the first aspect of the present application, the acceptance of Federated Learning difficulties is overcome based on the insight that parameterization updates suffice to deduce similarities between local training data resources. Based on the similarities, clients are clustered into client groups, with the Federated Learning then being performed client-group-separately. The parameterization updates received from the plurality of clients are subject to a clustering so as to associate each of the clients to one of a plurality of client groups and from there onward, the Federated Learning is performed client-group-separately. That is, each client is associated with a certain client group, and for each of these client groups, a client-group specific parameterization is learned using Federated Learning, i.e. a parametrization which is specific for training data to which the training data typically available at the clients of respective client group is similar. By this matter, each client obtains a parameterization of the neural network which yields better inference results for the respective client, i.e. is better adapted to the respective client and its local statistics of training data.

Additionally, similarities between the parameterization updates may be additionally used in order to perform the Federated Learning in a manner more robust against outliers by taking into account the similarities in merging the parameterization updates: the merging of the parameterization updates may be done in a manner weighted depending on the similarities between the parameterization updates. Thereby, outliers, i.e. seldom occurring parameterization updates stemming, for instance, from corrupting or defect clients, may less negatively or not at all deteriorate the parameterization result.

Naturally, it would be feasible to restrict the above-mentioned parameterization update similarity dependency towards a sub-portion of the neural network. For instance, the neural network may be composed of layers relating to certain extractors such as convolutional layers, as well as fully connected layers following, for instance, the convolutional layers in inference direction. In such an environment, the parameterization updates similarity dependency may be restricted to the latter portion, i.e. to one or more neural network layers following the convolutional layers.

It is a further insight of the inventors of the present application that parameterization updates lend themselves for classifying clients and/or measure training data similarities. In particular, the inventors of the present application found out that any of the just-mentioned tasks may be performed on the basis of parameterization updates stemming from the clients and/or training data by use of a cosine-similarity and/or a dot product. Using the cosine-similarity and/or the dot product enables to classify clients on the basis of parameterization updates or measure similarities between training data on parameterization updates obtained based thereon, despite the parameterization updates being transmitted, for instance, as a difference to the current parameterization and/or the parameterization update being encrypted using a homomorphic encryption such as using the addition of a random vector to the actual parameterization update and/or rotating the actual parameterization update using a secret angle known to the client, but kept secret against the server.

The combination of both aspects ends-up in a Federated Learning concept which is efficient and/or robust with additionally being suitable for application where privacy is a major concern.

Advantageous embodiments of the present application are the subject of dependent claims and preferred embodiments of the present application are described below with respect to the figures among which:

Fig. 1a-c     show block diagrams of a data flow associated with individual steps of a federated learning procedure;

Fig. 2     shows a schematic diagram illustrating a system or arrangement for federated learning of a neural network composed of clients and a server, wherein the system may be embodied in accordance with embodiments described herein, and wherein each of the clients individually and the server individually may be embodied in the manner outlined in accordance with subsequent embodiments;

Fig. 3     shows a schematic diagram illustrating an example for a neural network and its parameterization;

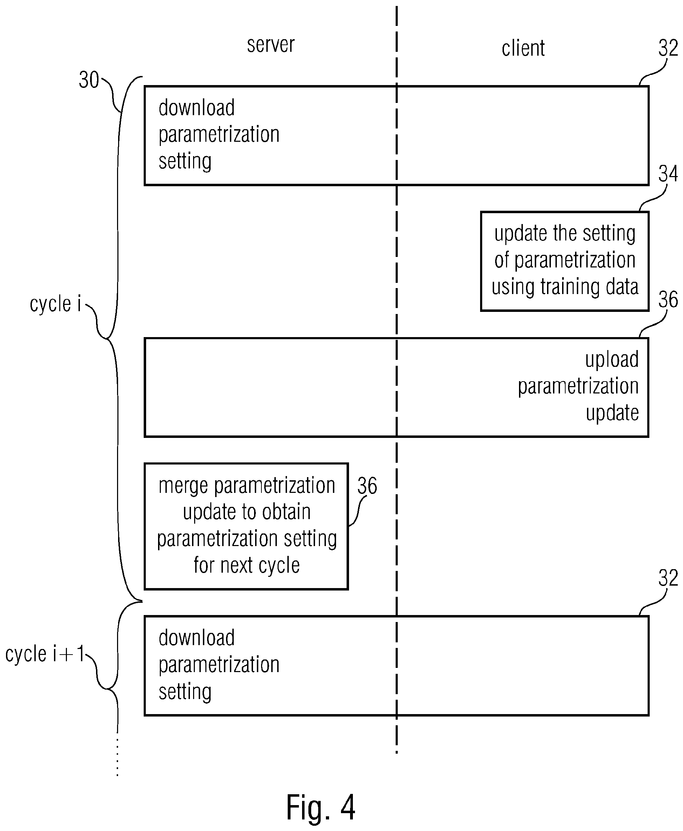

Fig. 4     shows a schematic flow diagram illustrating a distributed learning procedure with steps indicated by boxes which are sequentially arranged from top to bottom and arranged at the right hand side if the corresponding step is performed at client domain, arranged at the left hand side if the corresponding step is up to the server domain whereas boxes shown as extending across both sides indicate that the corresponding step or task involves respective processing at server side and client side, wherein the process depicted in Fig. 4 may be embodied in a manner so as to conform to embodiments of the present application as described herein;

Fig. 5     shows graph which illustrate a toy example: At (1) there are three bi-modal distributions $p_1(x,y)$,

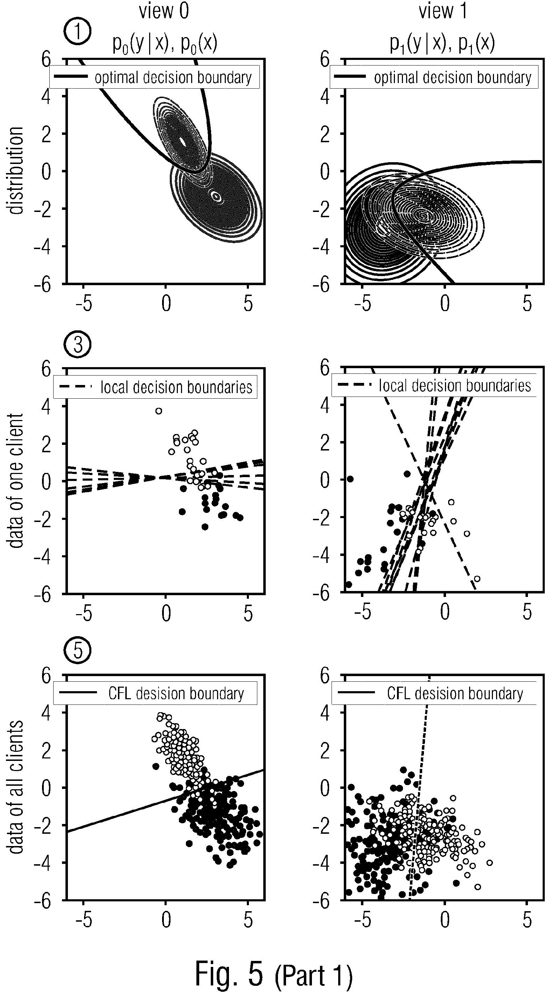

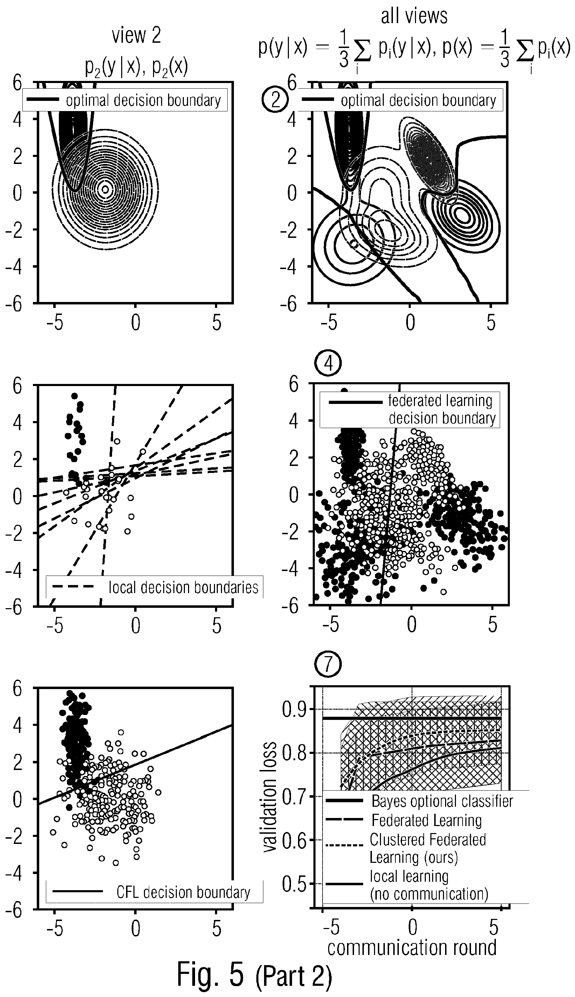

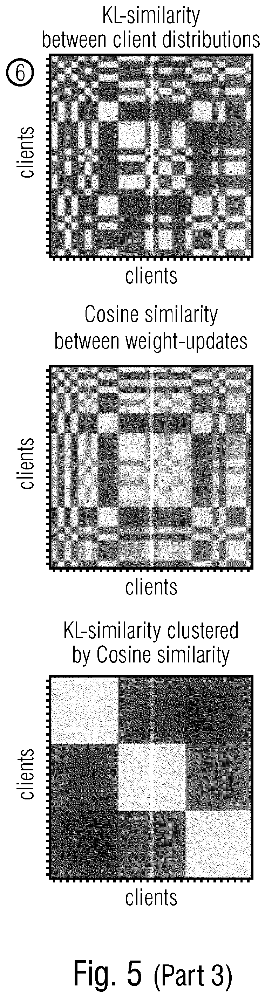

$p_2(x,y)$, $p_3(x,y)$ shown with their respective optimal decision boundaries. At (2), there is the combined distribution defined in 1 displayed with its respective optimal decision boundary. At (3), the local solution is shown: From each of the three distribution 10 clients sample data and train a logistic regression classifier (only on their local data). The 30 different resulting decision boundaries are displayed together with one client's local data set for every distribution. At (4), the Federated Learning solution is shown: All 30 clients together train one single logistic regression classifier on their combined data. The resulting decision boundary is displayed together with the data of all clients. At (5), the Clustered Federated Learning Solution is shown: All clients with data from the same distribution jointly train one logistic regression classifier on their joint data. This results in three different classifiers, one for each distribution. At (6), Fig 5 shows at the right hand side the similarities between the distributions/clients for different similarity measures and, at the bottom, the clustering using the Cosine similarity, At (7), Fig. 5 shows by a graph that the CFL classifiers achieve vastly better generalization performance than both the purely local and the Federated Learning solution.

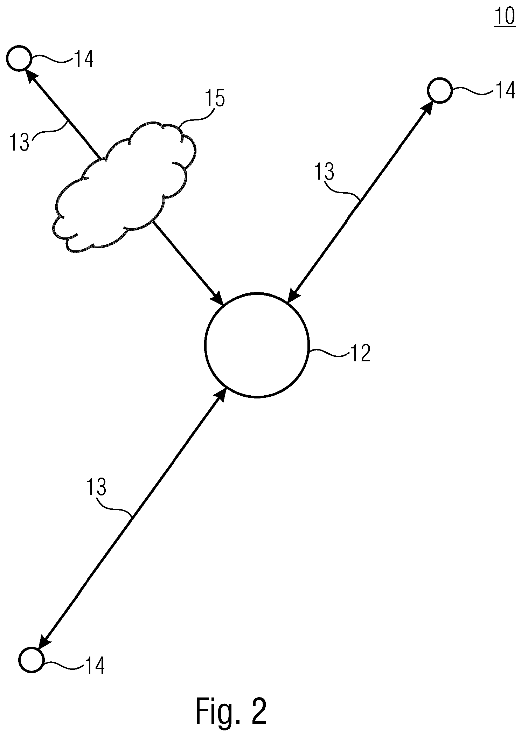

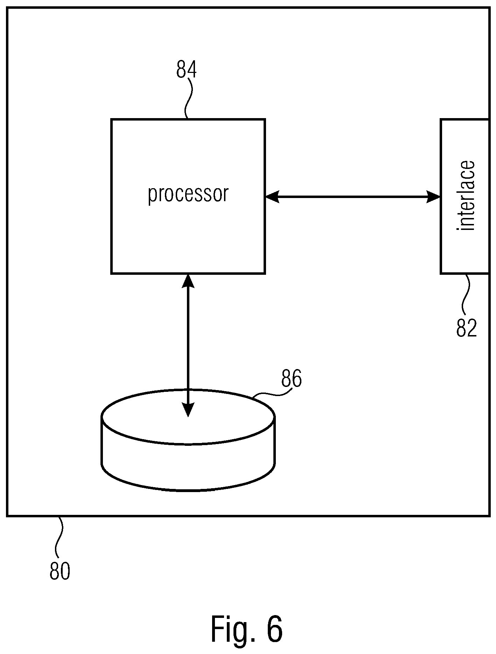

Fig. 6      shows a block diagram illustrating an apparatus for Federated Learning in accordance with an embodiment of the present application, the apparatus being present, for example, in or being implemented in, the server of Fig. 2;

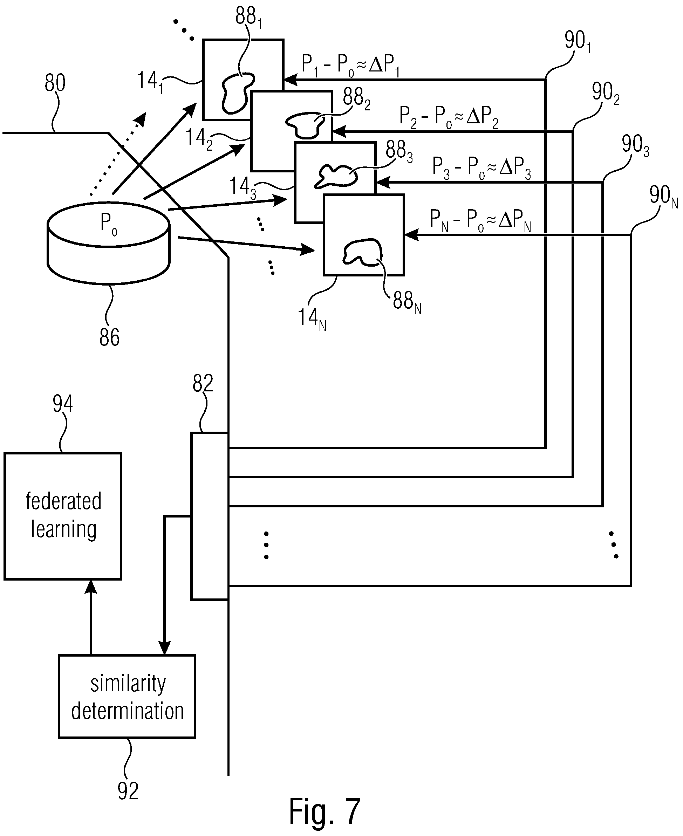

Fig. 7      shows a schematic diagram illustrating the gathering of the parameterization updates on the basis of which the parameterization update similarities may be determined in accordance with an embodiment;

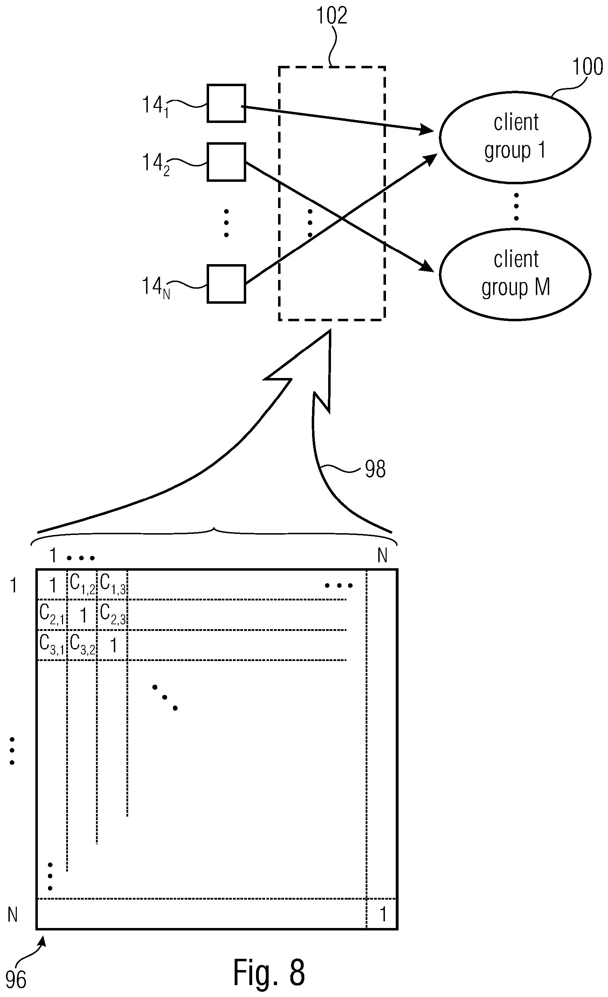

Fig. 8      shows a schematic diagram illustrating a clustering on the basis of parameterization update similarities in accordance with an embodiment;

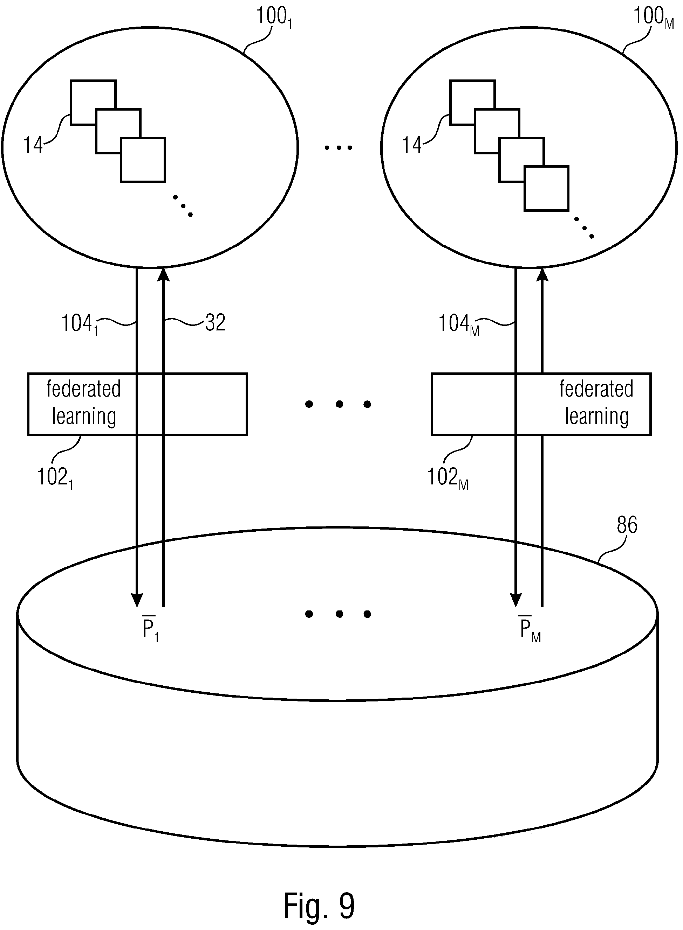

Fig. 9      shows a schematic diagram illustrating the client-group-specific Federated Learning on the basis of the clustering according to Fig. 8 in accordance with an embodiment;

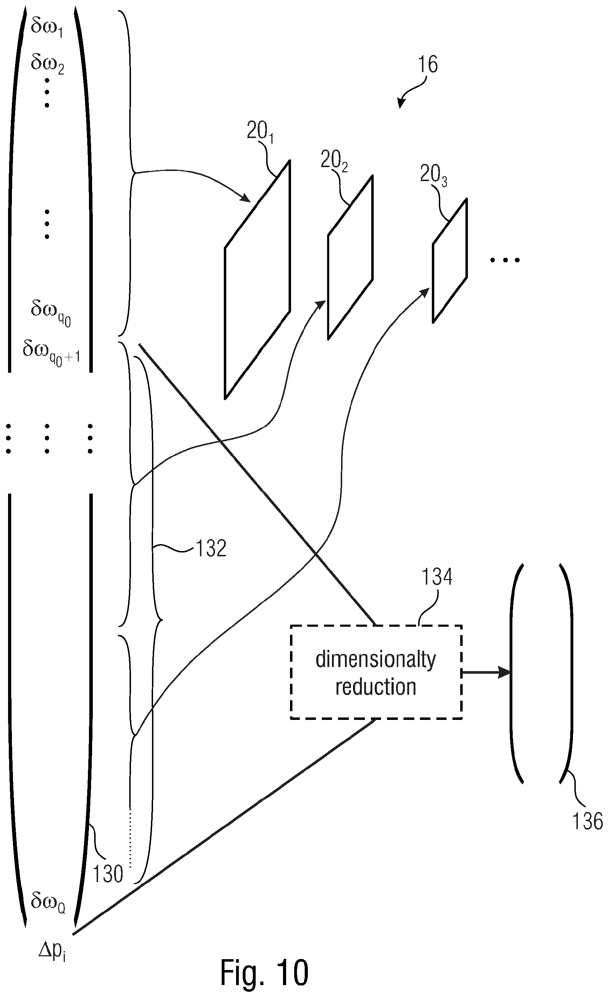

Fig. 10      shows a schematic diagram illustrating the possibility of restricting the parameterization update similarity to a certain fraction of the parameterization updates;

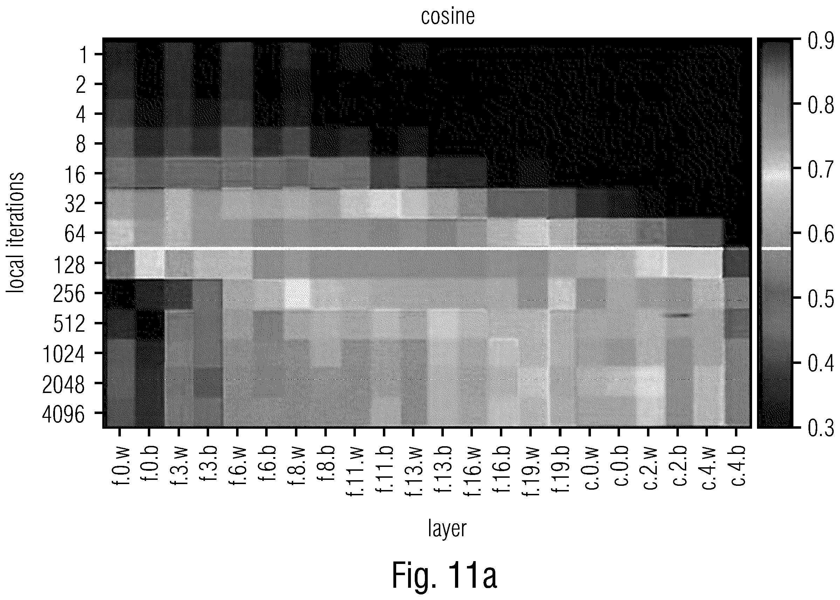

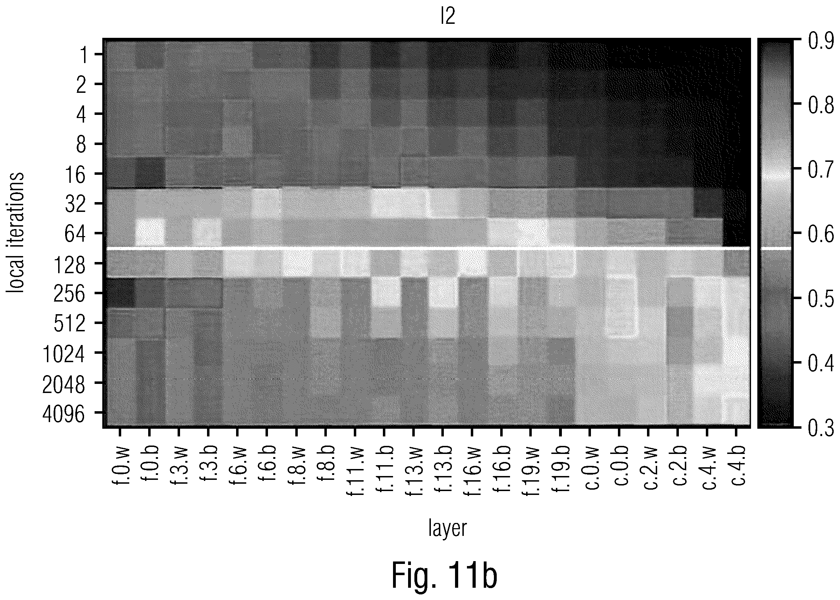

Fig. 11 a and b      show for two different parameterization update similarity measures the correlation corr($C$, $S$) between the similarity matrix $C$ (cp. Eq. 6) and the true distribution similarity measure (cp. Eq. 3) which is a proxy for how accurate the clustering will be. In particular, the correlation quality is shown as a function of the number of local iterations (1, .., 4096) and the layer of the model (f.0.W,.., c.4.b) for the cosine similarity measure at Fig. 11a and the similarity measure l2 at Fig. 11b;

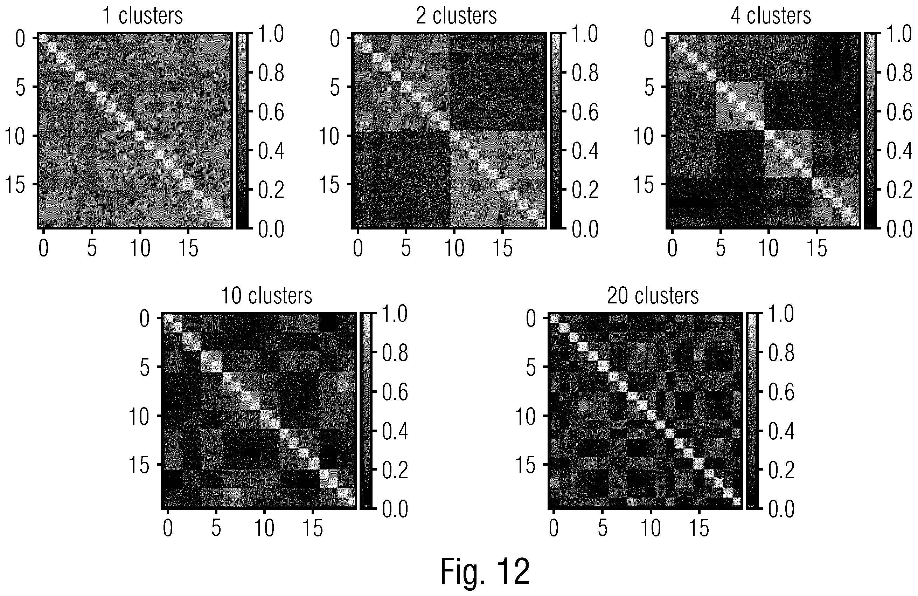

Fig. 12      shows five Cosine Similarity Matrices obtained in a scenario with 20 clients and different numbers of clusters;

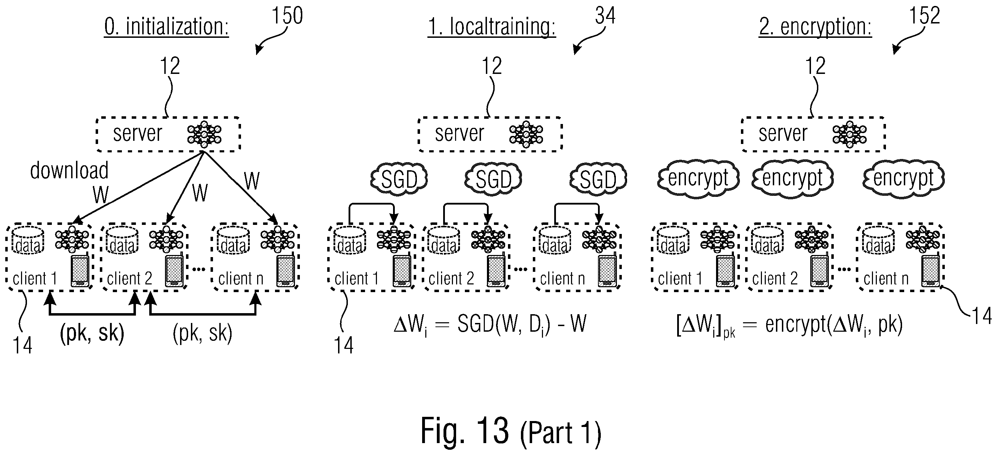

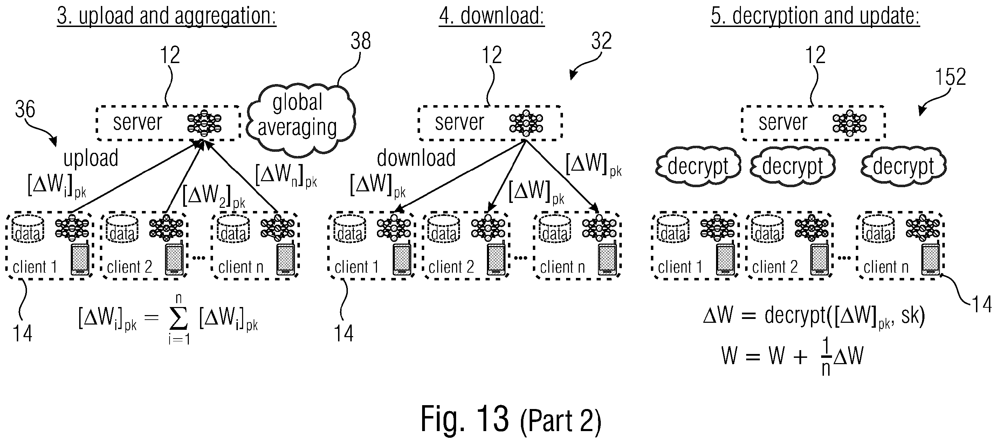

Fig. 13      shows a schematic diagram illustrating One communication round of homomorphically encrypted Federated Learning ([3])

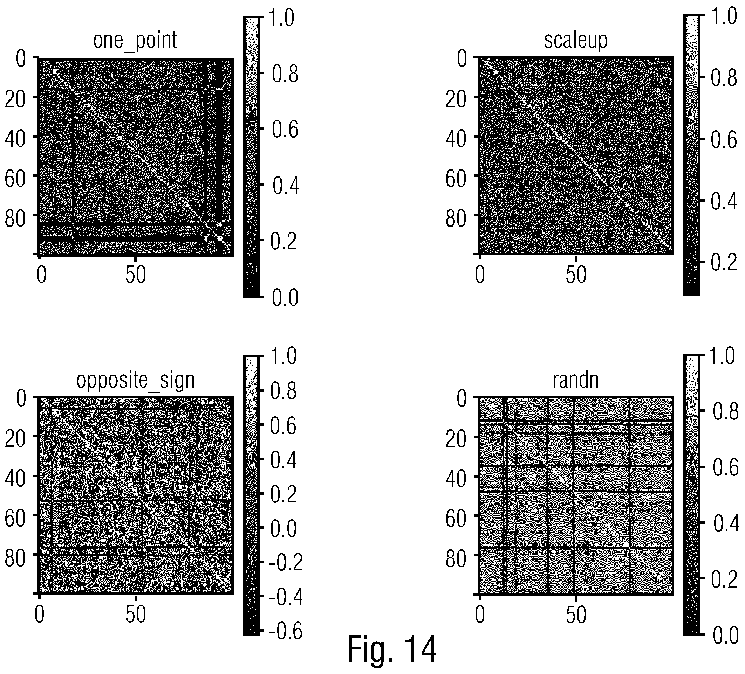

Fig. 14      shows graphs illustrating that different malfunctioning and adversarial clients can be detected and automatically handled by use of parametrization update similarity exploitation;

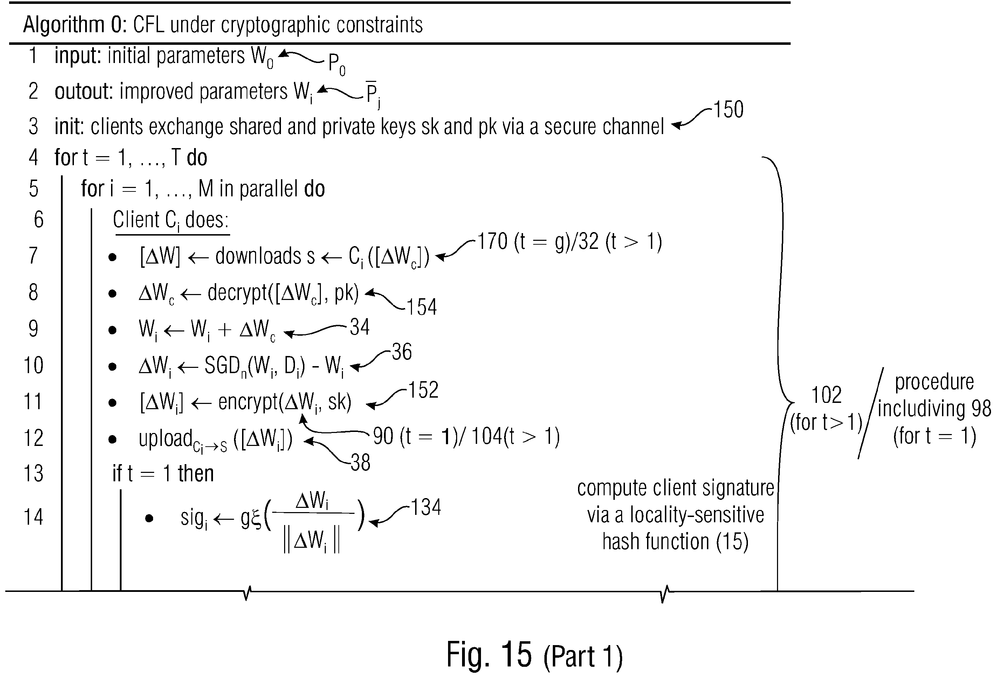

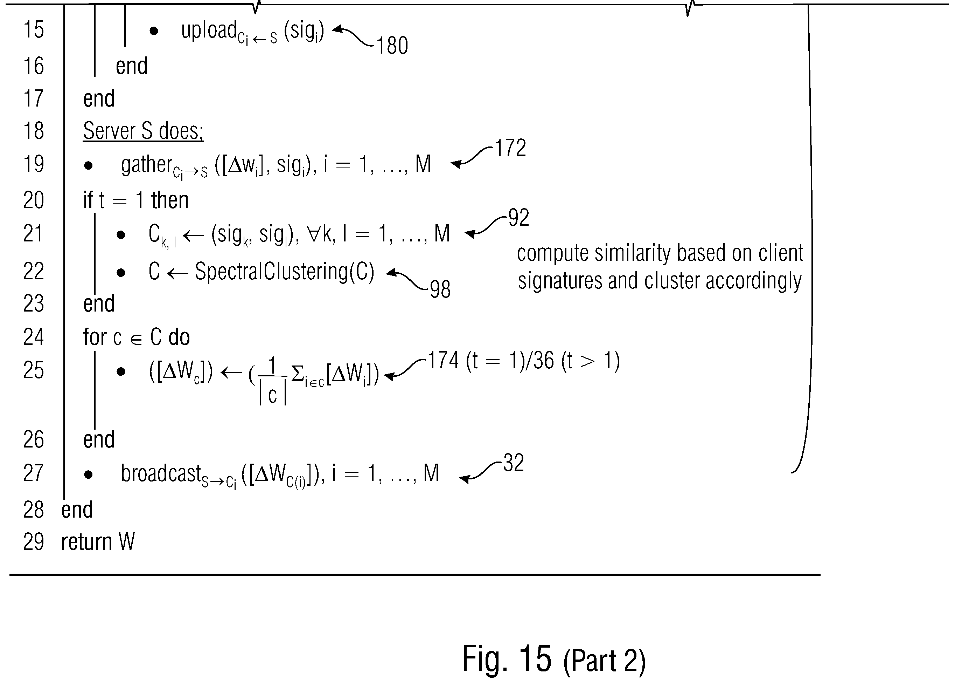

Fig. 15      shows a pseudocode illustrating clustered federated learning using a static cluster membership and encrypted parametrization update upload,

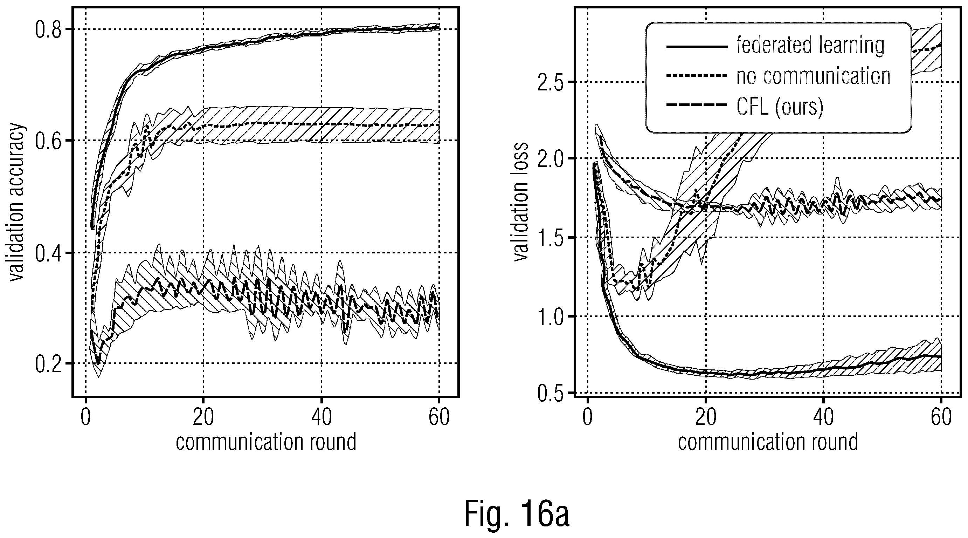

Fig. 16a      shows experimental results resulting from Fashion-MNIST.

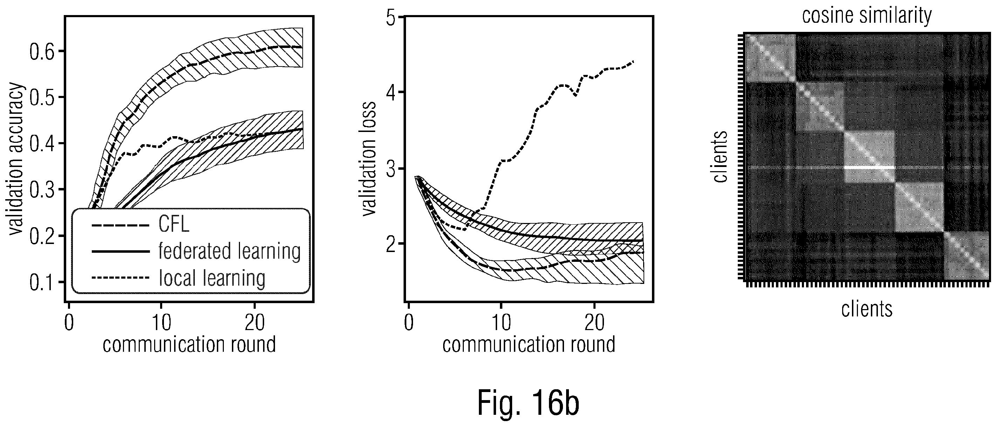

Fig. 16b      shows experimental results resulting from CIFAR100.

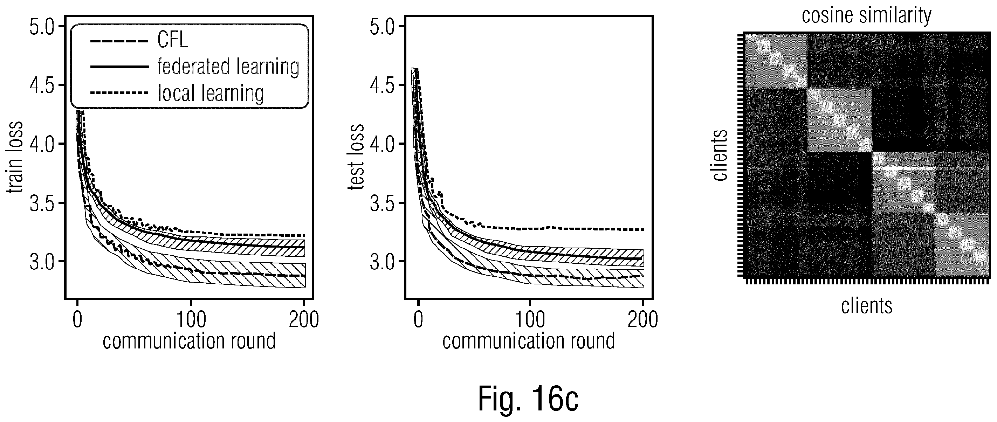

Fig. 16c      shows experimental results resulting from AGNews.

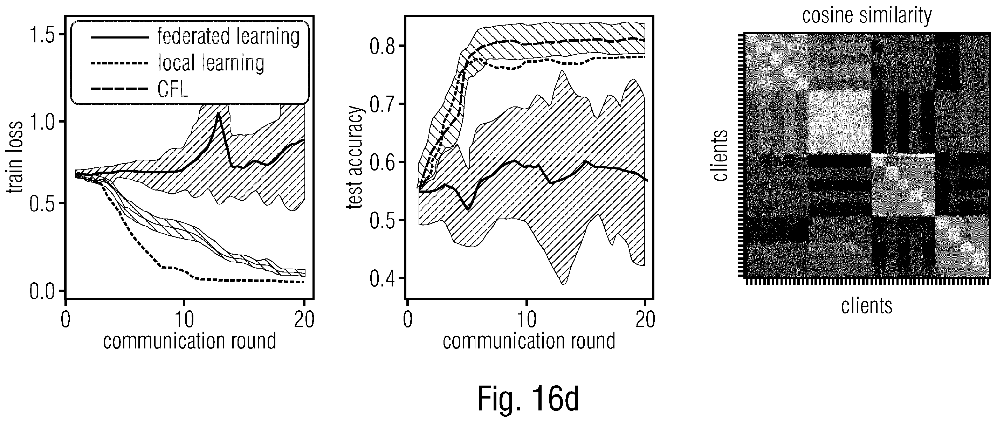

Fig. 16d      shows experimental results resulting from Celeb.

| Fig. 17a-c | show by way of pseudo-codes algorithms of a clustered learning approach using a mechanism to perform client group splitting upon reaching client group convergence. |
|---|---|
| Fig. 18a,b | illustrate two toy cases in which the Federated Learning Assumption is violated, namely the clients' models prediction behavior after having jointly learned one model. Points shown with continuous (blue) lines belong to clients from a first cluster while dotted (orange) points belong to clients from a second cluster. Fig. 18a illustrates the federated XOR-problem. An insufficiently complex model is not capable of fitting all clients' data distributions at the same time. If, as shown in Fig. 18b, different clients' conditional distributions diverge, *no model* can fit all distributions at the same time. |
| Fig. 19a and 19b | show the optimization paths of Federated Learning with two clients, applied to two different toy problems with incongruent (19a) and congruent (19b) risk functions. In the incongruent case Federated Learning converges to a stationary point of the FL objective where the gradients of the two clients are of positive norm and point into opposite directions. In the congruent case there exists an area (marked shaded in Fig. 19b) where both risk functions are minimized. If Federated Learning converges to this area the norm of both client's gradient updates goes to zero. By inspecting the gradient norms the two cases can be distinguished. |
| Fig. 20 | shows the clustering quality as a function of the number of data generating distributions k (vertical axis) and the relative approximation noise (horizontal axis). |
| Fig. 21 | shows an exemplary parameter tree created by Clustered Federated Learning. At the root node resides the conventional Federated Learning model, obtained by converging to a stationary point $\theta^*$ of the FL objective. In the next layer, the client population has been split up into two groups, according to their cosine similarities and every subgroup has again converged to a stationary point $\theta_0^*$ respective $\theta_1^*$. Branching continues recursively until no stationary solution satisfies the splitting criteria. In order to quickly assign new clients to a leaf model, at each branch of the tree the server can cache the weight updates of all clients belonging to the two different sub-branches. This way the new client can be moved down the tree along the path of highest similarity. |
| Fig. 22 | shows a pseudo-code of illustrating a clustered learning approach using a mechanism to perform client group splitting upon reaching client group convergence. |
| Fig. 23 | shows the separation gap $g(\alpha)$ as a function of the number of data points on every client for the label-swap problem on MNIST and CIFAR. |
| Fig. 24 | shows the separation gap $g(\alpha)$ as a function of the number of communication rounds for the label-swap problem on MNIST and CIFAR. The separation quality monotonically increases with the number of communication rounds of Federated Learning. Correct separation in both cases is already achieved after around 10 communication rounds. |
| Fig. 25 | shows an experimental verification of norm criteria presented below in (a32) and (a31). Displayed is the development of gradient norms over the course of 1000 communication rounds of Federated Learning with two clients holding data from incongruent (left) and congruent distributions (right). In both cases Federated Learning converges to a stationary point of $F(\theta)$ and the average update norm (a31) goes to zero. In the congruent case the maximum norm of the client updates (a32) decreases along with the server update norm, while in contrast in the incongruent case it stagnates and even increases. |
| Fig. 26 | CFL applied to the "permuted labels problem" on CIFAR with 20 clients and 4 different permutations. The top plot shows the accuracy of the trained model(s) on their corresponding validation sets. The bottom plot shows the separation gaps $g(\alpha)$ for all different clusters. After an initial 50 communication rounds a large separation gap has developed and a first split separates out the purple group of clients, which leads to an immediate drastic increase of accuracy for these clients. In communication rounds 100 and 150 this step is repeated until all clients with incongruent distributions have been separated. After the third split, the model accuracy for all clients has more than |

doubled and the separation gaps in all clusters have dropped to below zero which indicates that the clustering is finalized.

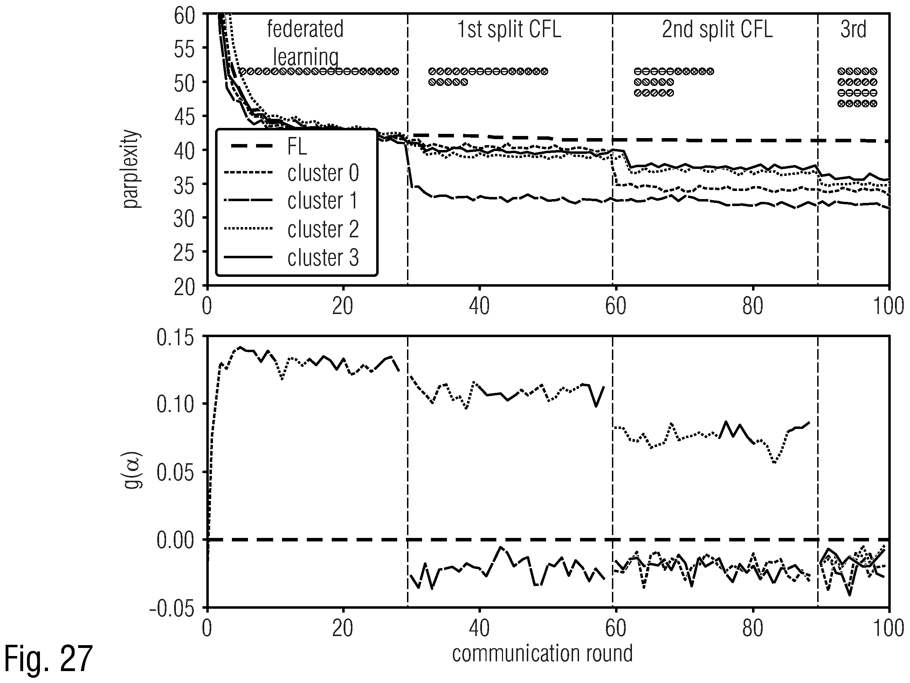

Fig. 27          Multistage CFL applied to the Ag-News problem.

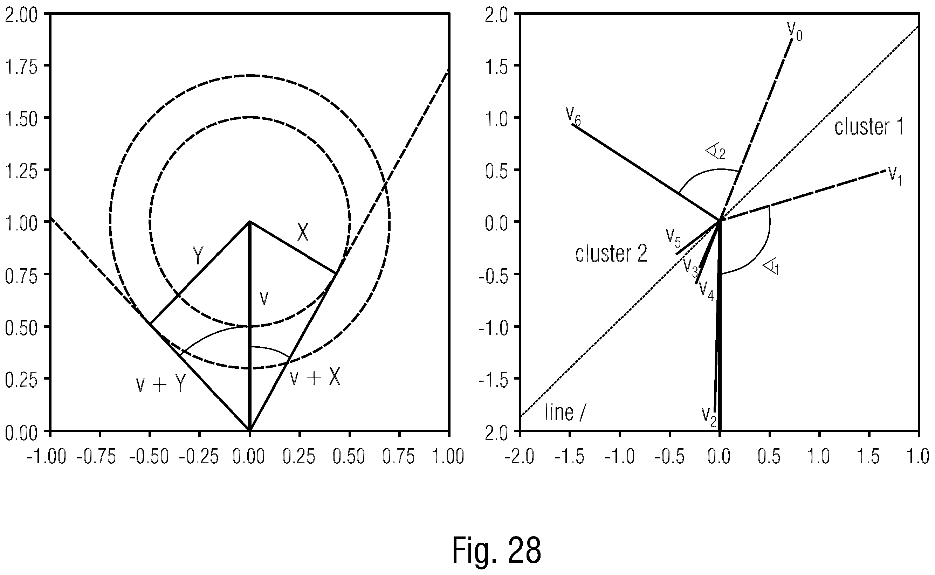

Fig. 28          shows a possible configuration in 2d for illustrating that the largest and 2nd largest angle between neighboring vectors (red) separate the two optimal clusters. The largest angle between neighboring vectors is never greater than $\pi$.

Before proceeding with the description of preferred embodiments of the present application with respect to the various aspects of the present application, the following description briefly presents and discusses general arrangements and steps involved in a federated learning scenario. Fig. 2, for instance, shows a system 10 for federated learning of a parameterization of a neural network. Fig. 2 shows the system 10 as comprising a server or central node 12 and several nodes or clients 14. The number M of nodes or clients 14 may be any number greater than one although three are shown in Fig. 2 exemplarily. Each node/client 14 is connected to the central node or server 12, or is connectable thereto, for communication purposes as indicated by respective double headed arrow 13. The network 15 via which each node 14 is connected to server 12 may be different for the various nodes/clients 14 or may be partially the same. The connection 13 may be wireless and/or wired. The central node or server 12 may be a processor or computer and coordinates in a manner outlined in more detail below, the distributed learning of the parameterization of a neural network. It may distribute the training workload onto the individual clients 14 actively or it may simply behave passively collect the individual parameterization updates. It then merges the updates obtained by the individual trainings performed by the individual clients 14 with redistributing the merge parameterization update onto the various clients. The clients 14 may be portable devices or user entities such as cellular phones or the like.

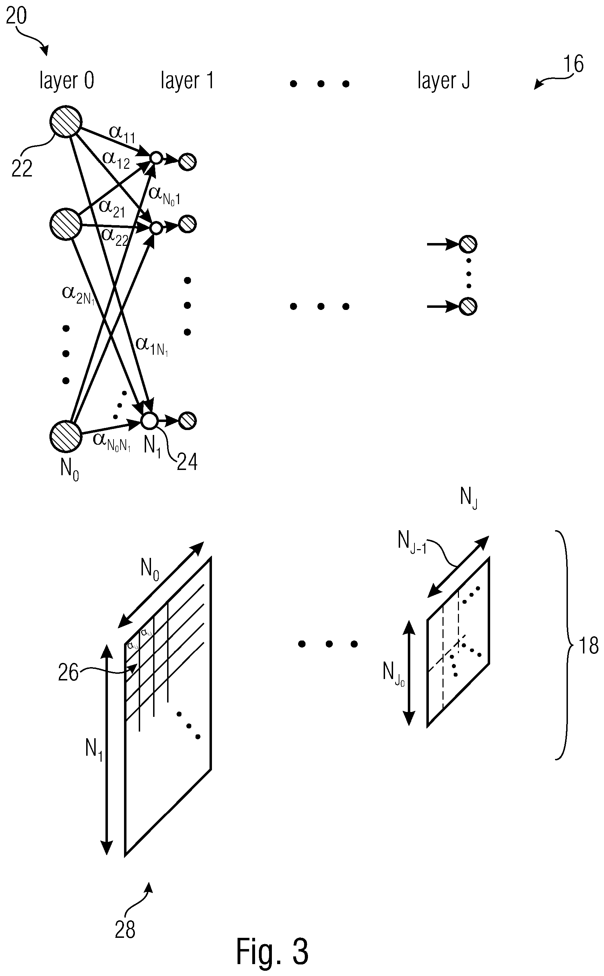

Fig. 3 shows exemplarily a neural network 16 and its parameterization 18. The neural network 16 exemplarily depicted in Fig. 3 shall not be treated as being restrictive to the following description. The neural network 16 depicted in Fig. 3 is a non-recursive multilayered neural network composed of a sequence of layers 20 of neurons 22, but neither the number J of layers 20 nor the number of neurons 22, namely $N_j$, per layer j, 20, shall be restricted by the illustration in Fig. 3 just. Also, the type of the neural network 16 referred to in the subsequently explained embodiments shall not be restricted to any of neural networks. Fig. 3 illustrates the first hidden layer, layer 1, for instance, as a fully connected layer with each neuron 22 of this layer being activated by an activation which is determined by the activations of all neurons 22 of the preceding layer, here layer zero. However, this is also merely illustrative, and the neural network 16 may not be restricted to such layers. As an example, the activation of a certain neuron 22 may be determined by a certain neuron function 24 based on a weighted sum of the activations of certain connected predecessor neurons of the preceding layer with using the weighted sum as an attribute of some non-linear function such as a threshold function or the like. However, also this example shall not be treated as being restrictive and other examples may also apply. Nevertheless, Fig. 3 illustrates the weights $\alpha_{i,j}$ at which activations of neurons i of a preceding layer contribute to the weighted sum for determining, via some non-linear function, for instance, the activation of a certain neuron j of a current layer and these weights 26, thus, form a kind of matrix 28 of weights which, in turn, is comprised by the parameterization 18 in that same describes the parameterization of the neural network 16 with respect to this current layer. Accordingly, as depicted in Fig. 3, the parameterization 18 may, thus, comprise a weighting matrix 28 for all layers 1... J of the neural network 16 accept the input layer, layer 0, the neural nodes 22 of which receive the neural network's 16 input which is then subject by the neural network 16 to the so-called prediction and mapped onto the neural nodes 22 of layer J - which form kind of output nodes of the network 16 - or the one output node if merely one node is comprised by the last layer J. Alternatively, the parameterization 18 may additionally or alternatively comprise other parameters such as, for instance, the aforementioned threshold of the non-linear function or other parameters.

Just as a side, it is noted that the input data which the neural network 16 is designed for, may be picture data, video data, audio data, speech data and/or textural data and the neural network 16 may be, in a manner outlined in more detail below, ought to be trained in such a manner that the one or more output nodes are indicative of certain characteristics associated with this input data such as, for instance, the recognition of a certain content in the respective input data, such as in the picture data and/or the video data. For instance, the neural network may perform an inference as to whether the picture and/or video shows a car, a cat, a dog, a human, a certain person or the like. The neural network may perform the inference with respect to several of such contents. Further, the neural network 16 may be trained in such a manner that the one or more output nodes are indicative of the prediction of some user action of a user confronted with the respective input data, such as the prediction of a location a user is likely to look at in the video or in the picture, or the like. A further concrete prediction example could be, for instance, a neural network 16 which, when being fed with a certain sequence of alphanumeric symbols typed by a user, suggests possible alphanumeric strings most likely wished to be typed in, thereby attaining an auto correction and/or auto-finishing function (next-word prediction) for a user-written textual input, for instance. Further, the neural network could be predictive as to a change of a certain input signal such as a sensor signal and/or a set of sensor signals. For instance, the neural network could operate on inertial sensor data of a senor supposed to be borne by a person in order to, for instance, inference whether the person is walking, running, climbing and/or walking stairs, and/or inferencing whether the person is turning right and/or left and/or inference as to which direction the person and/or a body of his/her body is moving or going to move. As a further example, the neural network could classify input data, such as a picture, a video, audio and/or text, into a set of classes such as ones discriminating certain picture origin types such as pictures captured by a camera, pictures captured by a mobile phone and/or pictures synthesized by a computer, ones discriminating certain video types such as sports, talk show, movie and/or documentation in case of video, ones discriminating certain music genres such as classic, pop, rock, metal, funk, country, reggae and/or Hip Hop and/or ones discriminating certain writing genres such as lyric, fantasy, science fiction, thriller, biography, satire, scientific document and/or romance.

In addition to the examples set out so far, it may be that the input data which the neural network 16 is ought to operate on is speech audio data with the task of the neural network being, for instance, speech recognition, i.e., the output of text corresponding to the spoken words represented by the audio speech data. Beyond this, the input data on which the neural network 16 is supposed to perform its inference, relates to medical data. Such medical data could, for instance, comprise one or more of medical measurement results such as MRT (magnetic resonance tomography) pictures, x-ray pictures, ultrasonic pictures, EEG data, EKG data or the like. Possible medical data could additionally comprise or alternatively comprise an electronic health record summarizing, for instance, a patient's medical history, medically related data, body or physical dimensions, age, gender and/or the like. Such electronic health record may, for instance, be fed into the neural network as an XML (extensible markup language) file. The neural network 16 could then be trained to output, based on such medical input data, a diagnosis such as a probability for cancer, a probability for heart disease or the like. Moreover, the output of the neural network could indicate a risk value for the patient which the medical data belongs to, i.e., a probability for the patient to belong to a certain risk group. Likewise, the input data which the neural network 16 is trained for, could be biometric data such as a fingerprint, a human's pulse and/a retina scan. The neural network 16 could be trained to indicate whether the biometric data belongs to a certain predetermined person or whether this is not the case but, for instance, the biometric data of somebody else. Moreover, such biometric data might also be subject to the neural network 16 for sake of the neural network indicating whether the biometric data suggests that the person which the biometric data belongs to a certain risk group and even further, the input data for which the neural network 16 is dedicated could be usage data gained at a mobile device of a user such as a mobile phone. Such usage data could, for instance, comprise one or more of a history of location data, a telephone call summary, a touch screen usage summary, a history of internet searches and the like, i.e., data related to the usage of the mobile device by the user. The neural network 16 could be trained to output, based on such mobile device usage data, data classifying the user, or data representing, for instance, a kind of personal preference profile onto which the neural network 16 maps the usage data. Additionally or alternatively, the neural network 16 could output a risk value on the basis of such usage data. On the basis of output profile data, the user could be presented with recommendations fitting to his/her personal likes and dislikes.

Fig. 4 shows a sequence of steps performed in a distributed learning scenario performed by the system of Fig. 2, the individual steps being arranged according to their temporal order from top to bottom and being arranged at the left hand side or right hand side depending on whether the respective step is performed by the server 12 (left hand side) or by the clients 14 (right hand side) or involves tasks at both ends. It should be noted that Fig. 4 shall not be understood as requiring that the steps are performed in a manner synchronized with respect to all clients 14. Rather, Fig. 4 indicates, in so far, the general sequence of steps for one client-server relationship/communication. With respect to the other clients, the server-client cooperation is the structured in the same manner, but the individual steps not necessarily occur concurrently and even the communications from server to clients need not to carry exactly the same data, and/or the number of cycles may vary between the clients. For sake of an easier understanding, however, these possible variations between the client-server communications are not further specifically discussed hereinafter.

As illustrated in Fig. 4, the distributed learning operates in cycles 30. A cycle i is shown in Fig. 4 to start with a download, from the server 12 to the clients 10, of the parameterization 18 of the neural network 16, i.e. its current setting. The step 32 of the download is illustrated in Fig. 4 as being performed on the side of the server 12 and the clients 14 as it involves a transmission or sending on the side of the server 12 and a reception on the side of clients 14. Possible implementations with respect to this download 32 will be set out in more detail below as this download may be performed in a certain specific manner. For instance, the parametrization downloaded in step 32 may be downloaded in form of a difference or update (merged parametrization update) of a previous cycle's version of the parametrization rather than transmitting the parametrization anew for each cycle.

The clients 14 receive the information on the parameterization setting. The clients 14 are not only able to parameterize an internal instantiation of the neural network 16 accordingly, i.e., according to this setting, but the clients 14 are also able to train this neural network 16 thus parametrized using training data available to the respective client. Accordingly, in step 34, each client trains the neural network, parameterized according to the downloaded parameterization, using training data available to the respective client at step 34. In other words, the respective client updates the parameterization most recently received using the training data. As to the source of the training data, each client 14 gathers its training data individually or separately from the other clients or at least a portion of its training data is gathered by the respective client in this individual manner. The training data may, for example, be gained from user inputs at the respective client. As outlined in more detail below, the training 34 may, for instance, be performed using a stochastic gradient decent method. However, other possibilities exist as well.

Next, each client 14 uploads its parameterization update, i.e., the modification of the parameterization setting downloaded at 32. Each client, thus, informs the server 12 on the update. The modification results from the training in step 34 performed by the respective client 14. The upload 36 involves a sending or transmission from the clients 14 to server 12 and a reception of all these transmissions at server 12 and accordingly, step 36 is shown in Fig. 3 as a box extending from left to right just as the download step 32 is.

In step 38, the server 12 then merges all the parameterization updates received from the clients 14, the merging representing a kind of averaging such as by use of a weighted average with the weights considering, for instance, the amount of training data using which the parameterization update of a respective client has been obtained in step 34. The parameterization update thus obtained at step 38 at this end of cycle i indicates the parameterization setting for the download 32 at the beginning of the subsequent cycle i + 1.

As already indicated above, the download 32 and upload 36 may be rendered more efficient by, for instance, transmitting the difference to a previous state of the parametrization such as the parametrization downloaded before in case of step 32 and the parametrization having been received before local training at step 34 in case of 36. Further, the transmissions or uploads in step 36 may involve an encryption as will be discussed in more details below. Despite these possibilities, the server 12 may be implemented in accordance with any of the subsequently explained embodiments so as to render the federated learning more efficient and/or robust, and/or to be able to classify clients and/or measure similarities between the client's local training data. Insofar, Fig. 4 serves as a possible basis where the subsequently described embodiments and descriptions may be applied to yield even further embodiments, but the subsequently explained embodiments should not be restricted thereto.

After having described the general framework of federated learning, examples with respect to the neural networks which may form the subject of the federated learning, the steps performed during such distributed learning and so forth, the following description of embodiments of the present application starts with a presentation of problems which are associated with federated learning such as decrease the efficiency of the learned model and/or decrease the learning robustness, followed with an outline and motivation of measures to overcome the problems. The latter measures are then again presented embedded into further embodiments of the present application.

Formally the Federated Learning objective can be described as follows: Given n clients $C_1(D_1, p_1(x,y)), .., C_n (D_1, p_n(x,y))$, with data $D_i = \{(x_1, y_1), \ldots, (x_{k_i}, y_{k_i})\} \sim p_i^{k_i}(x, y)$ sampled from distributions $p_i(x, y)$, the Federated Learning objective is to fit one single model $f_\mathcal{W}$ to the combined joint distribution

$$p_{combined}(x, y) = \sum_{i=1}^{n} \frac{|D_i|}{|D|} p_i(x, y) \qquad (1)$$

which is weighted by the number of data points on the individual clients. In other words, the Federated Learning objective is

$$\min_{\mathcal{W}} R(\mathcal{W}) = \mathbb{E}_{p_{combined}}[Loss(f_\mathcal{W}(x), y)] \qquad (2)$$

with R(W) being the risk function induced by some suitable distance measure *Loss* and $f_\mathcal{W}$ being a classifier parameterized by $\mathcal{W}$.

In general, real-world applications, the *server has little to no knowledge about the participating clients and their data.* Minimizing the risk over all clients combined as in eq. 2 might be difficult to impossible in situations where

- Clients observe their data in vastly different environments: $D_{KL}(p_i(x) \| p_j(x)) >> 0, i \neq j$

- Clients have different opinions about the data: $\mathbb{E}_x[D_{KL}(p_i(y|x) \| p_j(y|x))] >> 0, i \neq j$

These issues are particularly severe if clients are malfunctioning (is this case $p(x, y)$ would be random for some clients) or even worse if they exhibit adversarial behavior (in this case $p(x, y)$ would encode a hidden back-door functionality). *These issues fundamentally cannot be solved satisfactorily within the Federated Learning Framework.* We will now give some motivating examples to illustrate this point.

As a first example, assume every Client holds a local dataset of images of human faces and the goal is to train an "attractiveness" classifier on the joint data of all clients. Naturally different clients will have varying opinions about the attractiveness of certain individuals. Assume one half of the client population thinks that people wearing glasses are attractive, while the other half thinks that those people are unattractive. In this situation one single model will *never* be able to accurately predict attractiveness of glasses-wearing people for all clients at the same time.

As a second example, assume you are trying to jointly train a model for next-word prediction on a large corpus of texts from different genres (news, sci-fi, editorial, romance,..). Every client holds a number of texts from one genre. In this situation texts will exhibit different statistics depending on the genre. E.g. homonyms: The word "crane" will have a completely different meaning depending on whether it appears in a biological compendium or in a construction journal. Complex deep learning models might be able to infer the meaning from the context, however, the more complex a model, the more resources it generally requires to train. Training such a complex model might therefore be prohibitive in Federated Learning where resources are typically very limited.

This problem may be overcome in the following manner. In particular, clients are clustered into different groups based on their distribution (training data) similarity and the resulting groups are be trained separately using Federated Learning. In particular,

1. Federated Learning is be performed in structured clusters, which is an extension/ generalization of the Federated Learning discussed above, thereby yielding parametrizations for the clients which yield better inference results,

2. the clustering is found to be obtainable based only on the client's parametrization updates such as the weight-updates $\Delta \mathcal{W}_i$, so that the federated learning scenario prerequisites still apply,

3. is has been found out that one can find the clustering or similarities between the clients and/or their training data even in secure multi-party computation scenarios in cases where via clients communicate encrypted weight-updates.

4. it is possible, to detect defective or adversarial clients

5. it is possible to extend a clustering such as by (1) dynamical merging and splitting of clusters, (2) including client feedback into the clustering, (3) handling partial client participation, (4) handling non-stationary Data.

Fig. 5 illustrates and motivates the advantages of using clustered Federated Learning on the basis of a toy example. That is, Fig. 5 illustrates why a clustering approach as described in more detail below is highly beneficial in situations described above. In the toy example presented in Fig. 5, it is assumed that the training data of certain client groups differs. That is there statistics differs. Accordingly, in Fig. 5, the first three graphs from the left-hand side in the top row show three bi-modal distributions $p_1(x,y)$, $p_2(x,y)$ and $p_3(x,y)$ with respective optimal decision boundaries. If these distributions were combined into a combined distribution, i.e. the training data was put together and treated as a pool of training data, Fig. 5 shows at two, i.e. in the fourth graph in the top row, the resulting distribution along with a respective optimal decision boundary. Compared thereto, Fig. 5 shows in the middle row, within the three graphs at the left-hand side, the respective local solution, namely for each of the respective local training data in the top row, i.e. for each of the three distributions shown in the top row, an example for 10 client sample data, i.e. a fraction of the local training data is shown along with the result of a training in form of a logistic regression classifier which is obtained on the respective local training data. Altogether, 30 different resulting decision boundaries are displayed together with one client's local data set for every distribution. In the fourth graph from the left-hand side in the middle row, Fig. 5 shows the result of the usual Federated Learning solution: all 30 clients together train one single logistic regression classifier on their combined data. The resulting decision boundaries displayed together with a data of all clients. In case of clustered Federated Learning, all clients, i.e. the clients operating on training data having the distribution entitled as "view zero", all clients operating on the distribution indicated as "view one" and the clients operating at a distribution of training data indicated as "view 2" in Fig. 5, are associated to their corresponding training data distribution, i.e. are clustered. All clients with data from the same distribution jointly train one logistic regression classifier on the joint data. This results in three different classifiers, one for each distribution as shown in the left-hand side three graphs in the bottom row of Fig. 5. That is, three different classifiers, one for each distribution, result and, as shown at 7, these clustered Federated Learning classifiers achieve vastly better generalization performance, i.e. inference result than both, the purely local and the Federated Learning solution. That is, Fig. 5 illustrates that a clustering approach is highly beneficial in situations when the client distributions are highly dissimilar. While one unified model can only poorly fit all distributions at the same time, a clustering is able to yield better results. If we know which clients draw their data from similar distributions, we can cluster them together and train the different classifier for each one of these clusters. The resulting classifiers perform better than purely locally trained classifiers, as they can leverage the combined data of all clients in the same cluster and are hence less prone to overfitting. At the same time, they perform better than the Federated Learning classifier without clustering, as they are more specialized on the client-specific distribution. More examples on realistic high-dimensional data sets will be presented below.

As an outcome of the thoughts and the analysis outlined above, Fig. 6 shows an embodiment of the present application for an apparatus for Federated Learning of a neural network by clients which apparatus is be comprised by server 12 of Fig. 2 for the functionality of which could be performed by the server 12 of Fig. 2. More details in this regard are set out below.

In particular, the apparatus of Fig. 6 which is indicated using reference sign 80 comprises an interface 82 to communicate with the clients, a processor 84 configured to perform tasks further outlined below, and a memory or storage 86, wherein the processor 84 is connected to both, the interface 82 and the storage 86.

The apparatus 80 of Fig. 6 is configured to receive via interface 82 from a plurality of clients parameterization updates which relate to a predetermined parameterization of a neural network such as NN (neural network) 16. These parameterization updates are, for instance, the result of the clients using respective local training data so as to train a parameterization of the neural network commonly downloaded to these clients. That is, the reception of the parameterization updates may, for instance, be the result manifesting itself of the steps 32, 34 and 36 of Fig. 4 where each client has been provided with the same parameterization of the neural network, has updated the parameterization thus received using local training data and uploaded a parameterization update to apparatus 80. The parameterization to which these parameterization updates relate, may, for instance, also be stored in storage 86.

As explained above, and as illustrated in Fig. 7, the clients $14_i$ may send their parameterization updates in form of differences. That is, each client $14_i$ trains the parameterization $P_0$ received on the basis of its local training data $88_i$ to yield a locally trained or adapted parameterization $P_i$ and sends as the parameterization update merely a difference between this locally trained parameterization $t_i$ and the initial parameterization updates $P_0$, namely $\Delta P_i$, back to apparatus 80. The parameterization updates $90_i$, thus sent back, may even be only approximations or rough quantizations of the actual difference. By defining an order among the individual parameters such as weights 26 of the parameterization updates $90_i$, these parameterization updates $90_i$ may be thought of, or may be represented as, vectors in a high-dimensional space. In even other words, each parameterization update $90_i$ may be represented as a vector, each component of which indicates an update for a corresponding parameter of the parameterization $P_0$ such as a weight 26.

The apparatus 80 uses these parameterization updates $90_i$ in order to perform Federated Learning of the neural network depending on similarities between these parameterization updates $90_i$. In particular, as illustrated in Fig. 7, the parameterization updates $90_i$ are subject to a similarity determination 92 yielding the similarities between the parameterization updates $90_i$, and depending on these similarities a Federated Learning 94 of the neural network is performed. Similarity determination 92 and Federated Learning 94 are performed by the processor 84.

The dependency on the similarities between the parameterization updates $90_i$ may be embodied in one of different manners. These different manners are discussed in more detail below. For instance, a first possibility is illustrated in Fig. 8. Here, mutual similarity between the parameterization updates manifests itself in a correlation matrix 96, the components $C_{ij}$ of which indicate the similarity between the parameterization updates $90_i$ and $90_j$, respectively. That is, frankly speaking, $C_{ij}$ measures the similarity between parameterization updates $90_i$ and $90_j$. For instance, $C_{ij}$ may measure the Euclidian or l2 distance between the corresponding vectors representing the parameterization updates $90_i$ and $90_j$. In accordance with embodiments described further below, the similarities are measured using the cosine similarity between the parameterization updates $90_i$ and $90_j$. An advantage of using such a similarity measure is described further below and is, briefly speaking, the invariance of this cosine similarity against any client global rotation of the parameterization updates $90_i$, not known to the apparatus 80, and/or against client-individual additions of random vectors to the parameterization updates $90_i$ in case a sufficiently large dimensionality of the parameterization updates. At least, the degree of invariance suffices for most applications. Based on the similarities thus represented by the correlation matrix 96, the parameterization updates and thus, the clients $14_i$ relating thereto, are clustered so as to associate 101 each of the clients $14_i$ to one of a plurality of client groups. The clustering 98 may, for instance, be determined using a certain iterative approach according to which a certain cost function is minimized which depends on the mean similarity between clients associated with a respective client group 100 on the one hand and the number of client groups M on the other hand. That is, frankly speaking, the clustering 98 may aim at keeping the number of client groups M as low as possible on the one hand, but aims at keeping the mean similarity between clients within the same client group as large as possible on the other hand. That is, as a result of the clustering 98, each client $14_i$ is associated with one of the client groups 100, the association being indicated with 101. As an outcome of this association 101, Federated Learning is then performed using this association 101 client-group-separately. That is, for each client group 100, the apparatus 80 managea an own parameterization and perform the Federated Learning of Fig. 4 for each of these client groups 100 separately. That is, the apparatus 80 distributes by download 32 a current setting of a parameterization for a client group j, i.e. $\overline{P}_j$, to all clients associated by association 101 with that client group j, upon which these clients update this parameterization in step 34 and respond by upload 36 with corresponding (further) parameterization updates which, now, relate to the client group specific parameterization. The merging is then done client group-specifically by merging only those parameterization updates having been uploaded from the clients belonging to that client group j, whereupon apparatus 80 updates its client group-specific parameterization $\overline{P}_j$ and downloads and distributes same in step 32 to the clients belonging to that client group j and so forth. It might be that the initial parameterization on the basis of which the similarities in matrix 96 are determined, i.e. on the basis of which the clustering 98 is performed, is the parameterization of one of client groups 100. In that case, the parameterization updates 90 used to determine the similarities and the clustering 98, respectively, could concurrently be used in order to perform the update or merging in step 38.

Fig. 9 illustrates the client-group-separately Federated Learning. For each client group $100_j$, there may be a client-specific parameterization $\overline{P}_j$ stored in storage 86 and managed at the apparatus 80, respectively. Each client 14 of the respective client group $100_j$ is provided with a corresponding client-specific parameterization $\overline{P}_j$ by step 32, and the Federated Learning with respect to this group $100_j$, i.e. the Federated Learning $102_j$, uses the further parameterization updates $104_j$ sent from the clients of the respective client group $100_j$ during step 36 so as to update the client-specific parameterization $\overline{P}_j$ whereupon same is redistributed again in step 32 and so forth.

As will be outlined in more detail below, one of the client groups, such as client group $100_M$, may be a client group attributed to parameterization update outliners and for such a client group no Federated Learning may be performed at all, while, for instance, for all M-1 other Federated Learning 102 is performed.

Although not specifically discussed above, it is clear that the number of clients N may freely be chosen and may even vary over time, and the same applies with respect to the number of client groups M which may be static or which may be adapted with possibilities to this end being discussed further below. For the latter task of re-associating certain clients 14 it might be that apparatus 80 stores in storage 86 the vectors representing the parametrization updates 90 which formed the basis of the computation of the correlation matrix 96. For instance, for a new client, its update $90_{new}$ may be used to determine the mutual similarities between its parametrization update $90_{new}$ and all the other ones $90_{1...N}$. Then, this new client may be associated with the group 100 to which its update $90_{new}$ is most similar. The matrix may be kept updated by enlarging/extending same accordingly. When the mutual similarities of one or more new clients are used to extend matrix 96, it is possible to perform the whole clustering 90 anew with allowing for the number of groups 100 increasing or decreasing. Further, irrespective of new clients currently joining or not, the apparatus may intermittently, initiated by new client joining or by some other situation, test whether one or more of the groups 100 should be merged into one or should be split into two groups because of, for instance, the matrix 96 having been increased since the last clustering.

As will be outlined in more detail below, however, in accordance with a non-claimed alternative approach, the parameterization update similarities is not exploited so as to strictly associate each client $14_i$ with a certain client group. Rather, in accordance with the non-claimed alternative approach, the parameterization update similarities is alternatively used in order to merge these parameterization updates $90_i$ in a manner to obtain an updated parameterization update, but in doing so, the parameterization updates $90_i$ are weighted so that parameterization updates $90_i$ having a predetermined similarity to the other parameterization updates, such as on average, contribute less to the updated parameterization update than parameterization updates being more similar to the other parameterization updates, such as, again, on average, than the predetermined similarity. In other words, the contribution of the parameterization update $90_i$ to the merging and to the updated parameterization update resulting from the merging may be the larger, the more similar the respective parameterization update $90_i$ is to the other parameterization updates, such as on average. By this measure, outliers among the parameterization updates $90_i$ contribute less to the merging into the parameterization update resulting therefrom, so that the resulting Federated Learning is more robust against deteriorating clients which send misleading parameterization updates $90_i$. The latter weighted merging may also be used in the client-group-specific Federated Learning steps $102_j$ of Fig. 9 in addition to the clustering and the client group association, respectively.

Before resuming the more detailed and mathematical presentation of embodiments of the present application or, to be more precise, details with respect to individual features and steps described with respect to the previous figures, the following notes shall be made. For instance, it has been described above, that, as an example, the cosine similarity may be used in order to measure mutual training data similarity. To compute a cosine similarity, a dot product is computed between two vectors. However, the computation of the cosine similarity and/or the dot products, may in accordance with the embodiment of the present application be directly performed on the parameterization updates $90_i$ as received by the clients $14_i$ or on versions derived therefrom. For instance, as depicted in Fig. 10, the parameterization update $\Delta P_i$ received from a client $14_i$ may comprise Q weights updates or weight differences $\delta w_q$, with q = 1... Q. As already indicated above, the parameterization update $\Delta P_i$ may be represented as a corresponding vector 130. Fig. 10 illustrates, however, that, for example, the components of vector 130 relate to different layers 20 of the neural network 16. In the example of Fig. 10, $q_0$ components or weight differences, for instance, relate to a first intermediate layer $20_1$ of the neural network 16, and likewise, other weight differences relate to further layers $20_2$ and $20_3$, wherein the number of layers, however, is merely illustratively chosen. In any case, what Fig. 10 aims to illustrate is the following: the aforementioned steps and tasks making use of parameterization update similarities may in fact only relate to similarities determined with respect to certain portions of the parameterization updates $\Delta P_i$. For instance, the clustering and/or similarity dependent merging discussed above could be performed only with respect to one or more portions of vector 130 relating to weight differences belonging to nodes of the neural network 16 being **comprised** by certain layers of network 16. The same note would hold true for the cluster-specific Federated Learning 102. That is, while, for instance, an internal layer $20_1$ of the neural network 16 could be handled globally for all clients, client clustering 98 could be used with respect to the other layers of neural network 16 such

as layers $20_2$ and/or $20_3$. Layer $20_1$ could, for instance, be a convolutional layer. That is, for instance, the portion of the parametrization of NN 16 relating to layer $20_1$ would be learned globally based on all updates 90 from all clients, while clustering is used for another portion.

Instead of a layer-wise separation between the portion of the parameterization update $\Delta P_i$ used for the similarity dependency on the one hand and the portion not used for similarity dependency on the other hand, another sort of separation may also be useful depending on the circumstances.

And further, Fig. 10 illustrates by dashed lines a further possibility not yet having been discussed above, but mentioned below. It may be combined with the similarity dependency restriction towards a certain portion 132 of the updates 90 or not. In particular, instead of determining the similarity on the basis of the whole parameterization update $\Delta P_i$ or the whole parameterization updates similarity portion 132, the latter could be subject to a dimensionality reduction 134, i.e. a transform reducing the dimensionality. The resulting reduced vector 136 could then be subject to the cosine similarity computation with another vector obtained by such dimensionality reduction 134. The dimensionality reduction 134 would involve a transform which substantially conserves the similarity of the non-reduced vector or portion 132 of vector 130. For instance, at an inaccuracy of $\pm 5\%$, the similarities determined based on the reduced vectors 136 may correspond to the similarities determined based on the non-reduced vectors 130 or vector portions 132.

Let's resume the mathematical and, thus, more concrete description of possible embodiments for performing federated learning. To find the correct clusters 100 we need to somehow estimate the distribution-similarity:

$$S_{i,j} = (1 + D_{JS}(p_i(x,y)||p_j(x,y)))^{-1} \tag{3}$$

Here, distribution similarity denotes the similarity of the training data $88_i$ and $88_j$ of two different clients i and j in terms of their statistical frequency out of a base pool of training data.

**Estimating** the true distribution-similarity S in practice is intractable, as under the Federated Learning paradigm the server

- Has no access to $p_i(x,y)$ ($\rightarrow$ generally not even the clients themselves have access to their data generating distribution)

- Has no access to the data $D_i = \{(x_1, y_1), .., (x_{k_i}, y_{k_i})\} \sim p_i^{k_i}(x,y)$ ($\rightarrow$ this is the premise of Federated Learning)

- Does not even have access to plain-text $\Delta \mathcal{W}_i$ if encryption is used (this is sometimes necessary in privacy sensitive scenarios as information about the client $D_i$ data can theoretically be inferred indirectly from the updates (see e.g. [3] [5])

However, using a measure that can (a) be computed very easily by the server without requiring modifications to the Federated training methodology or any additional information from the clients and that (b) correlates very well with the distribution similarity S, enables to provide an entity outside the clients, such as the serve and/or the apparatus 80, respectively, to estimate this similarity. This means that we can use such as measure as a proxy to perform the clustering approach described above. What we exploit here is the discovery that similarities between the client distributions are encoded in their weight-updates. Let

$$\Delta \mathcal{W}_i = \text{SGD}_m(\mathcal{W}_0, D_i) - \mathcal{W}_0 \tag{4}$$

be the weight-update computed by client $i$ after m iterations on it's local training data $D_i$ starting from a common initialization $\mathcal{W}_0$, i.e from a common parametrization. In the regular Federated Learning setting these weight-updates are sent to the server that then performs the averaging to produce a new master model according to

$$\mathcal{W}_{new}^{FL} \leftarrow \mathcal{W}_0 + \sum_{i=1}^{n} \frac{|D_i|}{|D|} \Delta \mathcal{W}_i \tag{5}$$

In Clustered Federated Learning as presented above and illustrated in Fig. 9 the server, before averaging, computes the pairwise similarity such as the cosine-similarity between the updates of all clients. In case of the cosine-similarity, this computation was according to

$$C_{i,j} = \langle \frac{\Delta \mathcal{W}_i}{\|\Delta \mathcal{W}_i\|}, \frac{\Delta \mathcal{W}_j}{\|\Delta \mathcal{W}_j\|} \rangle \tag{6}$$

That is, the matrix 96 would result from Eq. 6 or, in even other words, $C_{i,j}$ is en example for matrix 96. What we empirically find and is illustrated in Fig. 11, is that there is a very high correlation between the cosine similarity matrix C and the true underlying distribution similarity S.

$$1 \geq \mathrm{corr}(C, S) >> 0 \tag{7}$$

For the toy example from above, the matrix S can be computed explicitly and the matrices C and S are displayed as heatmaps in Fig. 5 at (6) at the right-hand side thereof. We can now apply spectral clustering to the cosine similarity matrix C. The resulting clustering $\mathcal{C}$ very accurately captures the true underlying distributional similarities (in the toy example we are able to perfectly reconstruct the true clusters as shown at the lower righthand side of Fig. 5. We then perform Federated Learning only within the identified clusters as explained with respect to Fig. 9. The Clustered Federated Learning update rule used in steps 102 or, to be more precise in step 38 of each cycle 30 of each cluster specific learning 102 then becomes

$$\mathcal{W}_{i,new}^{CFL} = \mathcal{W}_0 + \frac{1}{\sum_{j \in \mathcal{C}(i)} |D_j|} \sum_{j \in \mathcal{C}(i)} |D_j| \Delta \mathcal{W}_j \tag{8}$$

This update rule generalizes both Federated Learning ($\to \mathcal{C}(i) = \{1,..,n\}$) and purely local training ($\to \mathcal{C}(i) = \{i\}$).
As to the dependence on hyperparameters the following can be said. In our experiments, we find that cosine similarity according to eq. 6 consistently achieves the highest correlation numbers, but it is of course possible to use different distance measures, which might be beneficial in certain situations. One alternative similarity measure is the *l2* similarity given by

$$C_{i,j}^{L2} = \exp(-\beta \parallel \Delta \mathcal{W}_i - \Delta \mathcal{W}_j) \parallel) \tag{9}$$

but other examples naturally exist, too.
Fig. 11 shows the correlation quality as a function of the number of local iterations, i.e. the number of cycles within each cluster 100 specific federated learning 102, the similarity measure, here l2 and cosine similarity, and the layer of the model. We find that: 1.) cosine similarity correlates better with the true underlying distribution similarity than l2 similarity, 2.) there is a sweet-spot of highest correlation somewhere between 32 and 256 local iterations, we empirically find that this sweet-spot always overlaps with the range of reasonable local iteration numbers for federated learning (this means that we usually don't have to alter the federated learning schedule to incorporate our method). 3.) the correlation varies when we compute C for different layers of the network. This means that domain knowledge can be used to improve the clustering, however is not necessary to obtain high enough correlation for a good clustering.
Another characteristic of the above outlined embodiments using parameter update similarities is that they generally do not harm performance whenever there are no clusters in the training data entities 88. Fig. 12 shows the cosine similarity matrices obtained in five different training settings on the CelebA problem (see experiment described further below) in which the number of hidden clusters is varied between 1 and 20. As we can see, if all clients belong to the same cluster, the cosine similarity matrix is very homogeneous. Using appropriate thresholds for the spectral clustering it can be ensured that in this situation all clients will be grouped into the same cluster. Consequently, applying our method has low potential for reducing the performance of the Federated Learning baseline, but high potential for giving significant performance improvement (see experiments 7, 8, 9, 10 below).
A neat property of parameter update similarity sensitive federated learning such as Clustered Federated Learning is that it can be applied even in privacy sensitive environments where only encrypted updates are communicated between clients and server. In the following we will sketch homomorphically encrypted Federated Learning, a protocol that allows for Federated Learning, even if the weight-updates have to remain private. More sophisticated encryption schemes for Federated Learning are given in [3] and can also be augmented with the embodiments for similarity sensitive federated learning such as Clustered Federated Learning having been discussed above.
Homeomorphic encryption refers to a class of encryption methods that allow to perform arithmetic operations on encrypted vectors. Let *(pk, sk, [], $\mathcal{H}$)* be a homomorphic encryption scheme with public key *pk,* secret key *sk* and computable operations $\mathcal{H}$ then

- everyone who knows the public key *pk* can encrypt: [v] = encrypt(v, *pk)*
- everyone who knows the secret key *sk* can decrypt: v = decrypt([v], *sk)*

- *everyone* can perform arithmetic operations e $\in$ $\mathcal{H}$ on encrypted vectors, e.g.

$$[v] + [w] = [v + w] \tag{10}$$

$$w] = [v * w] \quad (11)$$

**Homomorphic** encryption can be integrated into Federated Learning to fully conceal any information about the local client data from the server. When using homomorphic encryption, Federated Learning can be performed while guaranteeing that the server cannot infer a single bit of information about the client's data [3]. One communication round of homomorphically encrypted Federated Learning is illustrated in Fig. 13: In an initialization phase 150 all clients 14 exchange a keypair *(pk, sk)* between one another. Afterwards they perform regular Federated Learning 34 with the only difference being that they encrypt at 152 their local weight-updates before sending 36 them to server 12 using a homomorphic encryption scheme that allows addition. The server 12 receives only encrypted updates from the clients 14, however it is still able to perform the model averaging or merging such as according to eq. (5) in encrypted domain, as this only requires additions. After the averaging step 38, i.e. the merging, the server 12 broadcasts 32 the encrypted model average back to the clients 14, where they are decrypted 154 using the secret key *sk.*

The fact that parametrization dependent federated such as CFL can be applied even if the Clients only share encrypted weight-updates with the server as described above is described in more details now. In particular, this can be achieved because the scalar product is invariant under certain transformations of the input vectors. Possible approaches include:

- Exploiting that the dot product is rotation invariant:

$$C_{i,j} = \langle P\Delta\mathcal{W}_i, P\Delta\mathcal{W}_j \rangle \tag{12}$$

for any orthogonal matrix P. This can be used if Clients distrust the server but trust each other. All clients exchange a random seed, used to create the same random rotation matrix P, and then rotate their weight-update before communicating it.

- Exploiting the fact that any two random normal vectors are approximately orthogonal in high dimensions. For any independent normalized vectors $N_i, N_j \in \mathbb{R}^d$ it holds that:

$$\mathbb{E}[|\langle N_i, N_j \rangle|] = \mathcal{O}(\tfrac{1}{d}) \tag{13}$$

Therefore, in high dimensions

$$\langle \Delta\mathcal{W}_i + N_i, \Delta\mathcal{W}_j + N_j \rangle = \langle \Delta\mathcal{W}_i, \Delta\mathcal{W}_j \rangle + \underbrace{\langle \Delta\mathcal{W}_i, N_j \rangle}_{\approx 0} + \underbrace{\langle N_i, \Delta\mathcal{W}_j \rangle}_{\approx 0} + \underbrace{\langle N_i, N_j \rangle}_{\approx 0} \approx$$

$$\langle \Delta\mathcal{W}_i, \Delta\mathcal{W}_j \rangle = C_{i,j} \tag{14}$$

for any two independent random vectors $N_i$, $N_j$. This can be used if Clients distrust the server *and each other* as every client uses a different noise vector $N_i$. However, the resulting scalar products will be slightly distorted depending on the scale and dimensionality of the noise.

These approaches can also be combined with dimensionality reduction methods such as Locality-Sensitive Hashing. In general, we can say that a client can be characterized by its signature $\text{sig}_i$ which is a vector computed as outlined below, where

$$g_\xi: \mathbb{R}^d \to \mathbb{R}^{d\prime}, v \mapsto g_\xi(v) \tag{15}$$

is a function satisfying

- $$\langle g_\xi(v_1), g_\xi(v_2)\rangle \approx \langle v_1, v_2\rangle$$

- $$d' \leq d$$

- $v$ can not be inferred from $g_\xi(v)$

Using this signature, cluster membership can be inferred in an efficient and privacy preserving way as described above. If a client joins training at a later stage, his signature can be compared with those of all other clients and he can get assigned to e.g. the same cluster as the client that he is most similar to.

For compute the signature, i.e. the message informing on the parametrization update 90$_i$, <u>Client $C_i$</u> does:

- $$\mathcal{W}_i \leftarrow \text{download}_{S \rightarrow C_i}(\mathcal{W}_0)$$

- $$\Delta\mathcal{W}_i \leftarrow \text{SGD}_n(\mathcal{W}_i, D_i) - \mathcal{W}_i$$

- $$\text{sig}_i \leftarrow g_\xi\left(\frac{\Delta\mathcal{W}_i}{\|\Delta\mathcal{W}_i\|}\right)$$

For computing the initial Clustering, the <u>server does</u>:

- $$C_{k,l} \leftarrow \langle \text{sig}_k, \text{sig}_l \rangle, \forall k, l = 1, .., M$$

- $$\mathcal{C} \leftarrow \text{SpectralClustering}(C)$$

For assigning new Clients to the clusters, the server <u>does</u>:

- $$j_{new} \leftarrow \text{argmin}_{k=1,..,M} \leftarrow \langle \text{sig}_k, \text{sig}_{new} \rangle$$

- $$\mathcal{C}(j_{new}) \leftarrow \mathcal{C}(j_{new}) \cup \{M + 1\}$$

Another straight-forward application of embodiments of the present application making use of parametrization update similarity dependency such as CFL is the detection of malfunctioning and adversarial clients. In Fig. 14 are displayed the cosine-similarity matrices for 4 different unintended scenarios. In every scenario, 5 out of the total of 100 clients exhibit malfunctioning or adversarial behavior. For "randn" those clients send random updates, for "opposite-sign" those clients send $-\Delta\mathcal{W}$ instead of $\Delta\mathcal{W}$, for "one-point" those clients send the correct updates, but one element of the update is corrupted and set to a very high value and finally for "scaleup" those clients send $1000\Delta\mathcal{W}$ instead of $\Delta\mathcal{W}$. All unintended behaviors except for scale-up are easily detected by CFL. The respective malfunctioning clients will be automatically clustered into a separate group where they can no longer exert a negative influence on the training of the benign clients. The fact that we can automatically detect and handle a wide variety of malfunctioning and adversarial clients is another feature of above described embodiments that we get essentially for free.

In this context it is interesting to know that CFL can also be simplified to perform binary clustering, where there exist only two clusters: 1.) The cluster of 'benign' clients and 2.) the cluster of outliers/ malfunctioning clients/ adversaries. In this setting only one model is learned from the benign clients weight-updates while the updates from all other clients are discarded. To ensure continuous protection against negative influence from malfunctioning clients it is possible and advisable in this setting to repeat the binary clustering after *every* communication round. The threshold which determines whether a certain client will be classified as benign or adversarial can be chosen based on the number of available clients/ data or tracked training metrics. (If there are many clients with a lot of data available, we can be more picky in our choice of clients.)

Briefly summarizing the description of embodiments described so far, parametrization update similarity aware federated learning such as Clustered Federated Learning is more **flexible** then regular Federated Learning in dealing with a variety of system challenges. The above embodiments can be extended in many possible ways:

- a mechanism could be introduced to dynamically merge and split the client clusters based on different metrics that can be tracked during training

- one such metric could client feedback: a client that is accidentally assigned to the wrong cluster could report poor performance which could trigger a re-assignment to a different cluster

- if many clients report poor performance this could trigger a re-computation of the similarity matrix using different hyperparameters

- partial client participation can be easily incorporated into the framework

- adaptive clustering could also handle non-stationary data-distributions on the clients

Fig. 15 shows in form of a pseudo code a clustered federated learning embodiment involving static cluster association and the usage of homomorphic encryption for parametrization update upload. where the cluster membership is computed in the first round where t=1 and then kept fix for the subsequent cluster-separated training (t>1). Extensions of this static setup were sketched above. Regular CFL is obtained when all encryption and decryption steps are skipped. Note that the index c shall indicate the cluster or client group client i is associated with according to association C, 101. That is, in round t=1, each client 14 is provided with the parametrization $P_0$ at 170 and perform training thereon at 36 using, for instance, a steepest gradient descent algorithm (SGD), whereupon the clients 14 encrypt 152 their update 90 and upload to the server/apparatus 80 the encrypted update at 38. Then, the server/apparatus receives all these encrypted updates 90 at 172, i.e. gathers same, computes the similarities at 92 and performs the clustering based thereon at 98. The association C, 101, results. As shown, the updates 90 may immediately be used to derive first instantiations / states of the cluster specific parametrizations $\overline{P}_j$, namely for each group 100, at 174, namely by merging/averaging over the updates 90 received at 38. Then, the latter parametrizations are distributed at 32. Each client 14 is provided with the parametrization $\overline{P}_j$ of the cluster it belongs to. The following rounds t>1 in Fig. 15 relate to the cluster separate performance of the federated learning of the cluster specific parametrizations $\overline{P}_j$, 102. The clients 14 receive same at 32, the clients 14 decrypt it at 154; update their own version of the cluster specific parametrization $\overline{P}_j$ at 34 using the downloaded difference signal, whereupon the clients perform the local training at 36 to update their local parametrization which they then encrypt at 152 and upload at 38. At server/apparatus side, the updates 104 are gathered at 172, merged at 36 and the updated parametrizations $\overline{P}_j$ are broadcast at 32.

Fig. 15 shows that the similarity measurement may be performed on dimensionality reduced signatures instead of the whole update vectors. The reduction is performed at 134 (along with the corresponding upload at 180). As also shown, the download of $P_0$ may be done in encrypted domain sop that the clients decrypt same at 154.

Preliminary experiments have been performed on the Fashion-MNIST and CIFAR100 datasets.

**Experiment 1: Fashion-MNIST with rotated labels:** Fashion-MNIST contains 60000 28x28 grey-scale images of fashion items in 10 different categories. For the experiment we assign 500 random data-points to 100 different clients each. Afterwards we create 5 random permutations of the labels. Every Client permutes the labels of his local data using one of these five permutations. Consequently, the clients afterwards form 5 different groups with consistent labeling. This experiment models divergent label distributions $p_i(y|x)$. We train using Federated Learning, CFL as well as fully locally and report the accuracy and loss on the validation data for progressing communication rounds in Fig. 16a. As we can see CFL distinctively outperforms both local training and Federated Learning. Federated Learning performs very poorly in this situation as it is not able to fit the five contradicting distributions at the same time. Local training performs poorly, as the clients only have 500 data-points each and hence they overfit quickly on their training data as can be seen in plot where the validation loss increases after the 10th communication round.

**Experiment 2:** Classification on CIFAR-100: The CIFAR-100 dataset [8] consists of 50000 training and 10000 test images organized in a balanced way into 20 super classes ('fish', 'flowers', 'people',..) which we try to predict. Every instance of each super class also belongs to one of 5 sub classes ('fish' $\rightarrow$ 'ray', shark', 'trout', ..). We split the training data into 5 subsets, where the i-th subset contains all instances of the i-th sub class for every super class. We then randomly split each of these five subsets into 20 evenly sized shards and assign each of the resulting 100 shards to one client. As a result, the clients again form 5 different clusters, but now they vary based on what types of instances of every super class they hold. This experiment models divergent data distributions $p_i(x)$. We train a modern mobile-net v2 with batch-norm and momentum. Fig. 16b shows the resulting cosine similarity matrix and training curves for Federated Learning, local training and CFL. As we can see, the cosine similarity coincides very strongly with the true underlying clusters and CFL distinctively outperforms both Federated Learning and local training.

**Experiment 3: Language Modeling on AG-News:** The AG-News corpus is a collection of 120000 news articles belonging to one of the four topics 'World', 'Sports', 'Business' and 'Sci/Tech'. We split the corpus into 20 different sub-corpora of the same size, with every sub-corpus containing only articles from one topic and assign every corpus to one client. Consequently, the clients form four different clusters depending on what type of articles they hold. This experiment models text data and divergent joint distributions $p_i(x, y)$. Every Client trains a two-layer LSTM network to predict the next word on its local corpus of articles. Again, we compare CFL, Federated Learning and local training and observe in Fig. 16c that CFL finds the correct clusters and outperforms the two other methods.

**Experiment 4: Predicting Attractiveness on CelebA:** The CelebA dataset consists of 202599 128x128x3 images of celebrities. Every image has been multi-labeled for 40 different attributes ("male", "black hair", "heavy makeup",..), which creates a binary labeling vector $a \in \{0,1\}^{40}$. We try to predict the attractiveness given the image of a celebrity and assume that different groups of clients have different preferences. The preferences of one group i are encoded by a random vector $v_i \in \mathbb{R}^{40}$ and the final attractiveness for all clients with the same preference is computed via $y = \langle a, v_i \rangle$. We run an experiment with 20 clients and four different random preferences. The results are given in Fig. 16d. Again, CFL achieves vastly superior performance when compared to regular Federated Learning and also outperforms local training.

Experiments 1-4 demonstrate that CFL can be applied to a wide variety of realistic problems, neural network architectures (Conv Nets, LSTMs), data types (images, text) and drastically improves performance whenever the client's data exhibits some kind of clustering structure in either the data $p(x)$ (experiment 2), the labeling $p(y|x)$ (experiment 1, 4) or both $p(x, y)$ (experiment 3).

Briefly summarizing above presentation of embodiments and their advantages, federated learning is currently the most widely adopted Framework for collaborative training of (deep) machine learning models under privacy constraints. Albeit very popular, Federated Learning thus far has only been evaluated under idealistic assumptions on the clients data.

Hereinabove, we find that the performance of Federated Learning severely deteriorates in situations where the client data is drawn from divergent distributions, which are to be anticipated in real world applications. To address this problem, parametrization update similarity aware concepts may be used such as Clustered Federated Learning (CFL). CFL organizes clients into different groups based on the pairwise cosine similarity between their weight-updates and then performs Federated Averaging only within these groups. In both easy-to-analyze toy experiments and realistic large-scale experiments with modern deep learning models and high-dimensional image and text data it has been demonstrated that: (a) Cosine similarity-based clustering is able to uncover the true underlying similarities in client distributions with very high precision. (b) CFL outperforms both Federated Averaging and fully local training by a wide margin in situations where client distributions differ. (c) CFL is able to fully automatically detect and handle defective clients as well as (a wide range of) adversarial attacks. In contrast to other multi-task learning approaches CFL is communication-efficient, causes *negligible* computation and communication overhead for the clients, doesn't require domain knowledge or architectural changes in the model, and can be applied under cryptographic constraints.

Possible Applications are described below. Parametrization update similarity aware federated learning such as CFL can be applied wherever 1.) user data is privacy sensitive 2.) one single model is not able to capture all local distributions at the same time. Some applications include:

**Next-word prediction on Mobile Phones**

A very useful feature of modern smart phones is next-word prediction (e.g. in messaging apps): Given a typed sequence of words, the goal is to predict the next word of the sequence. A good next-word prediction service can speed up the composition of messages and thus greatly improve the user experience. Text messages are usually private, hence if we want to learn from a users messages we have to us Federated Learning. However, regular Federated Learning will likely fail to provide a good next-word prediction solution for all users, as different users might form clusters based on their messaging behavior. For example, teenagers will likely exhibit different messaging behavior than adults, etc.. Clustered Federated Learning provides a specialized model for each of the distinct groups and thus improves the performance.

**Recommender Systems**

Recommender systems try to give personalized recommendations while at the same time leveraging preferential data from a large number of clients. If user preferences are privacy sensitive (e.g. in dating apps) Federated Learning has to be employed to learn the preferential patterns. Clustered Federated Learning can be used to identify users with similar preferences and provide each of the separate groups with specialized recommendations.

**Medical Applications**

Medical Data is usually highly privacy sensitive. In many cases legal regulations even completely prohibit the exchange of data. Diagnostic solutions should on the one hand be personalized for every individual client, at the same time they should leverage data from as many patients as possible. CFL can help identify groups of patients with similar predispositions and provide individual diagnostic solution for each of the separate groups.

**Outlier detection**

Binary CFL for outlier detection can be added to any Federated Learning pipeline to prevent malfunctioning or adversarial clients from interfering with the global model.

It should be noted that the above description may be varied in order to yield apparatus and method for classifying clients using parameterization update similarities, namely simply by using the classification 101, i.e. the actual federal learning client group wise would be made an optional subsequent, external task, and apparatus and method for training data similarity measuring training data similarities, namely simply by using similarity measure between parametrization updates derived therefrom via local training 36. All the details described above, as far as they relate to tasks used by the modified embodiments, are individually transferrable onto such modified embodiments.

The above description shall in the following be extended by a presentation of more specific embodiments related to the already above outlined aspect according to which the split of the clients into client groups is intermittently repeated or adjusted. As described, such adjustment may be initiated in order to account for joining additional clients, but irrespective of that, the following will show that even with a constant number of clients, it is advantageous to perform the client grouping by way of a sequential distribution of the plurality of clients onto an increasing number of client groups, namely by an iterative approach of, for each iteration, client-separated federated learning within each client group followed by testing whether the respective client group, after having learned an improved neural network parametrization - improved with respect to the respective client group's data statistic - should be split, such a bi-split in two client groups, or not. By this measure, an improved client grouping compared to trying to find the clustering all at once may be attained.

In order to ease the understanding of the advantages of performing the clustering by such as iterative splitting approach, we again start with describing the underlying problems in the field of federated learning.

Federated Learning [a1][a2][a3][a4][a5] is a distributed training framework, which allows multiple clients (typically mobile or IoT devices) to jointly train a single deep learning model on their combined data in a communication-efficient way, without requiring any of the participants to reveal their private training data to a centralized entity or to each other. Federated Learning realizes this goal via an iterative three-step protocol where in every communication round t, the clients first synchronize with the server by downloading the latest master model $\theta_t$. Every client then proceeds to improve the downloaded model, by performing multiple iterations of stochastic gradient descent with mini-batches sampled from it's local data $D_i$, resulting in a weight-update vector

$$\Delta\theta_i^{t+1} = \mathrm{SGD}_k(\theta^t, D_i) - \theta^t, i = 1,..,m \qquad (a1)$$

Finally, all clients upload their computed weight-updates to the server, where they are aggregated by weighted averaging according to

$$\theta^{t+1} = \theta^t + \sum_{i=1}^m \frac{|D_i|}{|D|} \Delta\theta_i^{t+1} \qquad (a2)$$

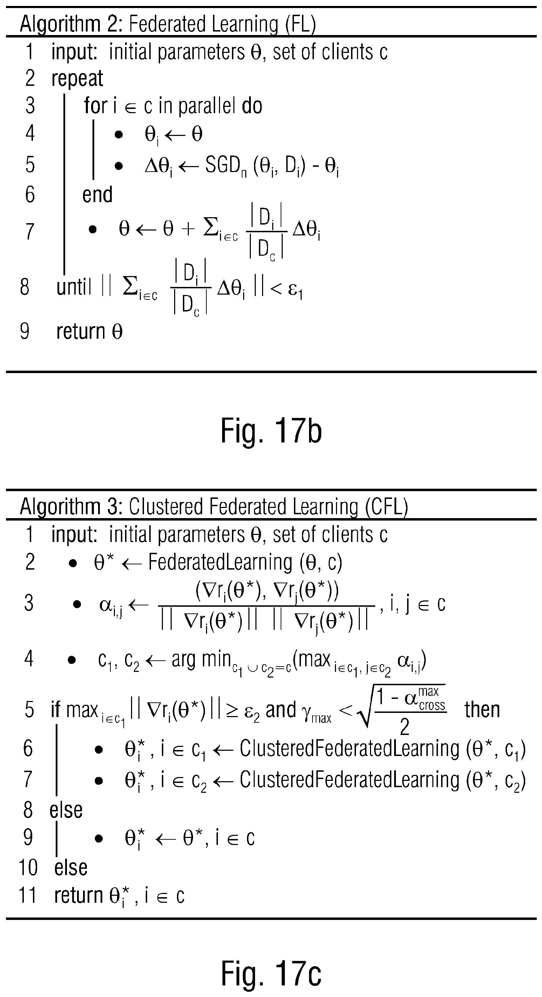

to create the next master model. The procedure is summarized in Algorithm 2 in Fig. 17b.

Federated Learning implicitly makes the assumption that it is possible for one single model to fit all client's data

generating distributions $\varphi_i$ at the same time. Given a model $f_\theta: X \to Y$ parametrized by $\theta \in \Theta$ and a loss function $l: \mathcal{Y} \times \mathcal{Y} \to \mathbb{R}_{\geq 0}$ we can formally state this assumption as follows:

**Assumption a1 *("Conventional Federated Learning"):*** *There exists a parameter configuration $\theta^*$ E $\Theta$, that (locally) minimizes the risk on all clients' data generating distributions at the same time*

$$R_i(\theta^*) \leq R_i(\theta) \forall \theta \in B_\varepsilon(\theta^*), i = 1,..,m \qquad \text{(a3)}$$

Hereby

$$R_i(\theta) = \int l(f_\theta(x), y) d\varphi_i(x, y) \qquad \text{(a4)}$$

is the risk function associated with distribution $\varphi_i$.

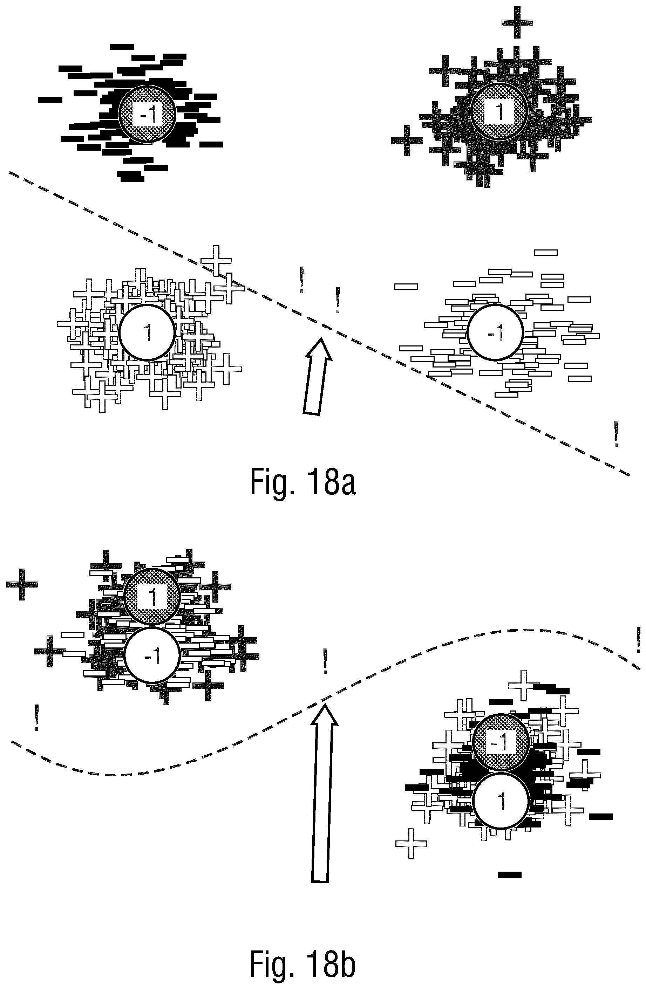

It is easy to see that this assumption is not always satisfied. Concretely it is violated if either (a) clients have disagreeing conditional distributions $\varphi_i(y|x) \neq \varphi_j(y|x)$ or (b) the model $f_\theta$ is not expressive enough to fit all distributions at the same time. Simple counter examples for both cases are presented in Fig. 18 a,b.

Fig. 18a,b illustrate two toy cases in which the Federated Learning Assumption is violated, namely the clients' models prediction behavior after having jointly learned one model. Points shown with continuous (blue) lines belong to clients from a first cluster while dotted (orange) points belong to clients from a second cluster. Fig. 18a illustrates the federated XOR-problem. An insufficiently complex model is not capable of fitting all clients' data distributions at the same time. If, as shown in Fig. 18b, different clients' conditional distributions diverge, *no model* can fit all distributions at the same time. In both cases the data on clients belonging to the same cluster could be easily separated.

In the following we will call two clients and their distributions $\varphi_i$ and $\varphi_j$ *congruent* (with respect to *f* and *l*) if they satisfy Assumption 1 and *incongruent* if they don't.

Assumption 1 is frequently violated in real Federated Learning applications, especially given the fact that in Federated Learning clients (a) can hold arbitrary non-iid data, which can not be audited by the centralized server due to privacy constraints and (b) typically run on limited hardware which puts restrictions on the model complexity. For illustration consider the following practical scenarios:

*Varying Preferences:* Assume a scenario where every client holds a local dataset of images of human faces and the goal is to train an 'attractiveness' classifier on the joint data of all clients. Naturally, different clients will have varying opinions about the attractiveness of certain individuals, which corresponds to disagreeing conditional distributions on all clients' data. Assume for instance that one half of the client population thinks that people wearing glasses are attractive, while the other half thinks that those people are unattractive. In this situation one single model will *never be* able to accurately predict attractiveness of glasses-wearing people for all clients at the same time.

*Limited Model Complexity:* Assume a number of clients are trying to jointly train a language model for next-word prediction on private text messages. In this scenario the statistics of a clients text messages will likely vary a lot based on demographic factors, interests, etc. For instance, text messages composed by teenagers will typically exhibit different statistics than those composed by elderly people. In this situation, an insufficiently expressive model will not be able to fit the data of all clients at the same time.

*Presence of Adversaries:* A special case of incongruence is given, if a subset of the client population behaves in an adversarial manner. In this scenario the adversaries could deliberately alter their local data distribution in order to encode arbitrary behavior into the jointly trained model, thus affecting the model decisions on all other clients and causing potential harm.

The goal in Federated Multi-Task Learning is to provide every client with a model that optimally fits it's local data distribution. In all of the above described situations the ordinary Federated Learning framework, in which all clients are treated equally and only one single global model is learned, is not capable of achieving this goal.

In order to incorporate the above presented problems with incongruent data generating distributions, we suggest to generalize the conventional Federated Learning Assumption: **Assumption a2 *("Clustered Federated Learning"):***

*There exists a partitioning $\mathcal{C} = \{c_1,..,c_k\}, \bigcup_{i=1}^{k} c_k = \{1,..,m\}$ of the client population, such that every subset of clients c $\in$ C satisfies the conventional Federated Learning Assumption.*

We already learnt from the above described embodiments that the cosine similarity between the clients' gradient updates forms a computationally efficient tool that *provably* allows us to infer whether two members of the client population have the same data generating distribution, thus making it possible for us to infer the clustering structure $\mathcal{C}$. Based on the theoretical insights given below we present an embodiment for Clustered Federated Learning which makes use of adaptations of the clustering. Thereafter, we address **implementation** details and demonstrate that the embodiment can be implemented without making severe modifications to an existing Federated Learning communication protocol. Just as the embodiments presented above, the embodiment described hereinbelow may be implemented in a privacy preserving way and is flexible enough to handle fluctuating client populations. Finally, extensive experiments on a variety of convolutional and recurrent neural networks applied to common Federated Learning datasets are presented.

As already outlined above, addressing the question of how to solve distributed learning problems that satisfy Assumption a2 (which generalizes the Federated Learning Assumption a1), requires us to first identify the correct partitioning $\mathcal{C}$, which at first glance seems like a daunting task, as under the Federated Learning paradigm the server has no access to the clients data, their data generating distributions or any meta information thereof. However, as shown above, there exists a explicit criterion based on which the clustering structure can be inferred, namely, for instance, the cosine similarity measure discussed above.

To see this, let us first look at the following simplified Federated Learning setting with m clients, in which the data on every client was sampled from one of two data generating distributions $\varphi_1$, $\varphi_2$ such that

$$D_i \sim \varphi_{I(i)}(x, y). \tag{a5}$$

Every Client is associated with an empirical risk function

$$r_i(\theta) = \sum_{x \in D_i} l_\theta(f(x_i), y_i) \tag{a6}$$

which approximates the true risk arbitrarily well if the number of data points on every client is sufficiently large

$$r_i(\theta) \approx R_{I(i)}(\theta) := \int_{x,y} l_\theta(f(x), y) d\varphi_{I(i)}(x, y). \tag{a7}$$

For demonstration purposes let us first assume equality. Then the Federated Learning objective becomes

$$F(\theta) := \sum_{i=1}^{m} \frac{|D_i|}{|D|} r_i(\theta) = a_1 R_1(\theta) + a_2 R_2(\theta) \tag{a8}$$

with $a_1 = \sum_{i, I(i)=1} |D_i|/|D|$ and $a_2 = \sum_{i, I(i)=2} |D_i|/|D|$. Under standard assumptions it has been shown [a6] that the Federated Learning optimization protocol described in equations (a1) and (a2) converges to a stationary point $\theta^*$ of the Federated Learning objective. In this point it holds that

$$0 = \nabla F(\theta^*) = a_1 \nabla R_1(\theta^*) + a_2 \nabla R_2(\theta^*) \tag{a9}$$

Now we are in one of two situations. Either it holds that $\nabla R_1(\theta^*) = \nabla R_2(\theta^*) = 0$, in which case we have simultaneously minimized the risk of all clients. This means $\varphi_1$ and $\varphi_2$ are congruent and we have solved the distributed learning problem. Or, otherwise, it has to hold

$$\nabla R_1(\theta^*) = -\frac{a_2}{a_1} \nabla R_2(\theta^*) \neq 0 \tag{a10}$$

and $\varphi_1$ and $\varphi_2$ are incongruent. In this situation the *cosine similarity* between the gradient updates of any two clients is given by

$$\alpha(\nabla r_i(\theta^*), \nabla r_j(\theta^*)) := \frac{\langle \nabla r_i(\theta^*), \nabla r_j(\theta^*) \rangle}{\|\nabla r_i(\theta^*)\| \|\nabla r_j(\theta^*)\|} \tag{a11}$$

$$= \frac{\langle \nabla R_{I(i)}(\theta^*), \nabla R_{I(j)}(\theta^*) \rangle}{\|\nabla R_{I(i)}(\theta^*)\| \|\nabla R_{I(j)}(\theta^*)\|} \tag{a12}$$

$$= \begin{pmatrix} 1 & \text{if } I(i) = I(j) \\ -1 & \text{if } I(i) \neq I(j) \end{pmatrix} \tag{a13}$$

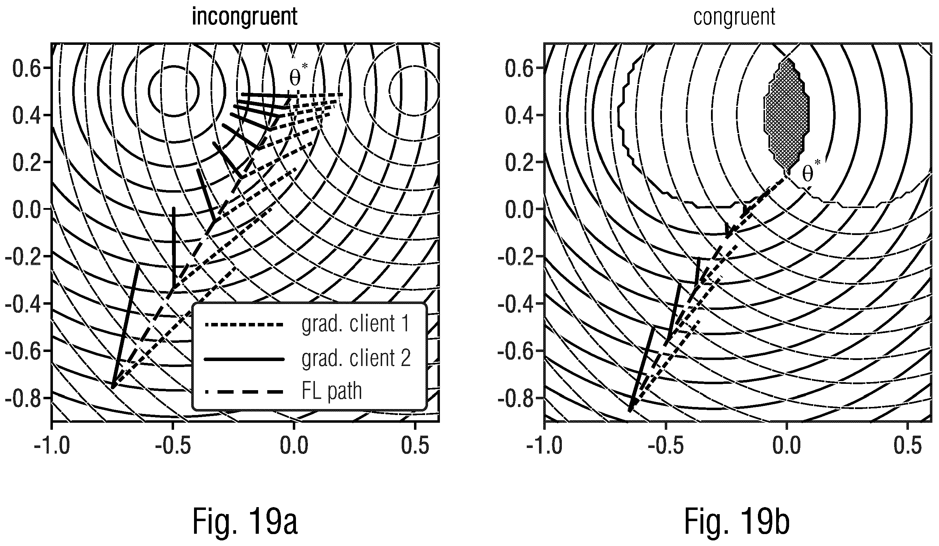

This insightful consideration tells us that, in a stationary solution of the Federated Learning objective $\theta^*$, we can *distinguish clients based on their hidden data generating distribution only by inspecting the cosine similarity between their gradient updates.* For a visual illustration of the result we refer to Figure 19a,b.

Fig. 19a and 19b show the optimization paths of Federated Learning with two clients, applied to two different toy problems with incongruent (19a) and congruent (19b) risk functions. In the incongruent case Federated Learning converges to a stationary point of the FL objective where the gradients of the two clients are of positive norm and point into opposite directions. In the congruent case there exists an area (marked shaded in Fig. 19b) where both risk functions are minimized. If Federated Learning converges to this area the norm of both client's gradient updates goes to zero. By inspecting the gradient norms the two cases can be distinguished.

If we drop the equality assumption in (a7) and allow for an arbitrary number of data generating distributions, we obtain the following generalized version of result (a13):

**Definition a3.1** *Let* $m \geq k$ *and*

$$I: \{1,..,m\} \to \{1,..,k\}, i \mapsto I(i) \tag{a14}$$

be the mapping that assigns a client $i$ to it's data generating distribution $\varphi_{I(i)}$ Then we call a bi-partitioning $c_1 \overset{\cdot}{\cup} c_2 = \{1,..,m\}$ *correct* if and only if

$$I(i) \neq I(j) \forall i \in c_1, j \in c_2. \tag{a15}$$

**Theorem a3.1 (Separation Theorem)** *Let* $D_1,.., D_m$ *be the local training data of m different clients, each dataset sampled from one of k different data generating distributions* $\varphi_1,.., \varphi_k$, *such that* $D_i \sim \varphi_{I(i)}(x, y)$. *Let the empirical risk on every client approximate the true risk at every stationary solution of the Federated Learning objective* $\theta^*$ *s.t.*

$$\| \nabla R_{I(i)}(\theta^*) \| > \| \nabla R_{I(i)}(\theta^*) - \nabla r_i(\theta^*) \| \tag{a16}$$

and define

$$\gamma_i := \frac{\|\nabla R_{I(i)}(\theta^*) - \nabla r_i(\theta^*)\|}{\|\nabla R_{I(i)}(\theta^*)\|} \in [0,1) \tag{a17}$$

Then there exists a bi-partitioning $c_1 \cup c_2 = \{1,..,m\}$ of the client population such that that the maximum similarity between the updates from any two clients from different clusters can be bounded from above according to

$$\alpha_{cross}^{max} := \max_{i \in c_1, j \in c_2} \alpha(\nabla r_i(\theta^*), \nabla r_j(\theta^*)) \tag{a18}$$

$$\leq \begin{pmatrix} \cos(\frac{\pi}{k-1})H_{i,j} + \sin(\frac{\pi}{k-1})\sqrt{1 - H_{i,j}^2} & \text{if} H \geq \cos(\frac{\pi}{k-1}) \\ 1 & \text{else} \end{pmatrix} \tag{a19}$$

with

$$H_{i,j} = -\gamma_i \gamma_j + \sqrt{1 - \gamma_i^2}\sqrt{1 - \gamma_j^2} \in (-1,1]. \tag{a20}$$

At the same time the similarity between updates from clients which share the same data generating distribution can be bounded from below by

$$\alpha_{intra}^{min} := \min_{\substack{i,j \\ I(i)=I(j)}} \alpha(\nabla_\theta r_i(\theta^*), \nabla_\theta r_j(\theta^*)) \geq \min_{\substack{i,j \\ I(i)=I(j)}} H_{i,j}. \tag{a21}$$

The proof of Theorem a3.1 can be found further below at the end of the description.

Remark a1 *In the case with two data generating distributions (k = 2) the result simplifies to*

$$\alpha_{cross}^{max} = \max_{i \in c_1, j \in c_2} \alpha(\nabla_\theta r_i(\theta^*), \nabla_\theta r_j(\theta^*)) \leq \max_{i \in c_1, j \in c_2} - H_{i,j} \tag{a22}$$

for a certain partitioning, respective

$$\alpha_{intra}^{min} = \min_{\substack{i,j \\ I(i)=I(j)}} \alpha(\nabla_\theta r_i(\theta^*), \nabla_\theta r_j(\theta^*)) \geq \min_{\substack{i,j \\ I(i)=I(j)}} H_{i,j} \tag{a23}$$

for two clients from the same cluster. If additionally $\gamma_i = 0$ for all i = 1,.., m then $H_{i,j} = 1$ and we retain result (a13).

From Theorem a3.1 we can directly deduce an optimal separation rule:

Corollary 1 *If in Theorem a3.1 k and* $\gamma_i$, *i = 1,.., m are in such a way that*

$$\alpha_{intra}^{min} > \alpha_{cross}^{max} \tag{a24}$$

*then the partitioning*

$$c_1, c_2 \leftarrow \arg\min_{c_1 \cup c_2 = c} \left( \max_{i \in c_1, j \in c_2} \alpha_{i,j} \right). \tag{a25}$$

*is always correct in the sense of Definition a3.1.*

*Proof.* Set

$$c_1, c_2 \leftarrow \arg\min_{c_1 \cup c_2 = c} \left( \max_{i \in c_1, j \in c_2} \alpha_{i,j} \right) \tag{a26}$$

and let $i \in c_1, j \in c_2$ then

$$\alpha_{i,j} \leq \alpha_{cross}^{max} < \alpha_{intra}^{min} = \min_{\substack{i,j \\ I(i)=I(j)}} \alpha_{i,j} \tag{a27}$$

and hence *i* and *j* can not have the same data generating distribution.

**Definition a3.2** (Separation Gap) *Given a cosine-similarity matrix* $\alpha$ *and a mapping from client to data generating distribution I we define the separation gap*

$$g(\alpha) := \alpha_{intra}^{min} - \alpha_{cross}^{max} \tag{a28}$$

$$= \min_{\substack{i,j \\ I(i)=I(j)}} \alpha_{i,j} - \min_{c_1 \cup c_2 = c} \left( \max_{i \in c_1, j \in c_2} \alpha_{i,j} \right) \tag{a29}$$

By Corollary a1 CFL will provide a correct bi-partitioning in the sense of Definition a3.1 if and only if the separation gap is greater than zero.

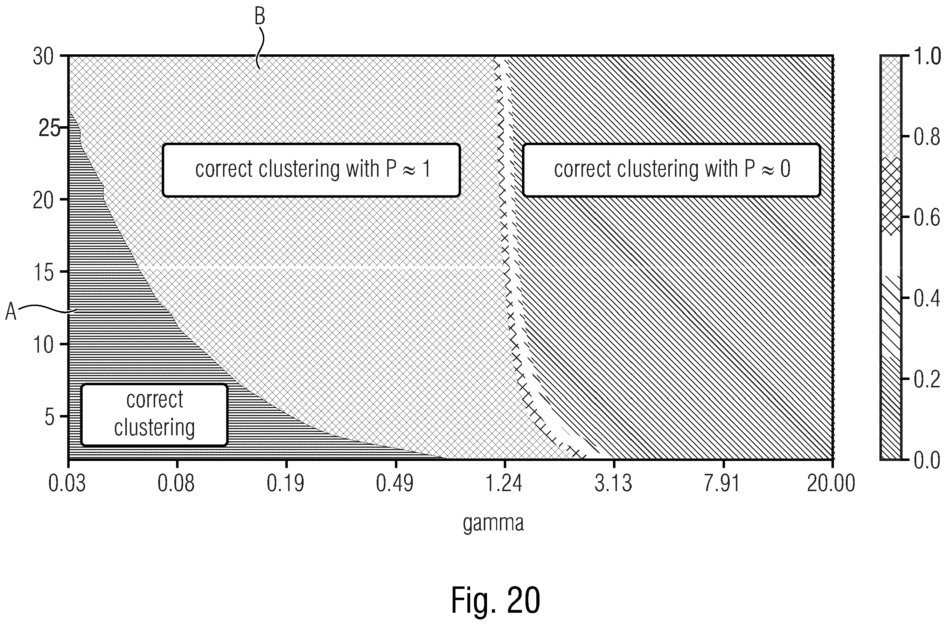

Theorem a3.1 gives an estimate for the similarities in the *absolute worst-case*. In practice $\alpha_{intra}^{min}$ typically will be much larger and $\alpha_{cross}^{max}$ typically will be much smaller, especially if the parameter dimension d is large! For instance, if we set d = $10^2$ (which is many orders of magnitude smaller than typical modern neural networks), m = 3k, and assume $\nabla R_{I(i)}(\theta^*)$ and $\nabla R_{I(i)}(\theta^*) - \nabla r_j(\theta^*)$ to be normally distributed for all *i* = 1,.., *m* then experimentally we find, as derivable from Fig. 20, that

$$P[\text{"CorrectClustering"}] = P[\alpha_{intra}^{min} > \alpha_{cross}^{max}] \approx 1 \tag{a30}$$

even for large values of *k* > 10 and *y:* = $\max_{i=1,..,m} \gamma_i$ > 1. This means that using the cosine similarity criterion we can find a correct bi-partitioning $c_1, c_2$ even if the number of data generating distributions is high and the empirical risk on every client's data is only a very loose approximation of the true risk.

Fig. 20 shows the clustering quality as a function of the number of data generating distributions *k* and the relative approximation noise *y*. For all values of *k* and *y* in the area A, CFL will *always* correctly separate the clients (Theorem a3.1). For all values of *k* and *y* in area B we find empirically that CFL will correctly separate the clients with probability close to 1.

In order to truly generalize the classical Federated Learning setting, we need to make sure that Clustered Federated Learning only splits up clients with incongruent data distributions. In the classical congruent non-iid Federated Learning setting described in [a1] where one single model can be learned, performance will typically degrade if clients with varying distributions are separated into different clusters due to the restricted knowledge transfer between clients in different clusters. Luckily we have a criterion at hand to distinguish the two cases. To realize this we have to take a look at the gradients computed by the clients at a stationary point $\theta^*$. When client distributions are incongruent, the stationary solution of the Federated Learning objective by definition can not be stationary for the individual clients. Hence the norm of the clients' gradients has to be strictly greater than zero. If conversely the client distributions are congruent, Federated optimization will converge to a stationary point of all clients' local risk functions and hence the norm of the clients' gradients will tend towards zero as we are approaching the stationary point. Based on this observation we can formulate the following criteria which allow us make the decision whether to split or not: Splitting should only take place if it holds that both (a) we are close to a stationary point of the FL objective

$$0 \leq \parallel \sum_{i\in c} \frac{D_i}{|D_c|} \nabla_\theta r_i(\theta^*) \parallel < \varepsilon_1 \tag{a31}$$

and (b) the individual clients are far from a stationary point of their local empirical risk

$$\max_{i\in c} \parallel \nabla_\theta r_i(\theta^*) \parallel > \varepsilon_2 > 0 \tag{a32}$$

Fig. 19a,b give a visual illustration of this idea for a simple two dimensional problem. We experimentally verify the clustering criteria below.

In practice we have another viable option to distinguish the congruent from the incongruent case. As splitting will only be performed after Federated Learning has converged to a stationary point, we always have computed the conventional Federated Learning solution as part of Clustered Federated Learning. This means that if after splitting up the clients a degradation in model performance is observed, it is always possible to fall back to the Federated Learning solution. In this sense Clustered Federated Learning will always improve the Federated Learning performance (or perform equally well at worst).

Thus, in accordance with the embodiment just having been motivated, Clustered Federated Learning recursively bi-partitions the client population in a top-down way: Starting from an initial set of clients c = {1,..,m} and a parameter initialization $\theta_0$, CFL performs Federated Learning according to Algorithm 2 in Fig. 17b, in order to obtain a stationary solution $\theta^*$ of the FL objective. After Federated Learning has converged, the stopping criterion

$$0 \leq \max_{i\in c} \parallel \nabla_\theta r_i(\theta^*) \parallel < \varepsilon_2 \tag{a33}$$

is evaluated. If criterion (a32) is satisfied, we know that all clients are sufficiently close to a stationary solution of their local risk and consequently CFL terminates, returning the FL solution $\theta^*$. If on the other hand, criterion (a32) is violated, this means that the clients are incongruent and the server computes the pairwise cosine similarities $\alpha$ between the clients' latest transmitted updates according to equation (a13). Next, the server separates the clients into two clusters in such a way that the maximum similarity between clients from different clusters is minimized

$$c_1, c_2 \leftarrow \arg\min_{c_1 \cup c_2 = c} (\max_{i\in c_1, j\in c_2} \alpha_{i,j}). \tag{a34}$$

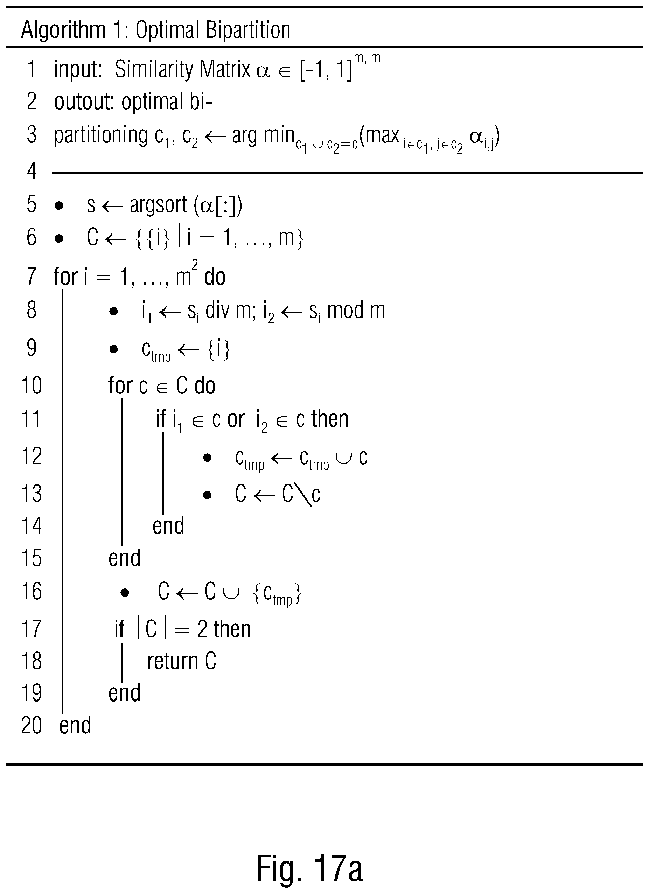

This optimal bi-partitioning problem at the core of CFL can be solved in $\mathcal{O}(m^3)$ using Algorithm 1 in Fig. 17a. Since in Federated Learning it is assumed that the server has far greater computational power than the clients the overhead of clustering will typically be negligible.

As derived above, a correct bi-partitioning can always be ensured if it holds that

$$\alpha_{intra}^{min} > \alpha_{cross}^{max}. \tag{a35}$$

While the optimal cross-cluster similarity $\alpha_{cross}^{max}$ can be easily computed in practice, computation of the intra cluster similarity requires knowledge of the clustering structure and hence $\alpha_{intra}^{min}$ can only be estimated using Theorem a3.1 according to

$$\alpha_{intra}^{min} \geq \min_{\substack{i,j \\ I(i)=I(j)}} -\gamma_i\gamma_j + \sqrt{1-\gamma_i^2}\sqrt{1-\gamma_j^2} \tag{a36}$$

$$\geq 1 - 2 \max_{i=1,..,m} \gamma_i^2. \tag{a37}$$

Consequently we know that the bi-partitioning will be correct if

$$\gamma_{max} := \max_{i=1,..,m} \gamma_i < \sqrt{\frac{1-\alpha_{cross}^{max}}{2}}. \tag{a38}$$

independent of the number of data generating distributions k!

CFL is then recursively re-applied to each of the two separate groups starting from the stationary solution $\theta^*$. Splitting recursively continues on until (after at most k - 1 recursions) none of the sub-clusters violate the stopping criterion anymore, at which point all groups of mutually congruent clients C = $\{c_1,.., c_k\}$ have been identified, and the clustered Federated Learning problem characterized by Assumption a2 is solved. The entire recursive procedure is presented in Algorithm 3 in Fig. 3 in Fig. 17c.

Theorem a3.1 makes a statement about the cosine similarity between *gradients* of the empirical risk function. In Federated Learning however, due to constraints on both the memory of the client devices and their communication budged, instead commonly weight-updates as defined in (1) are computed and communicated. In order to deviate as little as possible from the classical Federated Learning algorithm it would hence be desirable to generalize result a3.1 to weight-updates. It is commonly conjectured (see e.g. [a18]) that accumulated mini-batch gradients approximate the full-batch gradient of the objective function. Indeed, for a sufficiently smooth loss function and low learning rate, a weight update computed over one epoch approximates the direction of the true gradient since by Taylor approximation we have

$$\nabla_\theta r(\theta_\tau + \eta \Delta\theta_{\tau-1}, D_\tau) \tag{a39}$$

$$= \nabla_\theta r(\theta_\tau, D_\tau) + \eta \Delta\theta_{\tau-1} \nabla_\theta^2 r(\theta_\tau, D_\tau) + \mathcal{O}(\| \eta \Delta\theta_{\tau-1} \|^2) \tag{a40}$$

$$= \nabla_\theta r(\theta_\tau, D_\tau) + R \tag{a41}$$

where R can be bounded in norm. Hence, by recursive application of the above result it follows

$$\Delta\theta = \sum_{\tau=1}^{T} \nabla_\theta r(\theta_\tau, D_\tau) \approx \sum_{\tau=1}^{T} \nabla_\theta r(\theta_1, D_\tau) = \nabla_\theta r(\theta_1, D). \tag{a42}$$

Henceforth we will compute cosine similarities between weight-updates instead of gradients according to

$$\alpha_{i,j} := \frac{\langle \Delta\theta_i, \Delta\theta_j \rangle}{\|\Delta\theta_i\| \|\Delta\theta_j\|}, i, j \in c \tag{a43}$$

Our experiments below will demonstrate that computing cosine similarities based on weight-updates in practice achieves *even better* separations than computing cosine similarities based on gradients.

Every machine learning model carries information about the data it has been trained on. For example the bias term in the last layer of a neural network will typically carry information about the label distribution of the training data. Different authors have demonstrated that information about a client's input data can be inferred from the weight-updates it sends to the server via model inversion attacks [a19][a20][a21]. In privacy sensitive situations it might be necessary to prevent this type of information leakage from clients to server with mechanisms like the ones presented in [a3]. Luckily, Clustered Federated Learning can be easily augmented with an encryption mechanism that achieves this end. As both the cosine similarity between two clients' weight-updates and the norms of these updates are invariant to orthonormal transformations P (such as permutation of the indices),

$$\frac{\langle \Delta\theta_i, \Delta\theta_j \rangle}{\|\Delta\theta_i\| \|\Delta\theta_j\|} = \frac{\langle P\Delta\theta_i, P\Delta\theta_j \rangle}{\|P\Delta\theta_i\| \|P\Delta\theta_j\|} \tag{a44}$$

a simple remedy is for all clients to apply such a transformation operator to their updates before communicating them to the server. After the server has averaged the updates from all clients and broadcasted the average back to the clients they simply apply the inverse operation

$$\Delta\theta = \frac{1}{n} \sum_{i=1}^{n} \Delta\theta_i = P^{-1}\left(\frac{1}{n} \sum_{i=1}^{n} P\Delta\theta_i\right) \tag{a45}$$

and the Federated Learning protocol can resume unchanged. Other multi-task learning approaches can not be used together with encryption, which gives an distinct advantage to CFL in privacy sensitive situations.

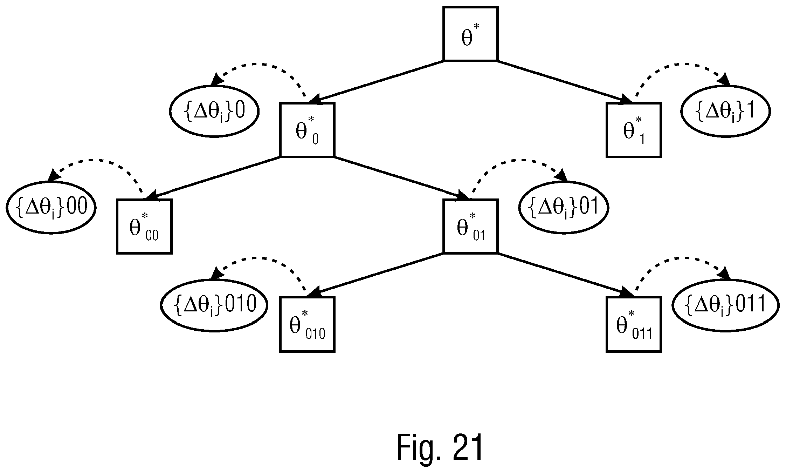

Clustered Federated Learning is flexible enough to handle client populations that vary over time. When a new Client joins the training it can be assigned to a cluster by following a simple iterative protocol. In order to incorporate this functionality, the server needs to build a parameter tree and cache the stationary pre-split models of every branch as illustrated in Figure 21. When a new client is joining the training it can get assigned to a leaf cluster by iteratively traversing the parameter tree from the root to a leaf, always moving to the branch which contains the more similar client updates.

Fig. 21 shows an exemplary parameter tree created by Clustered Federated Learning. At the root node resides the conventional Federated Learning model, obtained by converging to a stationary point $\theta^*$ of the FL objective. In the next layer, the client population has been split up into two groups, according to their cosine similarities and every subgroup has again converged to a stationary point $\theta_0^*$ respective $\theta_1^*$. Branching continues recursively until no stationary solution satisfies the splitting criteria. In order to quickly assign new clients to a leaf model, at each branch of the tree the server can cache the weight updates of all clients belonging to the two different sub-branches. This way the new client can be moved down the tree along the path of highest similarity.

Another feature of building a parameter tree is that it allows the server to provide every client with *multiple* models at varying specificity. On the path from root to leaf, the models get more specialized with the most general model being the FL model at the root. Depending on application and context, a CFL client could switch between models of different generality. Furthermore a parameter tree allows us to ensemble multiple models of different specificity together. We believe that investigations along those lines are a promising direction of future research.

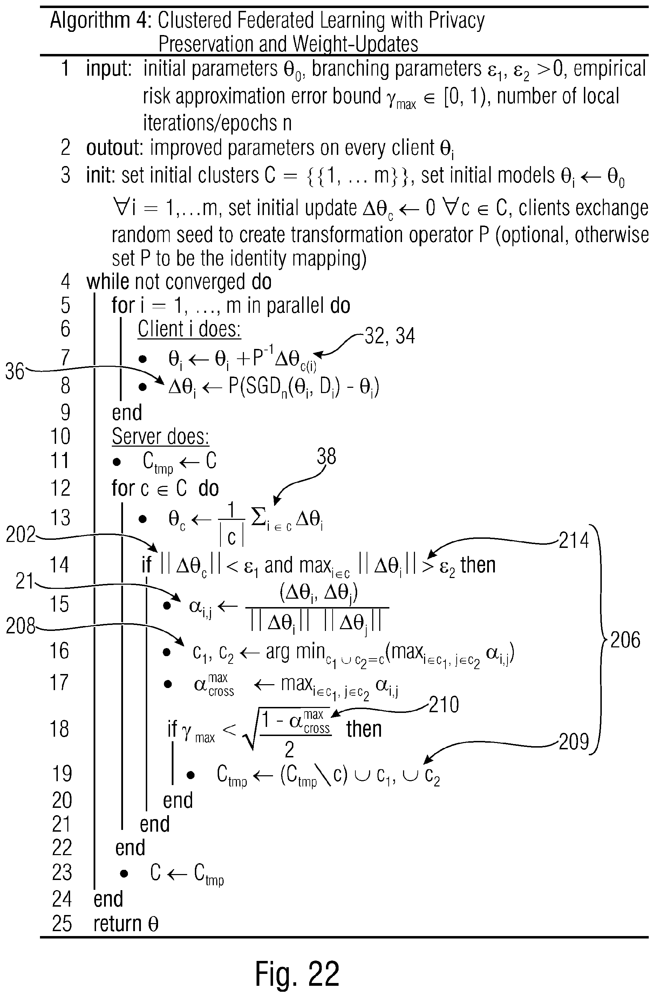

Putting all pieces from the previous sections together, we arrive at a protocol for general privacy-preserving CFL which is described in Algorithm 4 in Fig. 22.

Here, according to Fig. 22, federated learning of a neural network by clients i takes place as follows. From the clients *i*, parametrization updates, i.e. $\Delta\theta_i$, are sent from the client to the server and received by the server at 36. They all relate to a predetermined parametrization of the neural network, i.e. a current parametrization $\theta_i$. In other words, each client *i* forms its update $\Delta\theta_i$ based on its parametrization for the current round, namely $\theta_i$ which the respective client is provided with by a download from the server at 32. As all clients i are assumed to belong, at the beginning, to one common group $c_i = c_j$ for all clients *i,j,* i.e. at the beginning the set $C$ of client groups is assumed, for instance, to comprise merely one group, $\theta_i$ is the same for all clients i in the first round. To be more precise, in download 32, each client i receives the update on the parametrization by download 32 from the server with respect to the parametrization $\theta_{c(i)}$ of the client group *c(i)* which same client i is belongs to. As illustrated in Fig. 22, each client $c_i$ might receive the current round's parametrization is form of an update, i.e. difference to the previous round's parametrization, and update 34 its parametrization of the previous round by itself. Further, the download from the server might be privacy protected via a privacy function P, and accordingly, each client might send its locally learnt parametrization difference, i.e. the difference in line 8 at 36 in Fig. 22, to the server privacy protected via function P to the server, but the protection is merely optional as often mentioned herein.

Then, federated learning of the neural network depending on similarities between the parametrization updates takes place in the following as follows. The server merges the parametrization updates at 38 for each client group c within $C$ - again, in for the first round we assume C to comprise merely one client group - and checks whether the parametrization updates fulfill a predetermined criterion at 202. If this is not the case, the parametrization updates are used for federated learning of the neural network. That is, the clients are left within the client group the belonged to before. The next round starts wherein the merged update for each client group is downloaded to the clients at 32.

If the parametrization updates fulfill the predetermined criterion as tested at 202, however, the plurality of clients is split at 206 into a fixed number of client groups, here two, depending on the similarities between the parametrization updates.

The predetermined criterion 202 may check whether the parametrization updates fulfill a predetermined convergence or stationary criterion as shown in Fig. 22 and as discussed herein. That is, for each current client group $c_i$ - at the beginning there is merely one - it is tested in 202 whether the merged update or a mean or average of all parametrization updates from the clients belonging to that client group, is smaller than a predetermined threshold $\varepsilon_1$. This suggests that convergence has been reached for that client group. Note that splitting this client group might still be worthwhile. Merely in case of the parametrization updates suggesting that the federated learning for the client group has reached some convergence or reaches, by more than a predetermined amount $\varepsilon_1$, a convergence parametrization, then the criterion 202 is met. Alternatively, the predetermined criterion 202 may simply check whether the parametrization updates belong to an $n^{th}$ round of the federated learning of the neural network since existence of that current group c of clients C, i.e. since being unsplit, i.e. that the $n^{th}$ round has been reached, assuming that then convergence has been reached after n rounds without testing that explicitly.

As the criterion 202 merely tells us that the current client group may not efficiently be further improved when treated as one client group, additionally - as shown in Fig. 22 - or alternatively, another criterion 214 is tested to determine whether the splitting test 206 should be performed, namely it might be tested 214 whether the parametrization updates of the current client group c comprise a certain number of updates, such as at least one, which indicate that the clients of these updates are sufficiently far away from having reached a stationary or convergence state such as testing whether the parametrization update of the client group corresponding to the largest difference to the updated parametrization of the client group is larger than a predetermined threshold $\varepsilon_2$.

In splitting 206 the current group c of clients into two client (sub)groups $c_1$ and $c_2$ depending on the similarities between the parametrization updates, the parametrization updates are subject to a clustering or splitting at 208 so as to preliminarily associate each of the clients to one of the client sub-groups $c_1$ and $c_2$. The similarities are used herein by forming, using the similarities, the similarity matrix $\alpha_{i,j}$ of similarities between updates of clients i,j within current client group c in step 211. Then, it is checked at 210 whether, for parametrization updates of the clients of the current client group c each of which has been preliminarily associated with one of client sub-groups $c_1$ and $c_2$, fulfill a group distinctiveness criterion 210, e.g. are sufficiently dissimilar when comparing updates of clients belonging to different sub-groups. Criterion 210 tests whether the clients' updates if they were distributed onto different sub-groups $c_1$ and $c_2$ are sufficiently distinct when comparing updates stemming from clients of different sub-groups, such as whether a largest dissimilarity of updates of two clients one of which belongs to one group and the other one of which belongs to the other group, exceeds some threshold $\gamma_{max}$.

If the group distinctiveness criterion 210 is fulfilled, each of the clients of the current client group c is finally associated with the client sub-group, with which same has been preliminarily associated at 208. That is, the split at 208 is confirmed or conducted as shown at 209. The current parametrization updates may then immediately be used for learning the client group specific parametrization $\theta_{c_{1,2}}$ for each client sub-group $c_1$ and $c_2$ by averaging, for each client sub-group, over the parametrization updates of clients having been associated with the respective client group, thereby yielding $\Delta\theta_{c_{1,2}}$ which is then, after acceptance of the client group splitting at 209 downloaded to the clients belong to the newly formed client sub-groups at 32. If the group distinctiveness criterion 210 is not fulfilled, the plurality of clients are left in one client group and the merge result of 38 is downloaded to that client group members at 32 in the next round.

The process is then further prosecuted or resumed by performing another round, i.e. by distributing to all clients the parametrization of the client group they belong to, i.e. to all clients of client group c the same parametrization in case of no-split and for each client assigned to a newly formed client sub-group the client group specific parametrization update $\Delta\theta_{c_{1/2}}$ incase of split. Thereupon the local learning takes the uploads of the updates takes place at 36 so forth. The set of client C gets larger and larger by client groups therein being bi-split into two sub-groups which then replace that client group in the set $C$ at 209 so that the cardinality thereof increases by one per spit.

We showed above that the cosine similarity criterion does distinguish different incongruent clients under three conditions: (a) Federated Learning has converged to a stationary point $\theta^*$, (b) Every client holds enough data s.t. the empirical risk approximates the true risk, (c) cosine similarity is computed between the full gradients of the empirical risk. In this section we will demonstrate that in practical problems none of these conditions have to be fully satisfied. Instead, we will find that CFL is able to correctly infer the clustering structure even if clients only hold small datasets and are trained to an approximately stationary solution of the Federated Learning objective. Furthermore we will see that cosine similarity can be computed between weight-updates instead of full gradients, which even improves performance.

In the experiments presented now we consider the following Federated Learning setup: All experiments are performed on either the MNIST [a16] or CIFAR-10 [a17] dataset using m = 20 clients, each of which belonging to one of k = 4 clusters. Every client is assigned an equally sized random subset of the total training data. To simulate an incongruent clustering structure, every clients' data is then modified by randomly swapping out two labels, depending on which cluster a client belongs to. For example, in all clients belonging to the first cluster, data points labeled as "1" could be relabeled as "7" and vice versa, in all clients belonging to the second cluster "3" and "5" could be switched out in the same way, and so on. This relabeling ensures that both $\varphi(x)$ and $\varphi(y)$ are approximately the same across all clients, but the conditionals $\varphi(y|x)$ diverge between different clusters. We will refer to this as "label-swap augmentation" in the following. In all experiments we train multi-layer convolutional neural networks and adopt a standard Federated Learning strategy with 3 local epochs of training. We report the separation gap

$$g(\alpha) := \alpha_{intra}^{min} - \alpha_{cross}^{max} \tag{a46}$$

which according to Corollary 1 tells us whether CFL will correctly bi-partition the clients:

$$g(\alpha) > 0 \Leftrightarrow \text{"CorrectClustering"} \tag{a47}$$

**Number of Data points:** We start out by investigating the effects of data set size on the cosine similarity. We randomly subsample from each client's training data to vary the number of data points on every client between 10 and 200 for MNIST and 100 and 2400 for CIFAR. For every different local data set size we run Federated Learning for 50 communication rounds, after which training progress has come mostly to halt and we can expect to be close to a stationary point. After round 50, we compute the pairwise cosine similarities between the weight-updates and the gap $g(\alpha)$. As we can see, $g(\alpha)$ grows monotonically with increasing data set size. On the MNIST problem as little as 20 data points on every client are sufficient to achieve correct bi-partitioning in the sense of Definition a3.1. On the more difficult CIFAR problem a higher number of around 500 data points is necessary to achieve correct bi-partitioning.

**Number of Communication Rounds:** Next, we investigate the importance of proximity to a stationary point $\theta^*$ for the clustering. Under the same setting as in the previous experiment we reduce the number of data points on every client to 100 for MNIST and to 1500 for CIFAR and compute the pairwise cosine similarities and the separation gap after each of the first 50 communication rounds. Again, we see that the separation quality monotonically increases with the number of communication rounds. On MNIST and CIFAR as little as 10 communication rounds are necessary to obtain a correct clustering.

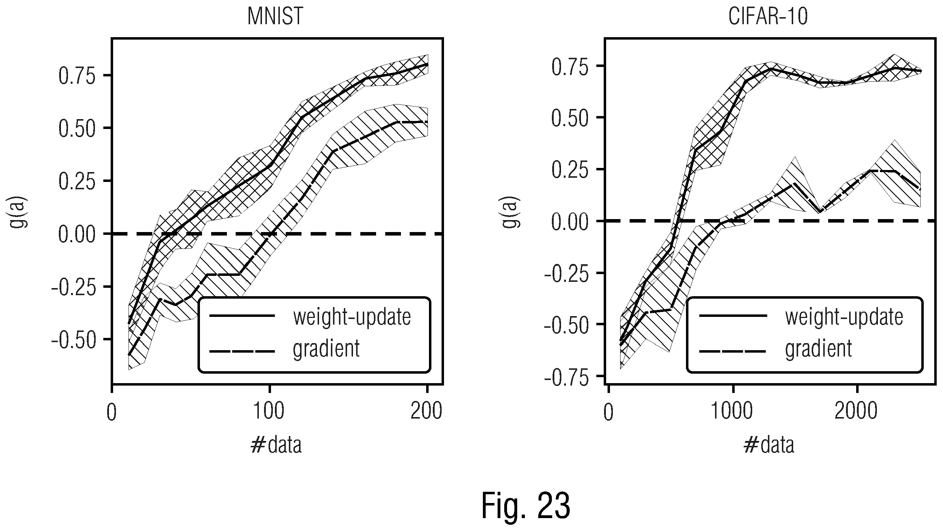

Fig. 23 shows the separation gap $g(\alpha)$ as a function of the number of data points on every client for the label-swap problem on MNIST and CIFAR. From Corollary a1 we know that CFL will always find a correct bi-partitioning if $g(\alpha) > 0$. On MNIST this is already satisfied if clients hold as little as 40 data points.

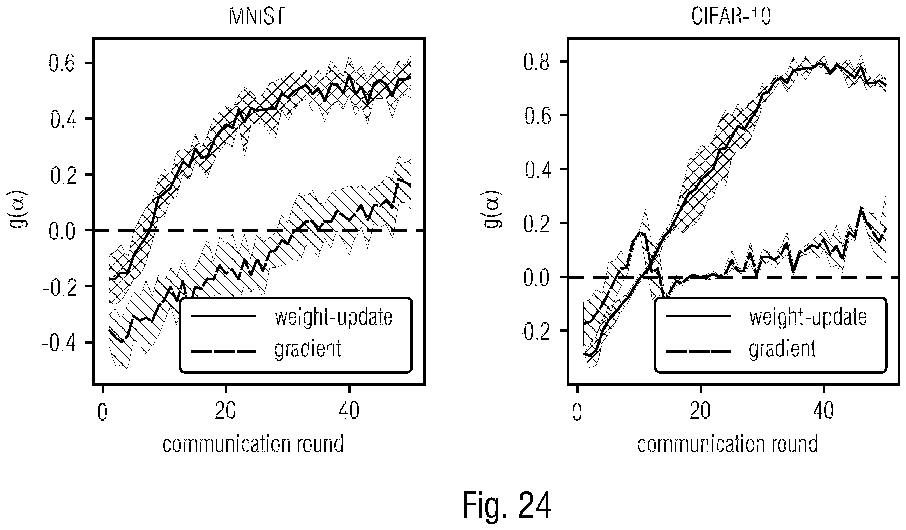

Fig. 24: shows the separation gap $g(\alpha)$ as a function of the number of communication rounds for the label-swap problem on MNIST and CIFAR. The separation quality monotonically increases with the number of communication rounds of Federated Learning. Correct separation in both cases is already achieved after around 10 communication rounds.

**Weight-Updates instead of Gradients:** In both the above experiments we computed the cosine similarities $\alpha$ based on either the full gradients $\nabla_\theta r_i(\theta)$ or the weight-updates $\Delta\theta_i$ (over 3 epochs). Surprisingly weight-updates provide even better separation $g(\alpha)$ with fewer data points and at a greater distance to a stationary solution. This comes in very handy as it means that we do not have to make any modifications to the Federated Learning communication protocol. In all following experiments we will compute cosine similarities based on weight-updates instead of gradients.

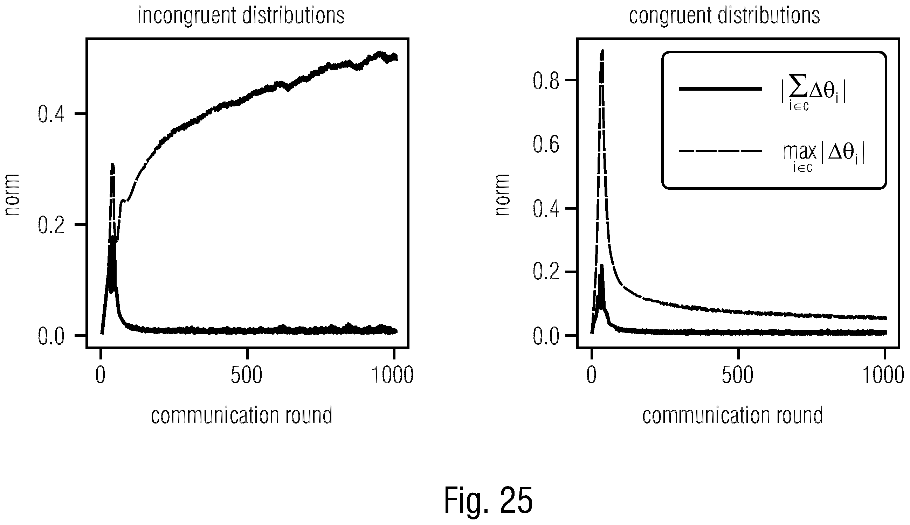

Next, we experimentally verify the validity of the clustering criteria (a31) and (a32) in a Federated Learning experiment on MNIST with two clients holding data from incongruent and congruent distributions. In the congruent case client one holds all training digits "0" to "4" and client two holds all training digits "5" to "9". In the incongruent case, both clients hold a random subset of the training data, but the distributions are modified according to the "label swap" rule described above. Fig. 25 shows the development of the average update norm (equation (a31)) and the maximum client norm (equation (a32)) over the course of 1000 communication rounds. As predicted by the theory, in the congruent case the average client norm converges to zero, while in the incongruent case it stagnates and even increases over time. In both cases the server norm tends to zero, indicating convergence to a stationary point.

In this section, we apply CFL as described in Algorithm 4 of Fig. 22 to different Federated Learning setups, which are inspired by our motivating examples in the Introduction. In all experiments, the clients perform Federated optimization with 3 epochs of local training at a batch-size of 100. Code to replicate the experiments can be found at placeholder.github.com.

**Label permutation on Cifar-10:** We split the CIFAR-10 training data randomly and evenly among m = 20 clients, which we group into $k$ = 4 different clusters. All clients belonging to the same cluster apply the same random permutation $P_{c(i)}$ to their labels such that their modified training and test data is given by

$$\widehat{D}_i = \{(x, P_{c(i)}(y)) | (x, y) \in D_i\} \qquad (a48)$$

respective

$$\widehat{D}_i^{test} = \{(x, P_{c(i)}(y)) | (x, y) \in D^{test}\}. \qquad (a49)$$

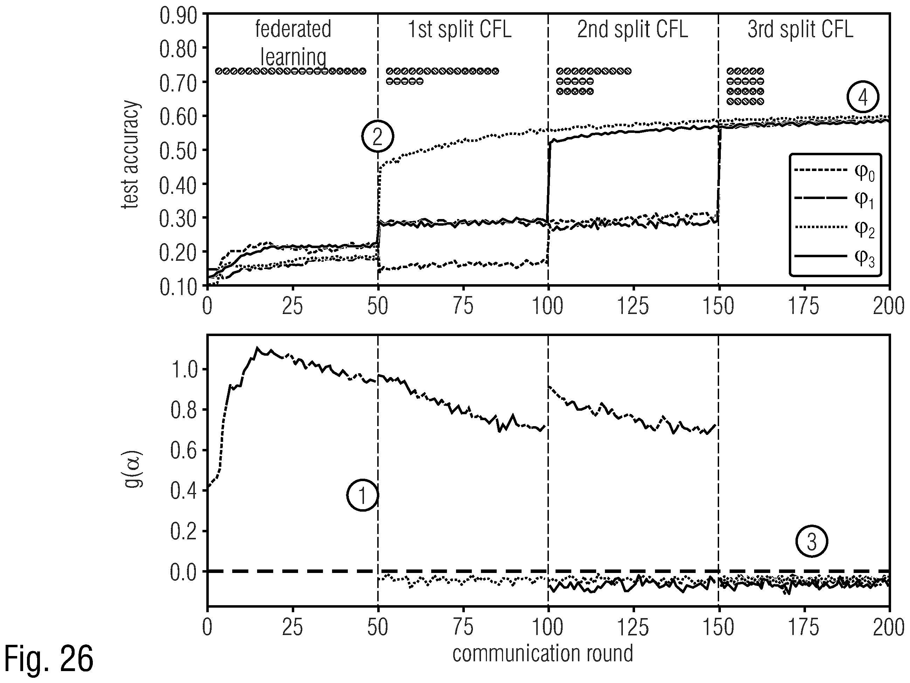

The clients then jointly train a 5-layer convolutional neural network on the modified data using CFL with 3 epochs of local training at a batch-size of 100. Fig. 26 (top) shows the joint training progression: In the first 50 communication rounds, all clients train one single model together, following the conventional Federated Learning protocol. After these initial 50 rounds, training has converged to a stationary point of the Federated Learning objective and client test accuracies stagnate at around 20%. Conventional Federated Learning would be finalized at this point. At the same time, we observe (Fig. 26, bottom) that a distinct gap $g(\alpha) = \alpha_{intra}^{min} - \alpha_{cross}^{max}$ has developed (1), indicating an underlying clustering structure. In communication round 50 the client population is split up for the first time, which leads to an immediate 25% increase in validation accuracy for all clients belonging to the "purple" cluster which was separated out 2. Splitting is repeated in communication rounds 100 and 150 until all clusters have been separated and $g(\alpha)$ has dropped to below zero in all clusters (3), which indicates that clustering is finalized. At this point the accuracy of all clients has more than doubled the one achieved by the Federated Learning solution and is now at close to 60% 4.

**Language Modeling on Ag-News:** The Ag-News corpus is a collection of 120000 news articles belonging to one of the four topics 'World', 'Sports', 'Business' and 'Sci/Tech'. We split the corpus into 20 different sub-corpora of the same size, with every sub-corpus containing only articles from one topic and assign every corpus to one client. Consequently the clients form four clusters based on what type of articles they hold. Every Client trains a two-layer LSTM network to predict the next word on its local corpus of articles. Fig. 27 shows 100 communication rounds of multi-stage CFL applied to this distributed learning problem. As we can see, Federated Learning again converges to a stationary solution after around 30 communication rounds. At this solution all clients achieve a perplexity of around 43 on their local test set. After the client population has been split up in communication rounds 30, 60 and 90, the four true underlying clusters are discovered. After the 100th communication round the perplexity of all clients has dropped to less than 36. For comparison the plot also shows the Federated Learning solution, trained on for 100 communication rounds, in black, which still stagnates at an average perplexity of 42.

Thus, a clustering approach has been presented that can improve *any* existing Federated Learning Framework by providing the participating clients with more specialized models. CFL comes with mathematic guarantees on the clustering quality, doesn't require any modifications to the FL communication protocol to be made and is able to distinguish situations in which a single model can be learned from the clients' data from those in which this is not possible and only separates clients in the latter situation.

Our experiments on convolutional and recurrent deep neural networks show that CFL can achieve drastic improvements over the Federated Learning baseline in terms of classification accuracy / perplexity in situations where the clients' data exhibits a clustering structure. CFL also distinctively outperforms the alternative clustering approach proposed by [a15] in terms of clustering quality, even on convex optimization problems which their method was specifically designed for.

Finally, our experiments on the realistic Federated EMNIST dataset suggest, that CFL can improve the performance of classic Federated Learning also in general distributed multi-task learning problems where the clients do no exhibit a clustering structure.

Although we focused our investigations in this work on the training of deep neural networks, our framework generalizes all forms of Federated optimization and is thus not restricted to this application. It can more broadly be applied to all distributed optimization problems in which the local objective functions exhibit a clustering structure.

The insight that information about client similarity can be inferred from their weight updates, obviously also has implications from a data privacy perspective. We argue that the privacy loss inflicted is tolerable in most situations as the mere knowledge of client similarity doesn't reveal anything about the clients' data. Nevertheless this fact should of course be considered, when implementing CFL for privacy sensitive applications.

As announced above, in the following we provide a proof of Theorem a3.1 in the following.

**Lemma a10.1** *Let* $v, X, Y \in \mathbb{R}^d$ *with* $\| X \| < \| v \|$ *and* $\| Y \| < \| v \|$ *then*

$$\alpha(v + X, v + Y) \geq -\frac{\|X\|\|Y\|}{\|v\|^2} + \sqrt{1 - \frac{\|X\|^2}{\|v\|^2}} \sqrt{1 - \frac{\|Y\|^2}{\|v\|^2}}. \tag{a50}$$

*Proof.* We are interested in vectors *X* and *Y* which maximize the angle between *v + X* and *w + Y*. Since

$$\alpha(v + X, v + Y) = \cos(\sphericalangle(v + X, v + Y)) \tag{a51}$$

and cos is monotonically decreasing on $[0, \pi]$ such *X* and *Y* will minimize the cosine similarity $\alpha$. As $\| X \| < \| v \|$ and $\| Y \| < \| v \|$ the angle will be maximized if and only if *v*, *X* and *Y* share a common 2-dimensional hyperplane and *X* and *Y* are perpendicular to v and point into opposite directions. It then holds by the trigonometric property of the cosine that

$$\sin(\sphericalangle(v, v + X)) = \frac{\|X\|}{\|v\|} \tag{a52}$$

and

$$\sin(\sphericalangle(v, v + Y)) = \frac{\|Y\|}{\|v\|} \tag{a53}$$

and hence

$$\cos(\sphericalangle(v + X, v + Y)) \geq \cos(\sin^{-1}(\frac{\|X\|}{\|v\|}) + \sin^{-1}(\frac{\|X\|}{\|v\|})). \tag{a54}$$

Since

$$\cos(\sin^{-1}(x) + \sin^{-1}(y)) = -xy + \sqrt{1 - x^2}\sqrt{1 - y^2} \tag{a55}$$

the result follows after re-arranging terms.

**Remark a2** *W.l.o.g. we can assume* $\| X \| \gtreqqless \| Y \|$ *and the equation simplifies to*

$$\alpha(v + X, v + Y) \geq 1 - 2\frac{\|X\|^2}{\|v\|^2} \tag{a56}$$

**Lemma a10.2** *Let* $v, w, X, Y \in \mathbb{R}^d$ *with* $\| X \| < \| v \|, \| Y \| < \| w \|$ *and define*

$$h(v, w, X, Y) := -\frac{\|X\|\|Y\|}{\|v\|^2} + \sqrt{1 - \frac{\|X\|^2}{\|v\|^2}}\sqrt{1 - \frac{\|Y\|^2}{\|v\|^2}} \tag{a57}$$

If

$$\frac{\langle v,w \rangle}{\|v\|\|w\|} \leq h(v, w, X, Y) \tag{a58}$$

then it holds

$$\alpha(v + X, w + Y) \leq \alpha(v, w)h(v, w, X, Y) \tag{a59}$$

$$+\sqrt{1 - \alpha(v, w)^2}\sqrt{1 - h(v, w, X, Y)^2} \tag{a60}$$

*Proof.* Again, the angle between v + X and w + Y is minimized, when *v, w*, X and Y share a common 2-dimensional hyperplane and X and Y point towards each other. The minimum possible angle is then given by

$$\sphericalangle_{min} \geq \max(0, \cos^{-1}(\frac{\langle v,w \rangle}{\|v\|\|w\|}) \tag{a61}$$

$$-\sin^{-1}(\frac{\|X\|}{\|v\|}) + \tag{a62}$$

$$-\sin^{-1}(\frac{\|Y\|}{\|v\|})) \tag{a63}$$

which can be simplified to

$$\sphericalangle_{min} \geq \max(0, \cos^{-1}(\frac{\langle v,w \rangle}{\|v\|\|w\|}) \tag{a64}$$

$$-\cos^{-1}(-\frac{\|X\|\|Y\|}{\|v\|^2} + \sqrt{1 - \frac{\|X\|^2}{\|v\|^2}}\sqrt{1 - \frac{\|Y\|^2}{\|v\|^2}})) \tag{a65}$$

Under condition (a58) then second term in the maximum is greater than zero and we get

$$\cos(\sphericalangle(v + X, v + Y)) \tag{a66}$$

$$\leq \cos(\cos^{-1}(\frac{\langle v,w \rangle}{\|v\|\|w\|}) \tag{a67}$$

$$-\cos^{-1}(-\frac{\|X\|\|Y\|}{\|v\|^2} + \sqrt{1 - \frac{\|X\|^2}{\|v\|^2}}\sqrt{1 - \frac{\|Y\|^2}{\|v\|^2}})) \tag{a68}$$

$$\leq \cos(\cos^{-1}(\alpha(v, w)) - \cos^{-1}(h(v, w, X, Y))) \tag{a69}$$

Since

$$\cos(\sin^{-1}(x) + \sin^{-1}(y)) = -xy + \sqrt{1-x^2}\sqrt{1-y^2} \tag{a70}$$

the result follows after re-arranging terms.

**Remark a3** *For $\|X\|, \|Y\| \to 0$ the right side of the inequality goes to 1. The left side of the inequality is bounded by 1.*

**Lemma a10.3 Let** $v_1,.., v_k \in \mathbb{R}^d$, $d \geq 2$, $\gamma_1,.., \gamma_k \in \mathbb{R}_{>0}$ with $\sum_{i=1}^k \gamma_i = 1$ *and*

$$\sum_{i=1}^k \gamma_i v_i = 0 \in \mathbb{R}^d \tag{a71}$$

then there exists a bi-partitioning of the vectors $c_1 \cup c_2 = \{1,.., k\}$ such that

$$\max_{i \in c_1, j \in c_2} \alpha(v_i, v_j) \leq \cos(\frac{\pi}{k-1}) \tag{a72}$$

*Proof.* Lemma a10.3 can be equivalently stated as follows:

Let $v_1,.., v_k \in \mathbb{R}^d$, $d \geq 2$, $\gamma_1,.., \gamma_k \in \mathbb{R}_{>0}$ with $\sum_{i=1}^k \gamma_i = 1$ and

$$\sum_{i=1}^k \gamma_i v_i = 0 \in \mathbb{R}^d \tag{a73}$$

then there exists a bi-partitioning of the vectors $c_1 \cup c_2 = \{1,.., k\}$ such that

$$\min_{i \in c_1, j \in c_2} \sphericalangle(v_i, v_j) \geq \frac{\pi}{k-1} \tag{a74}$$

Let us first consider the case where d = 2. Let $e_1 \in \mathbb{R}^2$ be the first standard basis vector and assume w.l.o.g that the vectors $v_1,.., v_k$ are sorted w.r.t. their angular distance to $e_1$. As all vectors lie in the 2d plane, we know that the sum of the angles between all neighboring vectors has to be equal to $2\pi$.

$$\sum_{i=1}^k \sphericalangle(v_i, v_{(i+1)\bmod k}) = 2\pi \tag{a75}$$

Now let

$$i_1^* = \arg\max_{i \in \{1,..,k\}} \sphericalangle(v_i, v_{(i+1)\bmod k}) \tag{a76}$$

and

$$i_2^* = \arg\max_{i \in \{1,..,k\}\setminus i_1^*} \sphericalangle(v_i, v_{(i+1)\bmod k}) \tag{a77}$$

be the indices of the largest and second largest neighboring angles and define the following clusters:

$$c_1 = \{i \bmod k \mid i_1^* < i \leq i_2^* + k[i_2^* < i_1^*]\} \tag{a78}$$

$$c_2 = \{i \bmod k \mid i_2^* < i \leq i_1^* + k[i_2^* > i_1^*]\}\} \tag{a79}$$

where [$x$] = 1 if $x$ is true and [$x$] = 0 is $x$ is false. Then by construction we have

$$\min_{i \in c_1, j \in c_2} \sphericalangle(v_i, v_j) = \sphericalangle(v_{i_2^*}, v_{(i_2^*+1)\bmod k}) \tag{a80}$$

Hence in 2d we can always find a partitioning $c_1$, $c_2$ s.t. the minimum angle between any two vectors from different clusters is greater or equal to the 2nd largest angle between neighboring vectors. This means the worst case configuration of vectors is one where the 2nd largest angle between neighboring vectors is minimized. As the sum of all $k$ angles between neighboring vectors is constant according to (a75), this is exactly the case when the largest angle between neighboring vectors is maximized and all other $k - 1$ angles are equal. By equation (a71) it also holds that

$$\sphericalangle(\textstyle\sum_{i\in c_1} v_i, \sum_{i\in c_2} v_i) = \cos^{-1}(\alpha(\textstyle\sum_{i\in c_1} v_i, \sum_{i\in c_2} v_i)) = \cos^{-1}(-1) = \pi \qquad (a81)$$

Consider now the $l = \{\beta \sum_{i\in c_1} v_i | \beta \in \mathbb{R}\} = \{\beta \sum_{i\in c_2} v_i | \beta \in \mathbb{R}\}$, then we know that the elements of each cluster have to be arranged to both sides of $l$ (otherwise their sum wouldn't lie on $l$). This means that the largest angle between neighboring vectors can not be greater than $\pi$. Hence in the worst-case scenario

$$\sphericalangle(v_{i_2^*}, v_{(i_2^*+1)\mathrm{mod}k}) \geq \frac{2\pi - \sphericalangle_1^{max}}{k-1} \geq \frac{\pi}{k-1}. \qquad (a82)$$

This concludes the proof for $d = 2$.

Now consider the case where $d > 2$. Let $c_1$, $c_2$ be a clustering which maximizes the minimum angular distance between any two clients from different clusters. Let

$$i^*, j^* = \arg\min_{i\in c_1, j\in c_2} \sphericalangle(v_i, v_j) \qquad (a83)$$

then $v_{i^*}$ and $v_{j^*}$ are the two vectors with minimal angular distance. Let $A = [v_{i^*}, v_{j^*}] \in \mathbb{R}^{d,2}$ and consider now the projection matrix

$$P = A(A^T A)^{-1} A^T \qquad (a84)$$

which projects all d-dimensional vectors onto the plane spanned by $v_{i^*}$ and $v_{j^*}$. Then be linearity of the projection we have

$$0 = P0 = P(\textstyle\sum_{i=1}^k v_i) = \sum_{i=1}^k P(v_i) \qquad (a85)$$

Hence the projected vectors also satisfy the condition of the Lemma. As the angles between the projected vectors have to be smaller than the angles between the original vectors, we have reduced the $d > 2$ case to the $d = 2$ case.

Fig. 28 shows a possible configuration in 2d. The largest and 2nd largest angle between neighboring vectors (red) separate the two optimal clusters. The largest angle between neighboring vectors is never greater than $\pi$.

**Theorem a10.4(Separation Theorem)** *Let $D_1,..,D_m$ be the local training data of m different clients, each dataset sampled from one of k different data generating distributions $\varphi_1,..,\varphi_k$, such that $Di\sim\varphi_{I(i)}(x,y)$. Let the the empirical risk on every client approximate the true risk at every stationary solution of the Federated Learning objective $\theta^*$ s.t.*

$$N_{I(i)} := \|\nabla_\theta R_{I(i)}(\theta^*)\| > \|\nabla_\theta R_{I(i)}(\theta^*) - \nabla_\theta r_i(\theta^*)\| =: \varepsilon_i. \qquad (a86)$$

Then there exists a bi-partitioning $c_1 \cup c_2 = \{1,..,m\}$ of the client population such that

$$\max_{i\in c_1, j\in c_2} \alpha(\nabla_\theta r_i(\theta^*), \nabla_\theta r_j(\theta^*)) \leq$$

$$\begin{cases} \cos(\frac{\pi}{k-1})H + \sqrt{1 - \cos(\frac{\pi}{k-1})^2}\sqrt{1 - H^2} & \text{if } H \geq \cos(\frac{\pi}{k-1}) \\ 1 & \text{else} \end{cases} \qquad (a87)$$

with

$$H = \min_{i\neq j} \frac{N_{I(i)}N_{I(j)} - \varepsilon_i\varepsilon_j}{\sqrt{N_{I(i)}^2 + \varepsilon_i^2}\sqrt{N_{I(j)}^2 + \varepsilon_j^2}} \in [0,1]. \qquad (a88)$$

At the same time it holds for any two clients with the same data generating distribution

$$\alpha(\nabla_\theta r_i(\theta^*), \nabla_\theta r_j(\theta^*)) \geq \frac{N_{I(i)}^2 - \varepsilon_i \varepsilon_j}{\sqrt{N_{I(i)}^2 + \varepsilon_i^2}\sqrt{N_{I(i)}^2 + \varepsilon_j^2}}. \tag{a89}$$

**Remark a4** *In the case with two clusters (k = 2) and the presence of noise the result simplifies to*

$$\max_{i \in c_1, j \in c_2} \alpha(\nabla_\theta r_i(\theta^*), \nabla_\theta r_j(\theta^*)) \leq -H \tag{a90}$$

for a certain partitioning, respective

$$\alpha(\nabla_\theta r_i(\theta^*), \nabla_\theta r_j(\theta^*)) \geq H \tag{a91}$$

for two clients from the same cluster.

**Remark a5** *In the case with an arbitrary number of clusters and no noise the result simplifies to*

$$\max_{i \in c_1, j \in c_2} \alpha(\nabla_\theta r_i(\theta^*), \nabla_\theta r_j(\theta^*)) \leq \cos(\frac{2\pi}{k}) \tag{a92}$$

for a certain partitioning, respective

$$\alpha(\nabla_\theta r_i(\theta^*), \nabla_\theta r_j(\theta^*)) = 1 \tag{a93}$$

for two clients from the same cluster. If additionally k = 2 the result simplifies to equation 13.

*Proof.* For the first result, we know that in every stationary solution of the Federated Learning objective $\theta^*$ it holds

$$\sum_{l=1}^{k} \gamma_i \nabla_\theta R_l(\theta^*) = 0 \tag{a94}$$

and hence by Lemma a10.3 there exists a bi-partitioning $\hat{c}_1 \cup \hat{c}_2 = \{1,.., k\}$ such that

$$\max_{l \in \hat{c}_1, j \in \hat{c}_2} \alpha(R_l(\theta^*), R_j(\theta^*)) \leq \cos(\frac{\pi}{k-1}) \tag{a95}$$

Let $c_1 = \{i: I(i) \in \hat{c}_1, i \leq m\}$ and $c_2 = \{i: I(i) \in \hat{c}_2, i \leq m\}$ and set for $i \in c_1$ and $j \in c_2$ $v = \nabla_\theta R_{I(i)}(\theta^*)$, $X = \nabla_\theta r_i(\theta^*) - \nabla_\theta R_{I(i)}(\theta^*)$, $w = \nabla_\theta R_{I(j)}(\theta^*)$, $Y = \nabla_\theta r_j(\theta^*) - \nabla_\theta R_{I(j)}(\theta^*)$. Then the result follows directly from Lemma a10.2.

The second result (a89) follows directly from Lemma a10.1 by setting $v = \nabla_\theta R_{I(i)}(\theta^*)$, $X = \nabla_\theta r_i(\theta^*) - \nabla_\theta R_{I(i)}(\theta^*)$ and $Y = \nabla_\theta r_j(\theta^*) - \nabla_\theta R_{I(i)}(\theta^*)$.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps are executed by (or using) a hardware apparatus, like for example, a microprocessor, a programmable computer or an electronic circuit. In some embodiments, one or more of the most important method steps are executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine-readable carrier.

Other embodiments comprise the computer program for performing one of the methods described herein, stored on a machine-readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**References**

[1] Martin Abadi, Andy Chu, Ian Goodfellow, H Brendan McMahan, Ilya Mironov, Kunal Talwar, and Li Zhang. Deep learning with differential privacy. In 2016 ACM SIGSAC Conference on Computer and Communications Security, pages 308-318, 2016.

[2] Eugene Bagdasaryan, Andreas Veit, Yiqing Hua, Deborah Estrin, and Vitaly Shmatikov. How to backdoor federated learning. arXiv preprint arXiv:1807.00459, 2018.

[3] Keith Bonawitz, Vladimir Ivanov, Ben Kreuter, Antonio Marcedone, H Brendan McMahan, Sarvar Patel, Daniel Ramage, Aaron Segal, and Karn Seth. Practical secure aggregation for privacy preserving machine learning. IACR Cryptology ePrint Archive, 2017:281, 2017.

[4] Sebastian Bosse, Dominique Maniry, Klaus-Robert Müller, Thomas Wiegand, and Wojciech Samek. Deep neural networks for no-reference and full-reference image quality assessment. IEEE Transactions on Image Processing, 27(1):206-219, 2018.

[5] Stephen Hardy, Wilko Henecka, Hamish Ivey-Law, Richard Nock, Giorgio Patrini, Guillaume Smith, and Brian Thorne. Private federated learning on vertically partitioned data via entity resolution and additively homomorphic encryption. arXiv preprint arXiv:1711.10677, 2017.

[6] Andrej Karpathy and Li Fei-Fei. Deep visual-semantic alignments for generating image descriptions. In Proceedings of the IEEE conference on computer vision and pattern recognition, pages 3128-3137, 2015.

[7] Andrej Karpathy, George Toderici, Sanketh Shetty, Thomas Leung, Rahul Sukthankar, and Li Fei-Fei. Large-scale video classification with convolutional neural networks. In Proceedings of the IEEE conference on Computer Vision and Pattern Recognition, pages 1725-1732, 2014.

[8] Alex Krizhevsky, Vinod Nair, and Geoffrey Hinton. The cifar-10 dataset. online: http://www. cs. toronto. edu/kriz/cifar. html, 2014.

[9] Yann LeCun, Yoshua Bengio, and Geoffrey Hinton. Deep learning. Nature, 521(7553):436-444, 2015.

[10] H Brendan McMahan, Eider Moore, Daniel Ramage, Seth Hampson, et al. Communication-efficient learning of deep networks from decentralized data. arXiv preprint arXiv:1602.05629, 2016.

[11] Wojciech Samek, Thomas Wiegand, and Klaus-Robert Müller. Explainable artificial intelligence: Understanding, visualizing and interpreting deep learning models. ITU Journal: ICT Discoveries - Special Issue 1 - The Impact of Artificial Intelligence (AI) on Communication Networks and Services, 1(1):39-48, 2018.

[12] Ilya Sutskever, Oriol Vinyals, and Quoc V Le. Sequence to sequence learning with neural networks. In Advances in neural information processing systems, pages 3104-3112, 2014.

[13] Robin Taylor, David Baron, and Daniel Schmidt. The world in 2025-predictions for the next ten years. In 10th International Microsystems, Packaging, Assembly and Circuits Technology Conference (IMPACT), pages 192-195, 2015.

[14] Simon Wiedemann, Arturo Marban, Klaus-Robert Müller, and Wojciech Samek. Entropy-constrained training of deep neural networks. arXiv preprint arXiv:1812.07520, 2018.

[15] Simon Wiedemann, Klaus-Robert Müller, and Wojciech Samek. Compact and computationally efficient representation of deep neural networks. arXiv preprint arXiv:1805.10692, 2018.

[16] Hubert Eichner, Tomer Koren, H. Brendan McMahan, Nathan Srebro, and Kunal Talwar. Semi-Cyclic Stochastic Gradient Descent. arXiv preprint arXiv:1904.10120, 2019.

[17] Clement Fung, Chris J.M. Yoon, and Ivan Beschastnikh. "Mitigating Sybils in Federated Learning Poisoning", arXiv preprint arXiv:1808.04866v3, 2019.

[a1] Keith Bonawitz, Hubert Eichner, Wolfgang Grieskamp, Dzmitry Huba, Alex Ingerman, Vladimir Ivanov, Chloe Kiddon, Jakub Konecny, Stefano Mazzocchi, H Brendan McMahan, et al. Towards federated learning at scale: System design. arXiv preprint arXiv:1902.01046, 2019.

[a2] Keith Bonawitz, Vladimir Ivanov, Ben Kreuter, Antonio Marcedone, H Brendan McMahan, Sarvar Patel, Daniel Ramage, Aaron Segal, and Karn Seth. Practical secure aggregation for privacy preserving machine learning. IACR Cryptology ePrint Archive, 2017:281, 2017.

[a3] Nicholas Carlini, Chang Liu, Jernej Kos, Úlfar Erlingsson, and Dawn Song. The secret sharer: Measuring unintended neural network memorization & extracting secrets. arXiv preprint arXiv:1802.08232, 2018.

[a4] Matt Fredrikson, Somesh Jha, and Thomas Ristenpart. Model inversion attacks that exploit confidence information and basic countermeasures. In Proceedings of the 22nd ACM SIGSAC Conference on Computer and Communications Security, pages 1322-1333. ACM, 2015.

[a5] Avishek Ghosh, Justin Hong, Dong Yin, and Kannan Ramchandran. Robust federated learning in a heterogeneous environment. arXiv preprint arXiv:1906.06629, 2019.

[a6] Briland Hitaj, Giuseppe Ateniese, and Fernando Perez-Cruz. Deep models under the gan: information leakage from collaborative deep learning. In Proceedings of the 2017 ACM SIGSAC Conference on Computer and Communications Security, pages 603-618. ACM, 2017.

[a15] Felix Sattler, Simon Wiedemann, Klaus-Robert Müller, and Wojciech Samek. Sparse binary compression: Towards distributed deep learning with minimal communication. arXiv preprint arXiv:1805.08768, 2018.

[a16] Felix Sattler, Simon Wiedemann, Klaus-Robert Müller, and Wojciech Samek. Robust and communication-efficient federated learning from non-iid data. arXiv preprint arXiv:1903.02891, 2019.

[a17] Virginia Smith, Chao-Kai Chiang, Maziar Sanjabi, and Ameet S Talwalkar. Federated multi-task learning. In Advances in Neural Information Processing Systems, pages 4424-4434, 2017.

[a18] Yue Zhao, Meng Li, Liangzhen Lai, Naveen Suda, Damon Civin, and Vikas Chandra. Federated learning with non-iid data. arXiv preprint arXiv:1806.00582, 2018.

**Claims**

1. A server comprising an apparatus (80) for federated learning of a neural network (16), the apparatus configured to

   receive, from a plurality of clients (14), parametrization updates (90) of a predetermined parametrization ($P_0$) of the neural network (16),
   determine similarities between the parametrization updates (90) using a cosine-similarity and/or a dot product and/or an l2 norm for measuring parametrization update similarities, and
   cluster the clients (14) into a plurality of client groups based on the determined similarities and then performing the federated Learning client-group-separately.

2. Server of claim 1, configured to compute the cosine-similarity and/or the dot product and/or the l2 norm based on

   parametrization updates of a pair of clients or
   a dimensionality-reduced version thereof which results from the parametrization updates of the pair of clients from an application of a dimensionality-reducing mapping (134) onto the parametrization updates of the pair of clients.

3. Server of claim 1 or 2, configured to determine the similarities between the parametrization updates (90) by measuring a mutual similarity between parametrization updates of each pair of clients using a measure which is equal to, or deviates by less than 5% from, a cosine-similarity between the parametrization updates of the respective pair.

4. Server of any of claims 1 to 3, configured to, in the clustering the clients,

   subject the parametrization updates (90) to a clustering (98) based on the similarities between the parametrization updates (90) so as to associate (101) each of the clients (14) to one of the plurality of client groups (100), and
   perform (102), for each of one or more predetermined client groups of the plurality of client groups (100), the federated learning client-group-separately.

5. Server of claim 4, configured to, in performing, for each of the one or more predetermined client groups, the federated learning client-group-separately,

   receive further parametrization updates (104) from the clients (14) associated with the respective predetermined client group (100), which relate to a cluster specific parametrization ($\bar{P}$) of the neural network associated with the respective predetermined client group (100),
   merge the further parametrization updates (104) to obtain an updated cluster specific parametrization associated with the respective predetermined client group, and
   inform (32) the clients associated with the respective predetermined client group on the updated cluster specific parametrization.

6. Server of any of claims 4 to 5, configured to, in subjecting the parametrization updates to the clustering, compute a similarity matrix (96) measuring for each pair of clients among the clients (14) a similarity between the parametrization updates of the respective pair.

7. Server of any of claims 4 to 6, configured to

in subjecting the parametrization updates to the clustering, classify one or more of the parametrization updates as outliers so as to obtain an outlier client group of the plurality of client groups, and

perform the federated learning client-group-separately for each client group of the plurality of client groups except the outlier client group.

8. Server of any of claims 4 to 7, configured to
re-associate each of one or more of the clients to a different client group other than the client group associated with the respective client by redoing the clustering.

9. Server of claim 8, configured to
initiate the re-doing of the clustering based on information received from the clients.

10. Server of any of claims 4 to 9, configured to
merge two of the client groups and/or split one of the client groups based on information received from the clients.

11. Server of claim 10, wherein the information comprises further parametrization updates received from the clients (14), in performing, for each of the one or more predetermined client groups, the federated learning client-group-separately.

12. Server of any of claims 4 to 11, configured to

receive, from a newly participating client, an even further parametrization update which relates to the predetermined parametrization of the neural network,

associate the newly participating client to one of the plurality of client groups using the even further parametrization update.

13. Server of any of the previous claims, wherein the neural network is for one of

inferencing as to whether a picture and/or a video shows a predetermined content,
predicting a location a user is likely to look at in a video or in a picture,
attaining an auto correction and/or auto-finishing function for a user-written textual input,
based on inertial sensor data of a senor supposed to be borne by a person, inferencing

whether the person is walking, running, climbing and/or walking stairs,
whether the person is turning right and/or left, and/or
which direction the person is going to move,

classifying input data, such as a picture, a video, audio and/or text, into a set of classes,
speech recognition based on audio speech data,
based on medical input data, outputting a diagnosis or a probability for a patient which the medical input data belongs to, to belong to a certain risk group,
based on biometric data, indicating whether the biometric data belongs to a certain predetermined person or belongs to a certain risk group,
based on usage data gained at a mobile device of a user, outputting data classifying the user, or data representing a personal preference profile.

14. Hardware-implemented method for federated learning of a neural network, performed at a server, the method comprising

receiving, from a plurality of clients (14), parametrization updates of a predetermined parametrization of the neural network,
determining similarities between the parametrization updates (90) using a cosine-similarity and/or a dot product and/or an I2 norm for measuring parametrization update similarities, and
clustering the clients (14) into a plurality of client groups and then performing the federated Learning client-group-separately.

15. Computer program having a program code for performing, when running on a computer, a method of claim 14.

# EP 3 970 074 B1

**Patentansprüche**

1. Ein Server, der eine Vorrichtung (80) zum föderalen Lernen eines neuronalen Netzwerks (16) aufweist, wobei die Vorrichtung konfiguriert ist zum

   Empfangen, von einer Mehrzahl von Clients (14), von Parametrisierungsaktualisierungen (90) einer vorbestimmten Parametrisierung ($P_0$) des neuronalen Netzwerks (16),
   Bestimmen von Ähnlichkeiten zwischen den Parametrisierungsaktualisierungen (90) unter Verwendung einer Kosinus-Ähnlichkeit und/oder eines Skalarprodukts und/oder einer l2-Norm zum Messen von Parametrisierungsaktualisierungsähnlichkeiten, und
   Clustern der Clients (14) zu einer Mehrzahl von Clientgruppen basierend auf den bestimmten Ähnlichkeiten und anschließendes clientgruppenweise getrenntes Durchführen des föderalen Lernens.

2. Server gemäß Anspruch 1, der dazu konfiguriert ist, die Kosinus-Ähnlichkeit und/oder das Skalarprodukt und/oder die l2-Norm zu berechnen, basierend auf

   Parametrisierungsaktualisierungen eines Clientpaars oder
   einer dimensionalitätsreduzierten Version davon, die sich aus den Parametrisierungsaktualisierungen des Clientpaars ausgehend von einer Anwendung eines Dimensionalitätsreduktionsmappings (134) auf die Parametrisierungsaktualisierungen des Clientpaars ergibt.

3. Server gemäß Anspruch 1 oder 2, der dazu konfiguriert ist, die Ähnlichkeiten zwischen den Parametrisierungsaktualisierungen (90) durch ein Messen einer gemeinsamen Ähnlichkeit zwischen Parametrisierungsaktualisierungen jedes Clientpaars unter Verwendung einer Messung, die gleich einer Kosinus-Ähnlichkeit zwischen den Parametrisierungsaktualisierungen des jeweiligen Paars ist oder um weniger als 5 % von derselben abweicht, zu bestimmen.

4. Server gemäß einem der Ansprüche 1 bis 3, der dazu konfiguriert ist, bei dem Clustern der Clients

   die Parametrisierungsaktualisierungen (90) basierend auf den Ähnlichkeiten zwischen den Parametrisierungsaktualisierungen (90) einem Clustern (98) zu unterziehen, um jeden der Clients (14) einer der Mehrzahl von Clientgruppen (100) zuzuordnen (101); und
   für jede einer oder mehrerer vorbestimmter Clientgruppen der Mehrzahl von Clientgruppen (100) das föderale Lernen clientgruppenweise getrennt durchzuführen (102).

5. Server gemäß Anspruch 4, der dazu konfiguriert ist, bei dem clientgruppenweise getrennten Durchführen, für jede der einen oder der mehreren vorbestimmten Clientgruppen, des föderalen Lernens

   weitere Parametrisierungsaktualisierungen (104) von den Clients (14), die der jeweiligen vorbestimmten Clientgruppe (100) zugeordnet sind, zu empfangen, welche sich auf eine clusterspezifische Parametrisierung ($\bar{P}$) des neuronalen Netzwerks beziehen, die der jeweiligen vorbestimmten Clientgruppe (100) zugeordnet ist,
   die weiteren Parametrisierungsaktualisierungen (104) zusammenzuführen, um eine aktualisierte clusterspezifische Parametrisierung zu erhalten, die der jeweiligen vorbestimmten Clientgruppe zugeordnet ist; und
   die Clients, die der jeweiligen vorbestimmten Clientgruppe zugeordnet sind, über die aktualisierte clusterspezifische Parametrisierung zu informieren (32).

6. Server gemäß einem der Ansprüche 4 bis 5, der dazu konfiguriert ist, dann, wenn die Parametrisierungsaktualisierungen dem Clustern unterzogen werden, eine Ähnlichkeitsmatrix (96) zu berechnen, die für jedes Clientpaar unter den Clients (14) eine Ähnlichkeit zwischen den Parametrisierungsaktualisierungen des jeweiligen Paars misst.

7. Server gemäß einem der Ansprüche 4 bis 6, der dazu konfiguriert ist,

   dann, wenn die Parametrisierungsaktualisierungen dem Clustern unterzogen werden, eine oder mehrere der Parametrisierungsaktualisierungen als Ausreißer einzustufen, um eine Ausreißerclientgruppe der Mehrzahl von Clientgruppen zu erhalten, und
   das föderale Lernen für jede Clientgruppe der Mehrzahl von Clientgruppen, ausgenommen der Ausreißerclientgruppe, clientgruppenweise getrennt durchzuführen.

**8.** Server gemäß einem der Ansprüche 4 bis 7, der dazu konfiguriert ist,
durch ein erneutes Ausführen des Clusterns jeden von einem oder mehreren der Clients einer anderen Clientgruppe als der Clientgruppe, die dem jeweiligen Client zugeordnet ist, neu zuzuordnen.

**9.** Server gemäß Anspruch 8, der dazu konfiguriert ist,
basierend auf Informationen, die von den Clients empfangen werden, das erneute Ausführen des Clusterns einzuleiten.

**10.** Server gemäß einem der Ansprüche 4 bis 9, der dazu konfiguriert ist,
basierend auf Informationen, die von den Clients empfangen werden, zwei der Clientgruppen zusammenzuführen und/oder eine der Clientgruppen aufzuteilen.

**11.** Server gemäß Anspruch 10, wobei bei dem clientgruppenweise getrennten Durchführen des föderalen Lernens für jede der einen oder mehreren vorbestimmten Clientgruppen die Informationen weitere Parametrisierungsaktualisierungen aufweisen, die von den Clients (14) empfangen werden.

**12.** Server gemäß einem der Ansprüche 4 bis 11, der dazu konfiguriert ist,

von einem neuen teilnehmenden Client noch eine weitere Parametrisierungsaktualisierung zu empfangen, die sich auf die vorbestimmte Parametrisierung des neuronalen Netzwerks bezieht,
den neu teilnehmenden Client unter Verwendung der noch weiteren Parametrisierungsaktualisierung einer der Mehrzahl von Clientgruppen zuzuordnen.

**13.** Server gemäß einem der vorhergehenden Ansprüche, wobei das neuronale Netzwerk zu Folgendem dient:

Inferieren, ob ein Bild und/oder ein Video einen vorbestimmten Inhalt zeigt,
Voraussagen einer Stelle, die sich ein Benutzer in einem Video oder auf einem Bild wahrscheinlich ansieht,
Verwirklichen einer Autokorrektur- und/oder einer Autovervollständigungsfunktion für eine von einem Benutzer geschriebene Texteingabe,
Inferieren, basierend auf Trägheitssensordaten eines Sensors, den eine Person tragen soll,

ob die Person geht, rennt, klettert und/oder Treppen steigt,
ob die Person sich nach rechts und/oder links wendet, und/oder
in welche Richtung sich die Person bewegen wird,

Einstufen von Eingabedaten, wie ein Bild, ein Video, Audio und/oder Text, in eine Reihe von Klassen,
Spracherkennung basierend auf Audiosprachdaten,
Ausgeben, basierend auf medizinischen Eingabedaten, einer Diagnose oder einer Wahrscheinlichkeit, dass ein Patient, zu dem die medizinischen Eingabedaten gehören, einer bestimmten Risikogruppe angehört,
Anzeigen, basierend auf biometrischen Daten, ob die biometrischen Daten zu einer spezifischen vorbestimmten Person oder zu einer spezifischen Risikogruppe gehören,
Ausgeben, basierend auf Benutzungsdaten, die auf einem Mobilgerät eines Benutzers gewonnen werden, von Daten, die den Benutzer einstufen, oder von Daten, die ein persönliches Präferenzprofil darstellen.

**14.** Hardware-implementiertes Verfahren zum föderalen Lernen eines neuronalen Netzwerks, das auf einem Server durchgeführt wird, wobei das Verfahren folgende Schritte aufweist:

Empfangen, von einer Mehrzahl von Clients (14), von Parametrisierungsaktualisierungen einer vorbestimmten Parametrisierung des neuronalen Netzwerks,
Bestimmen von Ähnlichkeiten zwischen den Parametrisierungsaktualisierungen (90) unter Verwendung einer Kosinus-Ähnlichkeit und/oder eines Skalarprodukts und/oder einer I2-Norm zum Messen von Parametrisierungsaktualisierungsähnlichkeiten, und
Clustern der Clients (14) zu einer Mehrzahl von Clientgruppen und anschließendes clientgruppenweise getrenntes Durchführen des föderalen Lernens.

**15.** Computerprogramm mit einem Programmcode zum Durchführen eines Verfahrens gemäß Anspruch 14, wenn dasselbe auf einem Computer läuft.

**Revendications**

1. Serveur comprenant un dispositif (80) pour l'apprentissage fédéré d'un réseau neuronal (16), le dispositif étant configuré pour

   recevoir, d'une pluralité de clients (14), des mises à jour de paramétrage (90) d'un paramétrage prédéterminé ($P_0$) du réseau neuronal (16),
   déterminer les similitudes entre les mises à jour de paramétrage (90) à l'aide d'une similarité cosinus et/ou d'un produit scalaire et/ou d'une norme l2 pour mesurer les similitudes entre les mises à jour de paramétrage, et
   regrouper les clients (14) en une pluralité de groupes de clients sur la base des similitudes déterminées, puis effectuer l'apprentissage fédéré séparément pour chaque groupe de clients.

2. Serveur selon la revendication 1, configuré pour calculer la similarité cosinus et/ou le produit scalaire et/ou la norme l2 sur la base des

   mises à jour de paramétrage d'une paire de clients ou
   une version à dimensionalité réduite de celle-ci qui résulte des mises à jour de paramétrage de la paire de clients à partir d'une application d'un mappage à dimensionalité réduite (134) sur les mises à jour de paramétrage de la paire de clients.

3. Serveur selon la revendication 1 ou 2, configuré pour déterminer les similitudes entre les mises à jour de paramétrage (90) en mesurant une similitude mutuelle entre les mises à jour de paramétrage de chaque paire de clients à l'aide d'une mesure qui est égale à, ou s'écarte de moins de 5 % d'une similitude cosinus entre les mises à jour de paramétrage de la paire respective.

4. Serveur selon l'une quelconque des revendications 1 à 3, configuré pour, lors du regroupement des clients,

   soumettre les mises à jour de paramétrage (90) à un regroupement (98) sur la base des similitudes entre les mises à jour de paramétrage (90) afin d'associer (101) chacun des clients (14) à l'un de la pluralité des groupes de clients (100), et
   effectuer (102), pour chacun d'un ou plusieurs groupes de clients prédéterminés parmi la pluralité de groupes de clients (100), l'apprentissage fédéré séparément pour chaque groupe de clients.

5. Serveur selon la revendication 4, configuré pour, en effectuant, pour chacun de l'un ou plusieurs groupes de clients prédéterminés, l'apprentissage fédéré séparément pour chaque groupe de clients,

   recevoir d'autres mises à jour de paramétrage (104) provenant des clients (14) associés au groupe de clients prédéterminé respectif (100), qui se rapportent à un paramétrage spécifique au regroupement ($\bar{P}$) du réseau neuronal associé au groupe de clients prédéterminé respectif (100),
   fusionner les autres mises à jour de paramétrage (104) afin d'obtenir un paramétrage spécifique au regroupement mis à jour associé au groupe de clients prédéterminé respectif, et
   informer (32) les clients associés au groupe de clients prédéterminé respectif de la paramétrisation spécifique au regroupement mis à jour.

6. Serveur selon l'une quelconque des revendications 4 à 5, configuré pour, en soumettant les mises à jour de paramétrage au regroupement, calculer une matrice de similarité (96) mesurant pour chaque paire de clients parmi les clients (14) une similarité entre les mises à jour de paramétrage de la paire respective.

7. Serveur selon l'une quelconque des revendications 4 à 6, configuré pour
   en soumettant les mises à jour de paramétrage au regroupement, classer une ou plusieurs des mises à jour de paramétrage comme des valeurs aberrantes afin d'obtenir un groupe de clients aberrants parmi la pluralité de groupes de clients, et effectuer l'apprentissage fédéré client-groupe séparément pour chaque groupe de clients parmi la pluralité de groupes de clients, à l'exception du groupe de clients aberrant.

8. Serveur selon l'une quelconque des revendications 4 à 7, configuré pour
   réassocier chacun de l'un ou plusieurs clients à un groupe de clients différent autre que celui associé au client respectif, en refaisant le regroupement.

9. Serveur selon la revendication 8, configuré pour
lancer la refonte du regroupement en fonction des informations reçues des clients.

10. Serveur selon l'une quelconque des revendications 4 à 9, configuré pour
fusionner deux des groupes de clients et/ou diviser l'un des groupes de clients en fonction des informations reçues des clients.

11. Serveur selon la revendication 10, dans lequel les informations comprennent d'autres mises à jour de paramétrage reçues des clients (14), en effectuant, pour chacun de l'un ou plusieurs groupes de clients prédéterminés, l'apprentissage fédéré séparément pour chaque groupe de clients.

12. Serveur selon l'une quelconque des revendications 4 à 11, configuré pour

recevoir, de la part d'un nouveau client participant, une mise à jour de paramétrage supplémentaire qui se rapporte au paramétrage prédéterminé du réseau neuronal,
associer le nouveau client participant à l'un de la pluralité de groupes de clients à l'aide de la mise à jour de paramétrage supplémentaire.

13. Serveur selon l'une quelconque des revendications précédentes, dans lequel le réseau neuronal est destiné à l'un des éléments suivants

inférer si une image et/ou une vidéo montre un contenu prédéterminé,
prédire un emplacement qu'un utilisateur est susceptible de regarder dans une vidéo ou une image,
obtenir une fonction de correction automatique et/ou de finition automatique pour une saisie textuelle écrite par l'utilisateur,
sur la base des données de capteurs inertiels d'un capteur supposé être porté par une personne, inférer

si la personne marche, coure, grimpe et/ou monte des escaliers,
si la personne tourne à droite et/ou à gauche, et/ou
dans quelle direction la personne va se déplacer,

classer les données d'entrée, telles qu'une image, une vidéo, un fichier audio et/ou un texte, dans un ensemble de classes,
la reconnaissance vocale sur la base des données vocales audio,
sur la base des données d'entrée médicales, fournir un diagnostic ou une probabilité pour un patient auquel appartiennent les données d'entrée médicales, d'appartenir à un certain groupe à risque,
sur la base de données biométriques, indiquant si les données biométriques appartiennent à une personne prédéterminée spécifique ou à un groupe à risque spécifique,
sur la base des données d'utilisation obtenues sur un appareil mobile d'un utilisateur, produire des données classant l'utilisateur ou des données représentant un profil de préférences personnelles.

14. Procédé implémenté matériellement pour l'apprentissage fédéré d'un réseau neuronal, exécuté sur un serveur, le procédé comprenant

la réception, d'une pluralité de clients (14), de mises à jour de paramétrage d'un paramétrage prédéterminé du réseau neuronal,
la détermination des similitudes entre les mises à jour de paramétrage (90) à l'aide d'une similarité cosinus et/ou d'un produit scalaire et/ou d'une norme l2 pour mesurer les similitudes entre les mises à jour de paramétrage, et
le regroupement des clients (14) en une pluralité de groupes de clients, puis effectuer l'apprentissage fédéré séparément pour chaque groupe de clients.

15. Programme informatique comportant un code de programme pour exécuter, lorsqu'il est exécuté sur un ordinateur, un procédé selon la revendication 14.

Fig. 1a

Fig. 1b

Fig. 1c

Fig. 2

Fig. 3

Fig. 4

Fig. 5 (Part 1)

Fig. 5 (Part 2)

KL-similarity
between client distributions

⑥

clients

clients

Cosine similarity
between weight-updates

clients

clients

KL-similarity clustered
by Cosine similarity

clients

clients

Fig. 5 (Part 3)

Fig. 6

Fig. 7

Fig. 8

Fig. 9

Fig. 10

Fig. 11a

Fig. 11b

EP 3 970 074 B1

Fig. 12

Fig. 13 (Part 1)

EP 3 970 074 B1

Fig. 13 (Part 2)

Fig. 14

**Algorithm 0**: CFL under cryptographic constraints

1  input: initial parameters $W_0 \leftarrow P_0$

2  outout: improved parameters $W_i \leftarrow \bar{P}_j$

3  init: clients exchange shared and private keys sk and pk via a secure channel $\leftarrow 150$

4  for $t = 1, \ldots, T$ **do**

5    for $i = 1, \ldots, M$ in parallel **do**

6     <u>Client $C_i$ does:</u>

7     • $[\Delta W] \leftarrow$ downloads $s \leftarrow C_i([\Delta W_c]) \leftarrow 170$ $(t = g)/32$ $(t > 1)$

8     • $\Delta W_c \leftarrow$ decrypt$([\Delta W_c], pk) \leftarrow 154$

9     • $W_i \leftarrow W_i + \Delta W_c \leftarrow 34$

10    • $\Delta W_i \leftarrow SGD_n(W_i, D_i) - W_i \leftarrow 36$

11    • $[\Delta W_i] \leftarrow$ encrypt$(\Delta W_i, sk) \leftarrow 152$

12    • upload$_{C_i \rightarrow S}([\Delta W_i]) \leftarrow 90$ $(t = 1)/104(t > 1)$ $38$

13    **if** $t = 1$ **then**

14     • $sig_i \leftarrow g\xi\left(\dfrac{\Delta W_i}{\|\Delta W_i\|}\right) \leftarrow 134$

compute client signature
via a locality-sensitive
hash function (15)

$102$ (for $t > 1$) / procedure includiving 98 (for $t = 1$)

**Fig. 15** (Part 1)

- upload$_{C_i \leftarrow S}$ (sig$_i$) ◄—180

    end

end

Server S does:

- gather$_{C_i \rightarrow S}$ ([Δw$_i$], sig$_i$), i = 1, ..., M ◄—172

if t = 1 then

- C$_{k, l}$ ← (sig$_k$, sig$_l$), ∀k, l = 1, ..., M ◄—92

- C ← SpectralClustering(C) ◄—98

compute similarity based on client signatures and cluster accordingly

end

for c ∈ C do

- ([ΔW$_c$]) ← ($\frac{1}{|c|}\Sigma_{i \in c}$[ΔW$_i$]) ◄—174 (t = 1)/36 (t > 1)

end

- broadcast$_{S \rightarrow C_i}$ ([ΔW$_{C(i)}$]), i = 1, ..., M ◄—32

end

return W

**Fig. 15** (Part 2)

Fig. 16a

Fig. 16b

Fig. 16c

Fig. 16d

**Algorithm 1**: Optimal Bipartition

input: Similarity Matrix $\alpha \in [-1, 1]^{m, m}$

outout: optimal bi-

partitioning $c_1, c_2 \leftarrow \arg\min_{c_1 \cup c_2 = c}(\max_{i \in c_1, j \in c_2} \alpha_{i,j})$

- $s \leftarrow \text{argsort}(\alpha[:])$
- $C \leftarrow \{\{i\} \mid i = 1, \ldots, m\}$

for $i = 1, \ldots, m^2$ do
  - $i_1 \leftarrow s_i \text{ div } m; \; i_2 \leftarrow s_i \text{ mod } m$
  - $c_{tmp} \leftarrow \{i\}$

  for $c \in C$ do
    if $i_1 \in c$ or $i_2 \in c$ then
      - $c_{tmp} \leftarrow c_{tmp} \cup c$
      - $C \leftarrow C \backslash c$
    end
  end
  - $C \leftarrow C \cup \{c_{tmp}\}$
  if $|C| = 2$ then
    return $C$
  end
end

## Fig. 17a

**Algorithm 2: Federated Learning (FL)**

1  input: initial parameters $\theta$, set of clients $c$
2  repeat
3   for $i \in c$ in parallel do
4    • $\theta_i \leftarrow \theta$
5    • $\Delta\theta_i \leftarrow SGD_n(\theta_i, D_i) - \theta_i$
6   end
7   • $\theta \leftarrow \theta + \Sigma_{i \in c} \dfrac{|D_i|}{|D_c|} \Delta\theta_i$

8  until $\left\| \Sigma_{i \in c} \dfrac{|D_i|}{|D_c|} \Delta\theta_i \right\| < \varepsilon_1$

9  return $\theta$

## Fig. 17b

**Algorithm 3: Clustered Federated Learning (CFL)**

1  input: initial parameters $\theta$, set of clients $c$
2   • $\theta^* \leftarrow$ FederatedLearning $(\theta, c)$
3   • $\alpha_{i,j} \leftarrow \dfrac{(\nabla r_i(\theta^*), \nabla r_j(\theta^*))}{\|\nabla r_i(\theta^*)\| \; \|\nabla r_j(\theta^*)\|}$ , $i, j \in c$

4   • $c_1, c_2 \leftarrow \arg\min_{c_1 \cup c_2 = c}(\max_{i \in c_1, j \in c_2} \alpha_{i,j})$

5  if $\max_{i \in c_1} \|\nabla r_i(\theta^*)\| \geq \varepsilon_2$ and $\gamma_{max} < \sqrt{\dfrac{1 - \alpha_{cross}^{max}}{2}}$ then
6   • $\theta_i^*$, $i \in c_1 \leftarrow$ ClusteredFederatedLearning $(\theta^*, c_1)$
7   • $\theta_i^*$, $i \in c_2 \leftarrow$ ClusteredFederatedLearning $(\theta^*, c_2)$
8  else
9   • $\theta_i^* \leftarrow \theta^*$, $i \in c$
10 else
11 return $\theta_i^*$ , $i \in c$

## Fig. 17c

Fig. 18a

Fig. 18b

incongruent

congruent

$\theta^*$

$\theta^*$

grad. client 1

grad. client 2

FL path

Fig. 19a

Fig. 19b

EP 3 970 074 B1

Fig. 20

Fig. 21

EP 3 970 074 B1

| Algorithm 4: Clustered Federated Learning with Privacy Preservation and Weight-Updates |
|---|

input: initial parameters $\theta_0$, branching parameters $\varepsilon_1$, $\varepsilon_2 > 0$, empirical risk approximation error bound $\gamma_{max} \in [0, 1)$, number of local iterations/epochs n

outout: improved parameters on every client $\theta_i$

init: set initial clusters $C = \{\{1, \dots m\}\}$, set initial models $\theta_i \leftarrow \theta_0$

$\forall i = 1, \dots m$, set initial update $\Delta\theta_c \leftarrow 0$ $\forall c \in C$, clients exchange random seed to create transformation operator P (optional, otherwise set P to be the identity mapping)

while not converged do

  for $i = 1, \dots, m$ in parallel do

    <u>Client i does:</u>

    • $\theta_i \leftarrow \theta_i + P^{-1}\Delta\theta_{c(i)}$

    • $\Delta\theta_i \leftarrow P(SGD_n(\theta_i, D_i) - \theta_i)$

  end

  <u>Server does:</u>

  • $C_{tmp} \leftarrow C$

  for $c \in C$ do

    • $\theta_c \leftarrow \frac{1}{|c|}\Sigma_{i \in c} \Delta\theta_i$

    if $||\Delta\theta_c|| < \varepsilon_1$ and $\max_{i \in c} ||\Delta\theta_i|| > \varepsilon_2$ then

      • $\alpha_{i,j} \leftarrow \dfrac{(\Delta\theta_i, \Delta\theta_j)}{||\Delta\theta_i|| \, ||\Delta\theta_j||}$

      • $c_1, c_2 \leftarrow \arg\min_{c_1 \cup c_2 = c}(\max_{i \in c_1, j \in c_2} \alpha_{i,j})$

      • $\alpha_{cross}^{max} \leftarrow \max_{i \in c_1, j \in c_2} \alpha_{i,j}$

      if $\gamma_{max} < \sqrt{\dfrac{1 - \alpha_{cross}^{max}}{2}}$ then

        • $C_{tmp} \leftarrow (C_{tmp} \backslash c) \cup c_1, \cup c_2$

      end

    end

  end

  • $C \leftarrow C_{tmp}$

end

return $\theta$

Fig. 22

Fig. 23

EP 3 970 074 B1

Fig. 24

Fig. 25

Fig. 26

EP 3 970 074 B1

Fig. 27

Fig. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MARTIN ABADI ; ANDY CHU ; LAN GOODFEL-LOW ; H BRENDAN MCMAHAN ; ILYA MIRONOV ; KUNAL TALWAR ; LI ZHANG**. Deep learning with differential privacy. *2016 ACM SIGSAC Conference on Computer and Communications Security*, 2016, 308-318
- **EUGENE BAGDASARYAN ; ANDREAS VEIT ; YIQING HUA ; DEBORAH ESTRIN ; VITALY SHMATIKOV**. How to backdoor federated learning. *arXiv preprint arXiv:1807.00459*, 2018
- **KEITH BONAWITZ ; VLADIMIR IVANOV ; BEN KREUTER ; ANTONIO MARCEDONE ; H BREN-DAN MCMAHAN ; SARVAR PATEL ; DANIEL RAMAGE ; AARON SEGAL ; KARN SETH**. Practical secure aggregation for privacy preserving machine learning. *IACR Cryptology ePrint Archive*, 2017, vol. 2017, 281
- **SEBASTIAN BOSSE ; DOMINIQUE MANIRY ; KLAUS-ROBERT MÜLLER ; THOMAS WIEGAND ; WOJCIECH SAMEK**. Deep neural networks for no-reference and full-reference image quality assessment. *IEEE Transactions on Image Processing*, 2018, vol. 27 (1), 206-219
- **STEPHEN HARDY ; WILKO HENECKA ; HAMISH IVEY-LAW ; RICHARD NOCK ; GIORGIO PATRINI ; GUILLAUME SMITH ; BRIAN THORNE**. Private federated learning on vertically partitioned data via entity resolution and additively homomorphic encryption. *arXiv preprint arXiv:1711.10677*, 2017
- **ANDREJ KARPATHY ; LI FEI-FEI**. Deep visual-semantic alignments for generating image descriptions. *Proceedings of the IEEE conference on computer vision and pattern recognition,,* 2015, 3128-3137
- **ANDREJ KARPATHY ; GEORGE TODERICI ; SANKETH SHETTY ; THOMAS LEUNG ; RAHUL SUKTHANKAR ; LI FEI-FEI**. Large-scale video classification with convolutional neural networks. *Proceedings of the IEEE conference on Computer Vision and Pattern Recognition*, 2014, 1725-1732
- **ALEX KRIZHEVSKY ; VINOD NAIR ; GEOFFREY HINTON**. *The cifar-10 dataset. online: http://www. cs. toronto. edu/kriz/cifar. html*, 2014
- **YANN LECUN ; YOSHUA BENGIO ; GEOFFREY HINTON**. Deep learning. *Nature*, 2015, vol. 521 (7553), 436-444
- **H BRENDAN MCMAHAN ; EIDER MOORE ; DA-NIEL RAMAGE ; SETH HAMPSON et al.** Communication-efficient learning of deep networks from decentralized data. *arXiv preprint arXiv:1602.05629*, 2016
- **WOJCIECH SAMEK ; THOMAS WIEGAND ; KLAUS-ROBERT MÜLLER**. Explainable artificial intelligence: Understanding, visualizing and interpreting deep learning models. *ITU Journal: ICT Discoveries - Special Issue 1 - The Impact of Artificial Intelligence (AI) on Communication Networks and Services*, 2018, vol. 1 (1), 39-48
- **ILYA SUTSKEVER ; ORIOL VINYALS ; QUOC V LE**. Sequence to sequence learning with neural networks. *In Advances in neural information processing systems*, 2014, 3104-3112
- **ROBIN TAYLOR ; DAVID BARON ; DANIEL SCHMIDT**. The world in 2025-predictions for the next ten years. *10th International Microsystems, Packaging, Assembly and Circuits Technology Conference (IMPACT)*, 2015, 192-195
- **SIMON WIEDEMANN ; ARTURO MARBAN ; KLAUS-ROBERT MÜLLER ; WOJCIECH SAMEK**. Entropy-constrained training of deep neural networks. *arXiv preprint arXiv:1812.07520*, 2018
- **SIMON WIEDEMANN ; KLAUS-ROBERT MÜLLER ; WOJCIECH SAMEK**. Compact and computationally efficient representation of deep neural networks. *arXiv preprint arXiv:1805.10692*, 2018
- **HUBERT EICHNER ; TOMER KOREN ; H. BREN-DAN MCMAHAN ; NATHAN SREBRO ; KUNAL TALWAR**. Semi-Cyclic Stochastic Gradient Descent. *arXiv preprint arXiv:1904.10120*, 2019
- **CLEMENT FUNG ; CHRIS J.M. YOON ; IVAN BESCHASTNIKH**. Mitigating Sybils in Federated Learning Poisoning. *arXiv preprint arXiv:1808.04866v3*, 2019
- **KEITH BONAWITZ ; HUBERT EICHNER ; WOLF-GANG GRIESKAMP ; DZMITRY HUBA ; ALEX INGERMAN ; VLADIMIR IVANOV ; CHLOE KID-DON ; JAKUB KONECNY ; STEFANO MAZZOC-CHI ; H BRENDAN MCMAHAN et al.** Towards federated learning at scale: System design. *arXiv preprint arXiv:1902.01046*, 2019

- **NICHOLAS CARLINI** ; **CHANG LIU** ; **JERNEJ KOS** ; **ÚLFAR ERLINGSSON** ; **DAWN SONG**. The secret sharer: Measuring unintended neural network memorization & extracting secrets. *arXiv preprint arXiv:1802.08232*, 2018
- Model inversion attacks that exploit confidence information and basic countermeasures. **MATT FREDRIKSON** ; **SOMESH JHA** ; **THOMAS RISTENPART**. Proceedings of the 22nd ACM SIGSAC Conference on Computer and Communications Security. ACM, 2015, 1322-1333
- **AVISHEK GHOSH** ; **JUSTIN HONG** ; **DONG YIN** ; **KANNAN RAMCHANDRAN**. Robust federated learning in a heterogeneous environment. *arXiv preprint arXiv:1906.06629*, 2019
- Deep models under the gan: information leakage from collaborative deep learning. **BRILAND HITAJ** ; **GIUSEPPE ATENIESE** ; **FERNANDO PEREZ-CRUZ**. Proceedings of the 2017 ACM SIGSAC Conference on Computer and Communications Security. ACM, 2017, 603-618
- **FELIX SATTLER** ; **SIMON WIEDEMANN** ; **KLAUS-ROBERT MÜLLER** ; **WOJCIECH SAMEK**. Sparse binary compression: Towards distributed deep learning with minimal communication. *arXiv preprint arXiv:1805.08768*, 2018
- **FELIX SATTLER** ; **SIMON WIEDEMANN** ; **KLAUS-ROBERT MÜLLER** ; **WOJCIECH SAMEK**. Robust and communication-efficient federated learning from non-iid data. *arXiv preprint arXiv:1903.02891*, 2019
- **VIRGINIA SMITH** ; **CHAO-KAI CHIANG** ; **MAZIAR SANJABI** ; **AMEET S TALWALKAR**. Federated multi-task learning. *Advances in Neural Information Processing Systems*, 2017, 4424-4434
- **YUE ZHAO** ; **MENG LI** ; **LIANGZHEN LAI** ; **NAVEEN SUDA** ; **DAMON CIVIN** ; **VIKAS CHANDRA**. Federated learning with non-iid data. *arXiv preprint arXiv:1806.00582*, 2018